# EUROPÄISCHE PATENTSCHRIFT

(11) **EP 1 792 135 B1**
(45) Veröffentlichungstag und Bekanntmachung des Hinweises auf die Patenterteilung: **29.05.2013**
(21) Anmeldenummer: 05776783.2
(22) Anmeldetag: 01.09.2005
(51) Int. Cl.: F28D 7/00, F28F 9/02, F28D 20/00, F28D 1/04, F28D 1/053

(54) **WÄRMETAUSCHER FÜR KRAFTFAHRZEUGE**
HEAT EXCHANGER FOR MOTOR VEHICLES
ECHANGEUR THERMIQUE POUR VEHICULES A MOTEUR

(30) Priorität: 14.09.2004 DE 102004044861
(43) Veröffentlichungstag der Anmeldung: 06.06.2007
(73) Patentinhaber: Behr GmbH & Co. KG, 70469 Stuttgart (DE)
(72) Erfinder: KOHL, Michael, 74321 Bietigheim (DE); STAFFA, Karl-Heinz, 70567 Stuttgart (DE); WALTER, Christoph, 70469 Stuttgart (DE)
(74) Vertreter: Grauel, Andreas
(86) Internationale Anmeldenummer: PCT/EP2005/009419
(87) Internationale Veröffentlichungsnummer: WO 2006/029720

(56) Entgegenhaltungen:
- EP-A- 1 108 968
- EP-A- 1 221 389
- WO-A-01/23823
- DE-A1- 4 327 213
- DE-A1- 10 260 030
- PATENT ABSTRACTS OF JAPAN Bd. 016, Nr. 153 (M-1235), 15. April 1992 (1992-04-15) -& JP 04 006397 A (SANDEN CORP), 10. Januar 1992 (1992-01-10)
- PATENT ABSTRACTS OF JAPAN Bd. 017, Nr. 660 (M-1522), 7. Dezember 1993 (1993-12-07) & JP 05 215474 A (SHOWA ALUM CORP), 24. August 1993 (1993-08-24)
- PATENT ABSTRACTS OF JAPAN Bd. 011, Nr. 034 (M-558), 31. Januar 1987 (1987-01-31) -& JP 61 202084 A (SHOWA ALUM CORP), 6. September 1986 (1986-09-06)

## Beschreibung

Die Erfindung betrifft einen Wärmetauscher für Kraftfahrzeuge.

Bekannte Wärmetauscher für Kraftfahrzeuge weisen in aller Regel eine parallele Reihe von Flachrohren auf, wobei die eine Seite der Flachrohre einer ersten Sammelkammer bzw. Sammelkammereinrichtung zugeordnet ist, und wobei die andere Seite dieser Flachrohre einer anderen Sammelkammer bzw. Sammelkammereinrichtung zugeordnet ist. Die Flachrohre weisen an ihren beiden Stirnseiten jeweils eine Öffnung auf, wobei diese jeweiligen endseitigen Öffnungen über einen Durchgangskanal verbunden sind. Die Flachrohre sind mit ihren Enden in die Sammelkammereinrichtung eingesteckt, und ragen dabei geringfügig in die jeweilige Kammer hinein. Bei diesen bekannten Gestaltungen sind die Flachrohre, die alle die gleiche Länge aufweisen, parallel zueinander angeordnet, wobei die in die jeweiligen Sammelkammern bzw. Sammelkammereinrichtungen mündenden Enden verschiedener Flachrohre jeweils bündig abschließen bzw. gleich lang sind.

Ein vergleichbarer Wärmetauscher ist aus der EP-1 108 968 A1 bekannt.

Der Erfindung liegt die Aufgabe zugrunde, einen kostengünstig herstellbaren und baulich einfach gestalteten Wärmetauscher für Kraftfahrzeuge zu schaffen, der betriebssicher ist.

Erfindungsgemäß wird ein Wärmetauscher gemäß Anspruch 1 vorgeschlagen. Bevorzugte Gestaltungen sind Gegenstand der Unteransprüche.

Es ist insbesondere vorgesehen, dass eine erste Öffnung wenigstens eines bzw. wenigstens eines ersten der Verbindungsrohre in Längsrichtung dieser Verbindungsrohre gesehen, beabstandet ist, zu einer ersten Öffnung wenigstens eines anderen bzw. wenigstens eines zweiten dieser Verbindungsrohre. Wenn in dieser Offenbarung davon gesprochen wird, dass die ersten Öffnungen bzw. die zweiten Öffnungen von Verbindungsrohren bzw. Kanälen beabstandet ist, ist dies insbesondere so zu verstehen, dass an verschiedenen Verbindungsrohren bzw. Kanälen jeweils die betreffende Öffnung vorgesehen ist und der Abstand zwischen diesen, verschiedenen Verbindungsrohren zugeordneten Öffnungen in Längsrichtung der Verbindungsrohre gesehen gegeben ist.

Es kann zusätzlich auch vorgesehen sein, dass an demselben Verbindungsrohr und / oder Kanal mehrere erste bzw. zweite Öffnungen gegeben sind, welche ersten Öffnungen in Längsrichtung der Kanäle bzw. Verbindungsrohre beabstandet sind und / oder welche zweiten Öffnungen in dieser Längsrichtung beabstandet sind.

Es kann insbesondere vorgesehen sein, dass sich die verschiedenen Verbindungsrohre, deren ersten bzw. zweiten Öffnungen beabstandet sind, unterschiedlich weit die erste bzw. zweite (Sammel)kammereinrichtung münden bzw. sich erstrecken. Bevorzugt erstreckt sich der der zweiten (Sammel)kammereinrichtung zugewandte Abschluss der ersten (Sammel)kammereinrichtung im Wesentlichen senkrecht zur Längsachse der Verbindungsrohre und der der ersten (Sammel)kammereinrichtung zugewandte Abschluss der zweiten Kammereinrichtung im Wesentlichen senkrecht zur ersten Kammereinrichtung.

Bevorzugt ist auch, dass an einem jeweiligen bzw. dem gleichen Verbindungsrohr und / oder Kanal mehrere erste bzw. zweite Öffnungen gegeben sind, welche ersten Öffnungen nicht in dieser Längsrichtung beabstandet sind bzw. welche zweiten Öffnungen nicht in dieser Längsrichtung beabstandet sind.

Bevorzugt sind die bzw. sämtliche Verbindungsrohre, die die erste und die zweite Kammereinrichtung, insbesondere strömungstechnisch, verbinden, gerade gestaltet. Eine strömungstechnische Verbindung ist beispielsweise eine Verbindung, die ermöglicht, dass Fluid zwischen den strömungstechnisch verbunden Bereichen strömen kann oder strömen könnte bzw. keine Trenneinrichtungen gegeben sind.

Vorzugsweise ist vorgesehen, dass die erste Kammereinrichtung und/oder die zweite Kammereinrichtung mehrere Kammern aufweist, bzw. in mehrere Kammern unterteilt sind. Bevorzugt sind die erste und die zweite Kammereinrichtung jeweils eine Sammelkammereinrichtung und deren Kammern jeweils eine Sammelkammer.

Besonders bevorzugt sind mehrere der gleichen Kammereinrichtung zugeordnete Kammern durch oder unter anderem durch eine Trennwand bzw. Zwischenwand voneinander getrennt sind, die sich quer zur Längsachse der Verbindungsrohre bzw. der Kanäle dieser Verbindungsrohre erstreckt.

Die Längsrichtung dieser Kanäle der Verbindungsrohre wird auch als Längsrichtung der Verbindungsrohre bezeichnet, da diese beiden Längsrichtungen vorzugsweise einander entsprechen. Dies kann, muss allerdings nicht bedeuten, dass die Verbindungsrohre in Richtung dieser Längsrichtung die größte Erstreckung haben.

Die angesprochene Trenn- bzw. Zwischenwand kann beispielsweise senkrecht zur Längsachse der Verbindungsrohre ausgerichtet sein. Eine solche Verbindungs- bzw. Zwischenwand kann eben gestaltet sein, aber auch einen anderen Verlauf, wie beispielsweise einen gewellten oder gekrümmten Verlauf aufweisen. Es kann auch vorgesehen sein, dass solche Zwischenwände einen Verlauf aufweisen, der nicht einer geometrischen Grundform entspricht. Zwischenwände können beispielsweise auch Wände sein, die in einem Umformverfahren gefertigt werden können bzw. gefertigt werden.

Besonders bevorzugt sind verschiedene, von einander beabstandet Öffnungen, die verschiedenen Verbindungsrohren zugeordnet sind, in verschiedenen Kammern derselben Kammereinrichtung positioniert. Dies bezieht sich auf die erste Öffnungen der Verbindungsrohre sowie die erste Kammereinrichtung und / oder auf die zweiten Öffnungen der Verbindungsrohren sowie die zweite Kammereinrichtung. Es kann insbesondere vorgesehen sein, dass sich Verbindungsrohre durch eine quer zur Längsachse dieser Verbindungsrohe verlaufende Zwischenwand erstrecken, die in der ersten und / oder zweiten Sammelkammer vorgesehen ist.

Es kann auch vorgesehen sein, dass, insbesondere zusätzlich, Trenn- bzw. Zwischenwände in zumindest einer der Kammereinrichtungen vorgesehen sind, die im Wesentlichenin Richtung der bzw. parallel zu den Längsachsen der Verbindungsrohre bzw. Kanäle ausgerichtet sind oder eine gewisse Neigung gegenüber einer solchen aufweisen. Solche Trennwände können insbesondere zu dem Zweck vorgesehen sein, um Kammern zu erzeugen, die senkrecht zur Achse der Verbindungsrohre benachbart bzw. beabstandet sind. Die Zwischenwände, die auch aus Trennwände bezeichnet werden, können eben oder nicht-eben, beispielsweise gekrümmt, sein.

In entsprechender Weise können die zuvor angesprochenen Zwischen- bzw. Trennwände vorgesehen sein, um Kammern zu erzeugen, die in Strömungsrichtung bzw. Längsrichtung der Verbindungsrohre benachbart oder beabstandet sind.

Durch entsprechende Kombinationen solcher Trennwände, die quer, insbesondere senkrecht, bzw. im Wesentlichen in Richtung der parallel zur Rohrlängsachse Kammern voneinander trennen, können die unterschiedlichsten Kammersysteme erzeugt werden, also Systeme, bei denen Kammern einer ersten und einer zweiten Kammereinrichtung in unterschiedlichster Weise angeordnet sein können und bei denen die Anzahl der Kammer durch entsprechende Positionierung solcher Zwischenwände entsprechend gewählt wird. Durch die Beabstandung von ersten und / oder zweiten Öffnungen verschiedener Verbindungsrohre bzw. durch unterschiedliche Längenniveaus in einer oder den Sammelkammereinrichtungen können mit einfachem baulichen Aufwand komplexe Strömungsführungen realisiert werden, und zwar insbesondere auch in Kombination mit Kammersystemen bzw. Kammereinrichtungen der vorgenannten oder an anderer Stelle dieser Offenbarung genannten Art. Es sei in diesem Zusammenhang allerdings angemerkt, dass sich die Erfindung nicht nur auf Gestaltungen erstreckt bei denen komplexe Strömungsführungen gegeben sind oder Kammersysteme mit einer hohen Anzahl von Kammern in der bzw. den Kammereinrichtungen.

In bevorzugter Gestaltung weist die erste Kammereinrichtung wenigstens eine Kammer auf, und die zweite Kammereinrichtung wenigstens eine Kammer, wobei besonders bevorzugt vorgesehen ist, dass zumindest eine dieser Kammereinrichtungen mehrere Kammern aufweist. Weiter ist bei dieser bevorzugten Gestaltung vorgesehen, dass in einer senkrecht zur Längsachse der Kanäle bzw. Verbindungsrohre sich erstreckenden Richtung mehrere im Wesentlichen parallel ausgerichtete Kanäle der Verbindungsrohre in Reihe angeordnet sind. Diese Kanäle sind jeweils parallel angeordnet, und zwar insbesondere so, dass sie in Gesamtheit betrachtet eine Ebene aufspannen, bzw. im Wesentlichen eine Ebene definieren. Es können auch mehrere solcher Reihen vorgesehen sein. Vorzugsweise ist dabei vorgesehen, dass in zumindest einer solcher Reihen aufeinander folgende Kanäle dieser Reihe gegeben sind, die im Betrieb des Wärmetauschers in jeweils entgegengesetzten Strömungsrichtungen und / oder von unterschiedlichen Medien durchströmt werden. Dies kann beispielsweise so sein, dass die jeweils benachbarten Kanäle dieser Reihe in jeweils entgegengesetzten Strömungsrichtungen durchströmt werden. Insbesondere kann vorgesehen sein, dass sämtliche der jeweils aufeinander folgenden Kanäle einer solchen Reihe im Betrieb des Wärmetauschers jeweils in entgegengesetzten Strömungsrichtungen und / oder von unterschiedlichen Medien durchströmt werden. Das kann insbesondere für die Gesamtheit der in dieser Reihe gegebenen Strömungskanäle gegeben sein. Es kann aber auch vorgesehen sein, dass in einer Reihe auch benachbarte Kanäle gegeben sind, die im Betrieb des Wärmetauschers in der gleichen Strömungsrichtung und / oder von dem gleichen bzw. demselben Medien durchströmt werden. Beispielsweise kann vorgesehen sein, dass paarweise zwei benachbarte Kanäle im Betrieb des Wärmetauschers in der gleichen Strömungsrichtung und / oder von dem gleichen bzw. demselben Medien durchströmt werden, und die zwei sich anschließenden in der entgegengesetzten Strömungsrichtung, usw.. In dieser bevorzugten Gestaltung ist insbesondere vorgesehen, dass die Anzahl der im Betrieb des Wärmetauschers in dieser Reihe gegebenen Wechsel der Strömungsrichtung und / oder Wechsel der Medien aufeinander folgenden Kanäle größer oder gleich der Anzahl der Kammern ist, die in der ersten Kammereinrichtung gegeben sind, und größer oder gleich der Anzahl der Kammern ist, die in der zweiten Kammereinrichtung gegeben sind. Besonders bevorzugt sind, die Kanäle einer solchen Reihe jeweils verschiedenen Verbindungsrohren zugeordnet.

Ein spezielles Beispiel einer dieser bevorzugten Gestaltungsformen kann so sein, dass eine Reihe aus zwanzig in Reihe benachbarten Kanälen bzw. Verbindungsrohren gebildet wird, wobei die jeweils aufeinander folgenden Kanäle dieser Reihe im Betrieb des Wärmetauschers in unterschiedlichen bzw. entgegengesetzten Strömungsrichtungen durchströmt werden. Dies bedeutet in diesem speziellen Beispiel, dass neunzehn Wechsel der Strömungsrichtung jeweils aufeinander folgender Kanäle gegeben sind. Bei diesem speziellen Beispiel ist bei dieser bevorzugten Gestaltung vorgesehen, dass die Anzahl der Kammern die in der ersten Kammereinrichtung gebildet werden, kleiner oder gleich als neunzehn ist, und die Anzahl der Kammern, die in der zweiten Kammereinrichtung gebildet werden, ebenfalls kleiner oder gleich neunzehn ist.

Ein weiteres spezielleres Beispiel dieser bevorzugten Gestaltungsform kann beispielsweise so sein, dass im Betrieb zunächst drei Verbindungsrohre einer solchen Reihe in einer Strömungsrichtung in Betrieb durchströmt werden, die folgenden zwei in der entgegengesetzten Strömungsrichtung, die folgenden drei wiederum in der ersten Strömungsrichtung, und die letzten zwei wiederum in der zweiten Strömungsrichtung. Bei diesem Beispiel ist zwischen dem dritten Rohr, und dem darauf folgenden, also dem vierten Rohr, ein Strömungsrichtungswechsel gegeben, ein weiterer zwischen dem fünften Rohr und dem darauf folgenden, also dem sechsten Rohr, und ein weiterer Strömungsrichtungswechsel zwischen dem achten Rohr und dem darauf folgenden, also dem neunten Rohr. Dies bedeutet, dass, wenn in diesem speziellen Beispiel dreimal die Strömungsrichtung in der entsprechenden Reihe der Kanäle gewechselt wurde. Bei diesem speziellen Beispiel wäre gemäß einer bevorzugten Gestaltung die Anzahl der Kammern der ersten Kammereinrichtung sowie die Anzahl der Kammern der zweiten Kammereinrichtung kleiner oder gleich drei.

Es sei allerdings in diesem Zusammenhang angemerkt, dass in diesen speziellen Beispielen die Anzahl der Kanäle sowie der in gleicher bzw. entgegengesetzter Strömungsrichtung durchströmten Kanälen sehr speziell gewählt ist, was die Erfindung nicht beschränken soll. Erfindungsgemäß können nach dieser bevorzugten Gestaltung vielmehr beliebige Kombinationen vorgesehen sein.

Ferner sei angemerkt, dass in einer bevorzugten Gestaltung zumindest eine Richtung, wie Breitenrichtung oder Tiefenrichtung, die senkrecht zur Längsachse der Rohre gelegen ist, existiert, für welche die angesprochene Relation gilt. Bevorzugt ist auch, dass diese Relation für alle in dieser Richtung gelegenen Reihen gilt.

Wie angesprochen, kann die betreffende Richtung, beispielsweise eine Breitenrichtung oder eine Tiefenrichtung des Wärmetauschers sein. Ebenfalls wurde angesprochen, dass sowohl die Breitenrichtung als auch die Tiefenrichtung senkrecht zur Längsachse der Verbindungsrohre gegeben ist. Die Breitenrichtung ist ferner senkrecht zur Tiefenrichtung gelegen.

Besonders bevorzugt ist ferner, dass die Anzahl der Wechsel der Strömungsrichtungen in einer Reihe von Kanälen bzw. Verbindungsrohren gleich der Anzahl der Kammern in der ersten und/oder der zweiten Kammereinrichtung ist.

Besonders bevorzugt ist vorgesehen, dass die Anzahl der Kammern der ersten Kammereinrichtung sowie die Anzahl der Kammern der zweiten Kammereinrichtung jeweils kleiner als die Anzahl der Wechsel der Strömungsrichtung und / oder des Mediums in einer Reihe von Kanälen bzw. Verbindungsrohren ist.

Verschiedene, in einer (jeweiligen) Kammereinrichtung gebildete Kammern sind insbesondere so voneinander getrennt bzw. strömungstechnisch voneinander getrennt, dass innerhalb dieser betreffenden Kammereinrichtung ein Fluidaustausch bzw. -strom zwischen diesen Kammern der gleichen Kammereinrichtung verhindert wird. Es kann dabei gegebenenfalls vorgesehen sein, dass über die Anordnung der Verbindungsrohre bzw. einen Teil dieser Verbindungsrohre und die jeweils andere Kammereinrichtung ein Fluidaustausch bzw. -strom zwischen solchen unterschiedlichen Kammern ermöglicht wird. Es kann aber auch vorgesehen sein, dass verschiedene Kammern der gleichen Kammereinrichtung Bestandteil verschiedener Fluidkreisläufe sind, wobei ein Fluidaustausch dieser unterschiedlichen Strömungskreisläufe verhindert wird.

In bevorzugter Gestaltung sind Verbindungsrohre gegeben, bei denen die zweite Öffnung, die der zweiten Kammereinrichtung zugeordnet bzw. zugewandt ist, eine unterschiedliche Lage in Richtung der Längsachse der Verbindungsrohre aufweisen. Mit anderen Worten sind diese zweiten Öffnungen, die verschiedenen Verbindungsrohren zugeordnet sind, in Längsrichtung der Verbindungsrohre voneinander beabstandet.

Es kann insbesondere auch vorgesehen sein, dass mehrere Verbindungsrohre gegeben sind, wobei die erste Öffnung eines solchen Verbindungsrohres zu einer ersten Öffnung eines anderes Verbindungsrohres beabstandet ist, und die zweite Öffnung dieses einen Verbindungsrohres zur zweiten Öffnung dieses anderen Verbindungsrohres beabstandet ist. Es kann allerdings auch vorgesehen sein, dass nur die zweite Öffnung oder nur die erste Öffnung solcher Verbindungsrohre beabstandet sind, wobei die anderen Öffnungen im Wesentlichen die gleiche Position in Richtung der Längsachse dieser Verbindungsrohre gesehen aufweisen.

Insbesondere, wenn die eine Öffnung, wie erste Öffnung oder zweite Öffnung, verschiedener Verbindungsrohre nicht in Längsrichtung dieser Verbindungsrohre beabstandet ist, kann es vorgesehen sein, dass solche Verbindungsrohre in die gleiche Kammer einer Kammereinrichtung münden. Es kann allerdings auch vorgesehen sein, dass eine Zwischenwand so angeordnet ist, dass solche in Längsrichtung der Verbindungsrohre nicht beabstandete Öffnungen, wie jeweils erste Öffnung oder jeweils zweite Öffnung, in verschiedene Kammern münden bzw. zu verschiedenen Kammern offen sind.

Bei in Längsrichtung der Verbindungsrohre beabstandeten Öffnungen, wie jeweils erste bzw. jeweils zweite Öffnung, die verschiedenen Verbindungsrohren zugeordnet sind, ist vorzugsweise vorgesehen, dass diese Öffnungen in verschiedene Kammern der gleichen Kammereinrichtung angeordnet sind, bzw. zu verschiedenen Kammern der gleichen Kammereinrichtung offen sind, und eine strömungstechnische Verbindung zwischen dem Inneren dieser betreffenden Kammer und Kanalinneren des betreffenden Verbindungsrohres herstellen.

In einer bevorzugten Gestaltung ist vorgesehen, dass senkrecht zur Längsachse der Verbindungsrohre bzw. der Kanäle solcher Verbindungsrohre, eine Breitenrichtung gegeben ist, und senkrecht zu dieser Breitenrichtung sowie senkrecht zu dieser Längsachse eine Tiefenrichtung gegeben ist, wobei in Breitenrichtung und in Tiefenrichtung gesehen jeweils wenigstens zwei Verbindungsrohre gegeben sind, deren jeweiligen ersten und/oder jeweiligen zweiten Öffnungen in Längsrichtung dieser Verbindungsrohre gesehen, voneinander beabstandet sind.

Es kann vorgesehen sein, dass verschiedene Verbindungsrohre, bei denen die jeweilige erste Öffnung und die jeweilige zweite Öffnung voneinander beabstandet ist, die gleiche Länge aufweisen, so dass diese Verbindungsrohre relativ zueinander in Richtung ihrer Längsachse versetzt zueinander angeordnet sind.

Es kann allerdings auch vorgesehen sein, dass verschiedene Verbindungsrohre, deren jeweiligen ersten und/oder jeweiligen zweiten Öffnungen in Richtung der Längsachse dieser Verbindungsrohre beabstandet sind, eine unterschiedliche Länge aufweisen. Beispielsweise können zwei oder drei oder vier oder fünf oder mehr Verbindungsrohre gegeben sein, die jeweils die erste und die zweite Kammereinrichtung verbinden und die- im jeweils paarweisen Vergleich - unterschiedliche Längen aufweisen.

Es kann vorgesehen sein, dass von jedem Typ eines Verbindungsrohres jeweils mehrere Verbindungsrohre vorgesehen sind, wobei diese Verbindungsrohre des gleichen Typs jeweils hinsichtlich ihrer Gestaltung sowie ihrer in Längsrichtung der Verbindungsrohre betrachteten Lage identisch gestaltet bzw. positioniert sind.

In einer bevorzugten Gestaltung ist vorgesehen, dass die erste Öffnung und/oder die zweite Öffnung an einer Stirnseite des Verbindungsrohres angeordnet ist.

Es kann beispielsweise so sein, dass in dem der im Verbindungsrohr gebildete Kanal ein zylindrischer Kanal oder ein Kanal mit anderem Querschnitt ist, und dieser Kanal, insbesondere bei gleichbleibendem Querschnitt, unmittelbar in die erste und/oder die zweite Öffnung übergeht. Vorzugsweise sind sämtliche Verbindungsrohre, die die erste Kammereinrichtung mit der zweiten Kammereinrichtung strömungstechnisch verbinden so gestaltet.

Es kann allerdings auch vorgesehen sein, dass eine erste und/oder zweite Öffnung nicht in Verlängerung bzw. als Abschluss eines solchen Kanals vorgesehen ist, sondern beispielsweise in der Mantelwand eines solchen Kanals. Insbesondere bei einer solchen Gestaltung kann vorgesehen sein, dass der Kanal in seiner Längsrichtung endseitig abgeschlossen ist.

Es kann auch vorgesehen sein, dass Rohre gleicher Länge vorgesehen sind, bei welchen über die Lage der ersten und/oder der zweiten Öffnung in der Mantelwand eines solchen Kanals bzw. des Verbindungsrohres ein Abstand der ersten und zweiten Öffnung erzeugt wird, der geringer ist als die Rohrlänge.

Es kann beispielsweise vorgesehen sein, dass auf diese Weise die Abstände der ersten bzw. der zweiten Öffnungen verschiedener Verbindungsrohre unterschiedlich gewählt sind, obwohl sämtliche dieser Verbindungsrohre die gleiche Länge aufweisen. Es kann auch vorgesehen sein, dass ein Teil solcher Verbindungsrohre stirnseitige Öffnungen aufweist, und ein anderer Teil stirnseitig verschlossen ist, und eine in der Mantelwand angeordnete erste und / oder zweite Öffnung aufweist. Auch Kombinationen dahingehend sind bevorzugt, dass ein Verbindungsrohr bzw. ein diesem Verbindungsrohr zugeordneter Kanal eine stirnseitige Öffnung sowie eine in der Mantelwand angeordnete Öffnung aufweist, wobei im Bereich der Öffnung, die in der Mantelwand angeordnet ist, das stirnseitige Ende des betreffenden Verbindungsrohres verschlossen ist. Bei diesen vorgenannten Öffnungen handelt es sich jeweils um eine erste und eine zweite bzw. eine zweite Öffnung.

Es kann auch vorgesehen sein, dass mehrere erste bzw. mehrere zweite Öffnungen dem gleichen Kanal zugeordnet sind. Beispielsweise kann vorgesehen sein, dass in der Mantelwand eines Kanals mehrere erste Öffnungen oder mehrere zweite Öffnungen vorgesehen sind. Besonders bevorzugt ist allerdings vorgesehen, dass jedem Kanal eine genau eine erste Öffnung und genau eine zweite Öffnung zugeordnet ist; dabei kann beispielsweise vorgesehen sein, dass einem oder mehreren oder allen Verbindungsrohren mehrere Kanäle zugeordnet sind, und jedem dieser Kanäle genau eine jeweils separate erste Öffnung sowie genau eine jeweils separate zweite Öffnung zugeordnet ist. Es kann auch vorgesehen sein, dass jedem Verbindungsrohr genau ein Kanal und genau eine erste Öffnung und genau eine zweite Öffnung zugeordnet ist.

Insbesondere bei einer Gestaltung, bei der die ersten Öffnungen und die zweiten Öffnungen der Verbindungsrohre jeweils stirnseitig am Verbindungsrohr angeordnet sind, kann auch davon gesprochen werden, dass verschiedene Verbindungsrohre zumindest auf einer Seite bzw. an einem Ende unterschiedliche Längenniveaus besitzen. Insbesondere kann auch vorgesehen sein, dass dadurch mindestens zwei separate Sammelkammern ausgebildet werden können, bzw, mindestens zwei separate Sammelkammern, die in Strömungsrichtung liegen bzw. in Längsrichtung der Verbindungsrohre bzw. Kanäle der Verbindungsrohre. Vorzugsweise ist dabei vorgesehen, dass mindestens zwei in Strömungsrichtung liegende Sammelkammern räumlich voneinander getrennt sind.

In einer bevorzugten Gestaltung ist vorgesehen, dass solche unterschiedlichen Längenniveaus der Rohre sowohl in der Breite, als auch der Tiefe gegeben sind, wobei sich die Tiefe und die Breite auf den Wärmetauscher beziehen und senkrecht zur Verbindungsrohrlängsachse gelegen ist. Bevorzugt ist auch, dass solche unterschiedlichen Längenniveaus nur in der Tiefe oder nur in der Breite des Wärmetauschers gegeben sind.

Es ist ferner bevorzugt, dass drei Verbindungsrohre oder mehr, wie vier oder fünf oder mehr als fünf Verbindungsrohre existieren, die jeweils so sind, dass im Verhältnis dieser untereinander in beliebiger Kombination die erste und/oder zweite Öffnung jeweils verschiedener Verbindungsrohre jeweils voneinander beabstandet sind. Es kann beispielsweise vorgesehen sein, dass mehrere solcher Verbindungsrohre, im paarweisen Vergleich so sind, dass zumindest eine der Öffnungen, also die erste oder die zweite Öffnung, im Vergleich zu der entsprechenden Öffnung des jeweils anderen Verbindungsrohres bzw. Kanals, in Längsrichtung der Verbindungsrohre gesehen, beabstandet sind. Es kann auch vorgesehen sein, dass dabei jeweils mehrere Verbindungsrohre gegeben sind, die an beiden Enden bzw. Seiten das gleiche Längenniveau aufweisen, bzw. bei denen die erste und die zweite Öffnung nicht beabstandet sind.

Bevorzugt ist ferner, dass ein erstes Verbindungsrohr sowie ein zweites Verbindungsrohr existiert, wobei das erste Verbindungsrohr mit dem ersten Ende so über das zweite Verbindungsrohr in Richtung der Längsachse hinausragt, dass die erste Öffnung dieses Verbindungsrohrs weiter außen gelegen ist. Es kann vorgesehen sein, dass dieses erste Verbindungsrohr auch eine zweite Öffnung aufweist, die weiter außen gelegen ist. Es kann allerdings auch vorgesehen sein, dass solche Rohre so angeordnet sind, dass an dem einen Ende das erste Rohr über das zweite hinausragt, in Längsrichtung der Verbindungsrohre gesehen, und an dem anderen Ende das zweite Rohr über das erste. "weiter außen gelegen" bedeutet in diesem Zusammenhang, dass der in Längsrichtung der Verbindungsrohre gesehene Abstand zur am anderen Verbindungsrohrende gelegenen Kammereinrichtung größer ist.

Ein Verbindungsrohr oder alle Verbindungsrohre können beispielsweise als Flachrohr oder als Ovalrohr oder als Rundrohr gestaltet sein.

Bevorzugt ist ferner, dass Rohrbündel als Verbindungsrohre eingesetzt werden.

Es kann vorgesehen sein, dass wenigstens ein oder mehrere oder alle Verbindungsrohre genau einen (inneren) Kanal aufweisen. In einer bevorzugten Gestaltung ist vorgesehen, dass ein Verbindungsrohr oder mehrere oder alle Verbindungsrohre jeweils mehrere Kanäle aufweisen, die parallel zueinander angeordnet sind. Bevorzugt sind diesen Kanälen jeweils separate erste Öffnungen und separate zweite Öffnungen zugeordnet.

Es kann beispielsweise vorgesehen sein, dass ein als Flachrohr gestaltetes Verbindungsrohr eine Mehrzahl von Kanälen aufweist, die parallel zueinander angeordnet und beabstandet sind. Beispielsweise kann vorgesehen sein, dass ein solches, als Flachrohr gestaltetes Verbindungsrohr eine Reihe von Kanälen aufweist.

Bei einem als Flachrohr gestalteten Verbindungsrohr kann vorgesehen sein, dass dies so als Flachrohr gestaltet ist, dass die Außenmantelfläche im Querschnitt eine im Wesentlichen eine rechteckige Kontur aufweist, die zwei gegenüberliegende lange Seiten aufweist sowie zwei gegenüberliegende kurze Seiten.

Es kann beispielsweise vorgesehen sein, dass sämtliche im Wärmetauscher vorgesehenen Verbindungsrohre als Flachrohre der vorgenannten Art, oder als Flachrohre in anderer Art gestaltet sind.

In einer besonders bevorzugten Gestaltung ist vorgesehen, dass sämtliche in dem Wärmetauscher angeordnete Verbindungsrohre als Flachrohre ausgebildet sind, wobei diese Flachrohre in bereits beschriebener Weise eine im Querschnitt rechteckige Außenmantelfläche aufweisen mit kurzen Seiten und langen Seiten, und wobei die langen Seiten sämtlicher Verbindungsrohre bzw. Flachrohre parallel zueinander ausgerichtet sind.

In einer besonders bevorzugten Gestaltung ist vorgesehen, dass die Tiefenrichtung des Wärmetauschers diejenige ist, die senkrecht zur Längsachse der Verbindungsrohre und in Richtung der langen Seiten solcher Flachrohre ausgerichtet ist, und dass die Breitenrichtung die Richtung ist, die senkrecht zur Längsachse der Verbindungsrohre und in Richtung der kurzen Seite solcher Flachrohre ausgerichtet ist.

In besonders bevorzugter Gestaltung ist der Kanal des bzw. der Verbindungsrohre, der eine erste Öffnung des betreffenden Verbindungsrohres mit einer zweiten Öffnung des Verbindungsrohres verbindet, bzw. von einer zylindrischen Fläche begrenzt.

Es kann vorgesehen sein, dass wenigstens ein oder alle Kanäle an jeder Position seiner Längsachse jeweils den gleichen Querschnitt aufweist oder dass der Querschnitt entlang der Längsachse variiert. Besonders bevorzugt ist ein solcher Querschnitt allerdings entlang der Längsachse gleich.

In einer besonders bevorzugten Gestaltung ist vorgesehen, dass der Wärmetauscher als innerer Wärmeübertrager gestaltet ist. Ein solcher (reiner) innerer Wärmeübertrager ist insbesondere so, dass ein direkter Kontakt zwischen verschiedenen, insbesondere jeweils parallel und senkrecht zur Längsachse benachbart angeordneten, Verbindungsrohren gegeben ist. Es kann vorgesehen sein, dass solche direkt in Kontakt stehende Verbindungsrohre zum gleichen Fluidkreislauf gehören, wobei allerdings der Fluidkreislauf so ist, dass im Betrieb das in unterschiedlichen Verbindungsrohren im Kontaktbereich dieser Verbindungsrohre strömende Fluid sich hinsichtlich des Drucks und / oder hinsichtlich der Temperatur unterscheidet. Dies kann beispielsweise so realisiert werden, dass das Medium von dem einen solcher Verbindungsrohre durch einen Kondensator geleitet wird, und anschließend durch das andere dieser in Kontakt stehenden Verbindungsrohre.

Bevorzugt ist ferner, dass Verbindungsrohre gegeben sind, deren Kanäle parallel zueinander ausgerichtet sind, und dass zwischen solchen Verbindungsrohren unter einem Winkel, wie beispielsweise 90 Grad, zu den Längsachsen der Verbindungsrohre, die die erste und die zweite Kammereinrichtung verbinden, ein weiteres Medium strömt oder strömen kann. Dies kann beispielsweise so sein, dass dieses zwischen diesen Rohren durchströmende Medium Luft ist, welches im mittels eines Lüfters dort durchgeblasen werden kann. Es kann auch vorgesehen sein, dass der Wärmetauscher in einem Kraftfahrzeug verbaut ist, und solche Luft im Betrieb des Kraftfahrzeugs aufgrund der Geschwindigkeit des Kraftfahrzeuges durch einen genannten Zwischenbereich strömt. Auch anders gestaltete Wärmetauscher können in einem Kraftfahrzeug verbaut werden bzw. können verwendet werden um in einem Kraftfahrzeug verbaut einen Wärmaustausch von verschiedenen Medien zu bewirken.

Es kann allerdings auch vorgesehen sein, dass in solchen Zwischenbereichen weitere Verbindungsrohre oder dergleichen vorgesehen sind, die eine dritte und eine vierte Kammereinrichtung verbinden.

Bevorzugt ist ferner, dass sich vorbestimmte oder zumindest zwei Verbindungsrohre so miteinander in Kontakt stehen, dass zwischen ihnen eine Wärmeübertragungsfläche gebildet wird.

Bevorzugt ist, dass der Wärmetauscher so ausgestaltet ist, dass die parallel angeordneten Verbindungsrohre einem gleichen Fluidkreislauf zugeordnet sind. Es kann auch vorgesehen sein, dass ein solcher Wärmetauscher zwei oder drei oder mehr Fluidkreisläufe aufweist, wobei jeder dieser Fluidkreisläufe so ist, dass das hierzu gehörige Medium im Betrieb durch einen Teil der parallel angeordneten Verbindungsrohre strömt. Zusätzlich kann in bereits vorbeschriebener Weise vorgesehen sein, dass Zwischenräume zwischen Verbindungsrohren, die parallel ausgerichtet sind, gegeben ist, und hierdurch kanalisiert oder nicht kanalisiert ein weiteres Medium strömen kann.

Bevorzugt ist vorgesehen, dass verschiedene Verbindungsrohre gegeben sind, die mit ihren ersten Endbereichen bzw. deren erste Enden unterschiedlich weit in die erste Kammereinrichtung hineinragen. Bevorzugt ist vorgesehen, dass verschiedene Verbindungsrohre gegeben sind, die mit ihren zweiten Endbereichen bzw. deren zweite Enden unterschiedlich weit in die zweite Kammereinrichtung hineinragen.

Bei Gestaltungen gemäß dem Stand der Technik, bei denen die bzw. alle Verbindungs- bzw. Flachrohre in der ersten bzw. zweiten Sammelkammereinrichtung die gleichen Längenniveaus aufweisen bzw. bei denen die ersten Öffnungen verschiedener Verbindungsrohre bzw. die zweiten Öffnungen verschiedener Verbindungsrohre nicht in Richtung ihrer Längsrichtung beabstandet sind können nur bedingt, mit großem Aufwand oder gar nicht unterschiedliche oder komplexe Strömungsführungen realisiert werden.

Mittels der unterschiedlichen Längenniveaus der Verbindungsrohre bzw. mittels der in Längsrichtung der Verbindungsrohre gegebenen Abstände zwischen ersten Öffnungen verschiedener Verbindungsrohre und/oder mittels der in Längsrichtung der Verbindungsrohre gegebenen Abstände zwischen zweiten Öffnungen verschiedener Verbindungsrohre, wird ermöglicht, dass komplexe Strömungsführungen realisiert werden können und / oder der bauliche Aufwand reduziert wird. Die Erfindung soll allerdings nicht auf nur auf Gestaltungen beschränkt werden, bei denen komplexe Strömungsführungen und / oder ein geringer baulicher Aufwand gegeben ist.

Bei Gestaltungen, bei denen eine Flachrohrreihe bzw. die Flachrohre einer solchen nicht nur von einem sondern auch von einem zweiten Medium durchströmt wird, was beispielsweise bei einem inneren Wärmetauscher gegeben sein kann, kann die Verwendung von mindestens zwei in Strömungsrichtung verschiedenen Längenniveaus der Flachrohre bzw. einen Beabstandung der verschiedenen Flachrohren zugeordneten ersten und / oder zweiten Öffnungen notwendig sein, zumindest wenn ein effektiver Wärmeaustausch und / oder ein geringer baulicher Aufwand gewünscht ist; entsprechendes kann gelten, wenn dabei statt zwei unterschiedlichen Medien ein Medium zu unterschiedlichen Druckniveaus im Kreislauf gegeben ist bzw. gegeben sein soll. Auch für die Realisierung solcher Gestaltungen legt die Erfindung eine gute Basis.

Ein Medium ist im Sinne der Erfindung bevorzugt ein Fluid bzw. ein Gas oder eine Flüssigkeit.

Beispielhafte und bevorzugte Gestaltungsformen der Erfindung werden im Folgenden anhand der Figuren erläutert. Es zeigt:
- Fig. 1: eine erste Gestaltungsform eines Wärmetauschers in dreidimensionaler schematischer Ansicht;
- Fig. 2: eine Draufsicht der Gestaltung gemäß Fig. 1;
- Fig. 3: Schnittansichten entlang den Linien A-A und B-B aus Fig. 2;
- Fig. 4: eine zweite Gestaltungsform eines Wärmetauschers in dreidimensionaler schematischer Ansicht;
- Fig. 5: eine Draufsicht der Gestaltung gemäß Fig. 4;
- Fig. 6: Schnittansichten entlang den Linien A-A und B-B aus Fig. 5;
- Fig. 7: eine dritte Gestaltungsform eines Wärmetauschers in dreidimensionaler schematischer Ansicht;
- Fig. 8: eine Draufsicht der Gestaltung gemäß Fig. 7
- Fig. 9: Schnittansichten entlang den Linien A-A und B-B aus Fig. 8;
- Fig. 10: eine vierte Gestaltungsform eines Wärmetauschers in dreidimensionaler schematischer Ansicht;
- Fig. 11: eine Draufsicht der Gestaltung gemäß Fig. 10;
- Fig. 12: Schnittansichten entlang den Linien A-A und B-B aus Fig. 11;
- Fig. 13: eine Explosionsansicht der Gestaltung gemäß Fig. 10;
- Fig. 14: eine fünfte Gestaltungsform eines Wärmetauschers in dreidimensionaler schematischer Ansicht;
- Fig. 15: eine Draufsicht der Gestaltung gemäß Fig. 14;
- Fig. 16: Schnittansichten entlang den Linien A-A und B-B aus Fig. 15;
- Fig. 17: eine sechste Gestaltungsform eines Wärmetauschers in dreidimensionaler schematischer Ansicht;
- Fig. 18: eine Draufsicht der Gestaltung gemäß Fig. 17;
- Fig. 19: Schnittansichten entlang den Linien A-A und B-B aus Fig. 18;
- Fig. 20: eine siebente Gestaltungsform eines Wärmetauschers in dreidimensionaler schematischer Ansicht;
- Fig. 21: eine Draufsicht der Gestaltung gemäß Fig. 20;
- Fig. 22: Schnittansichten entlang den Linien A-A und B-B aus Fig. 21;
- Fig. 23: eine achte Gestaltungsform eines Wärmetauschers in dreidimensionaler schematischer Ansicht;
- Fig. 24: eine Draufsicht der Gestaltung gemäß Fig. 23;
- Fig. 25: Schnittansichten entlang den Linien A-A und B-B aus Fig. 24;
- Fig. 26: eine neunte Gestaltungsform eines Wärmetauschers in dreidimensionaler schematischer Ansicht;
- Fig. 27: eine Draufsicht der Gestaltung gemäß Fig. 26;
- Fig. 28: Schnittansichten entlang den Linien A-A und B-B aus Fig. 27;
- Fig. 29: eine erfindungsgemäße Ausführungsform der Erfindung in dreidimensionaler schematischer Explosionsansicht; und
- Fig. 30: einen vergrößerten Ausschnitt der Gestaltung gemäß Fig. 29.

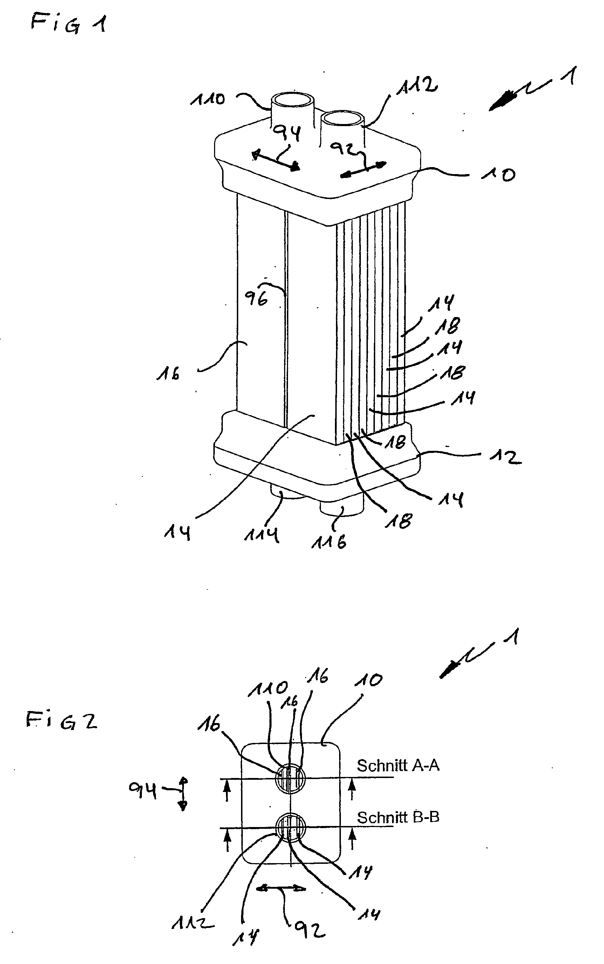

Die Fig. 1 bis 30 zeigen beispielhafte Gestaltungsformen eines Wärmetauschers für Kraftfahrzeuge in schematischer Darstellung.

Bei diesen beispielhaften Gestaltungen weist der Wärmetauscher 1 jeweils eine erste Kammereinrichtung 10 auf, sowie eine von dieser ersten Kammereinrichtung 10 beabstandete zweite Kammereinrichtung 12. In jeder dieser Kammereinrichtungen 10, 12 wird wenigstens eine Kammer gebildet.

Die erste 10 und die zweite Kammereinrichtung 12 sind jeweils über mehrere Verbindungsrohre 14, 16 bzw. 18, 20 bzw. 200, 202, 204, 206 bzw. 280, 282 bzw. 322 strömungstechnisch verbunden. Diese Verbindungsrohre 14, 16, 18, 20, 200, 202, 204, 206, 280, 282, 322 münden jeweils mit einem ersten 22 bzw. 24 bzw. 26 bzw. 28 bzw. 236 bzw. 242 bzw. 248 bzw. 254 bzw. 294 bzw. 296 bzw. 324 ihrer Enden in die erste Kammereinrichtung 10, und mit dem anderen, zweiten Ende 30 bzw. 32 bzw. 34 bzw. 36 bzw. 214 bzw. 216 bzw. 218 bzw. 220 bzw. 302 bzw. 304 bzw. 328 in die zweite Kammereinrichtung 12.

Die teils langen "Bezugszeichenketten" werden im Folgenden teilweise - zumindest im Hinblick auf die allgemeinen Ausführungen zu den Fig. 1 bis 30 - teilweise unter Verwendung des Begriffs "etc." abgekürzt.

In jedem der Verbindungsrohre 14 etc. erstreckt sich wenigstens ein Kanal 38 bzw. 40 bzw. 42 bzw. 44 bzw. 240 bzw. 326 bzw. 252 bzw. 258. Die Längsachsen 46 bzw. 48 bzw. 50 bzw. 52 sämtlicher dieser Kanäle 38 etc. erstrecken sich jeweils im Wesentlichen gerade und sind parallel zueinander angeordnet. Auch die Verbindungsrohre 14 etc. sind in den Gestaltungen gemäß den Fig. 1 bis 30 jeweils gerade gestaltet.

In den beispielhaften Gestaltungsformen, die in den Fig. 1 bis 30 gezeigt sind, entsprechen die Längsachsen 46 etc. der Verbindungsrohre 14 etc. im Wesentlichen den Längsachsen 46 etc. der jeweils zugehörigen Kanäle 38 etc., bzw. sind parallel zu diesen ausgerichtet.

In den Gestaltungen gemäß den Fig. 1 bis 30 verbindet jeder der Kanäle 38 etc., der in einem Verbindungsrohr 14 etc. angeordnet ist, jeweils eine erste Öffnung 54 bzw. 56 bzw. 58 bzw. 60 bzw. 238 bzw. 244 bzw. 250 bzw. 256 bzw. 290 bzw. 292 bzw. 326 des jeweiligen Verbindungsrohres 14 etc. mit einer jeweiligen zweiten Öffnung 62 bzw. 64 bzw. 66 bzw. 68 bzw. 222 bzw. 224 bzw. 226 bzw. 228 bzw. 298 bzw. 300 bzw. 330 des betreffenden Verbindungsrohres etc..

Die ersten Öffnungen 54 etc. sind jeweils im Bereich des ersten Endes 22 etc. des betreffenden Verbindungsrohres 14 etc. angeordnet, und die zweiten Öffnungen 62 etc. sind jeweils im Bereich des zweiten Endes 30 etc. des betreffenden Verbindungsrohres 14 etc. angeordnet. Bei den in den Fig. 1 bis 30 gezeigten beispielhaften Gestaltungsformen werden die erste 10 und die zweite Kammereinrichtung 12 jeweils über jeden dieser betreffenden Kanäle 38 etc. strömungstechnisch miteinander verbunden.

Bei den in den Fig. 1 bis 30 gezeigten beispielhaften Gestaltungsformen ist jedem Kanal 38 etc. jeweils eine separate erste Öffnung 54 etc. sowie jeweils eine separate zweite Öffnung 62etc. zugeordnet.

In den beispielhaften Gestaltungsformen gemäß den Fig. 1 bis 30 ist jeweils vorgesehen, dass zumindest eines der Verbindungsrohre 14 etc. zumindest eine erste Öffnung 54 etc. aufweist, die von zumindest einer ersten Öffnung 54 etc. wenigstens eines anderen dieser Verbindungsrohre 14 etc. beabstandet ist, und zwar in Längsrichtung 46 bzw. 48 bzw. 50 bzw. 52 dieser Verbindungsrohre 14 etc. bzw. in Längsrichtung 46 bzw. 48 bzw. 50 bzw. 52 der Kanäle 38 etc. gesehen.

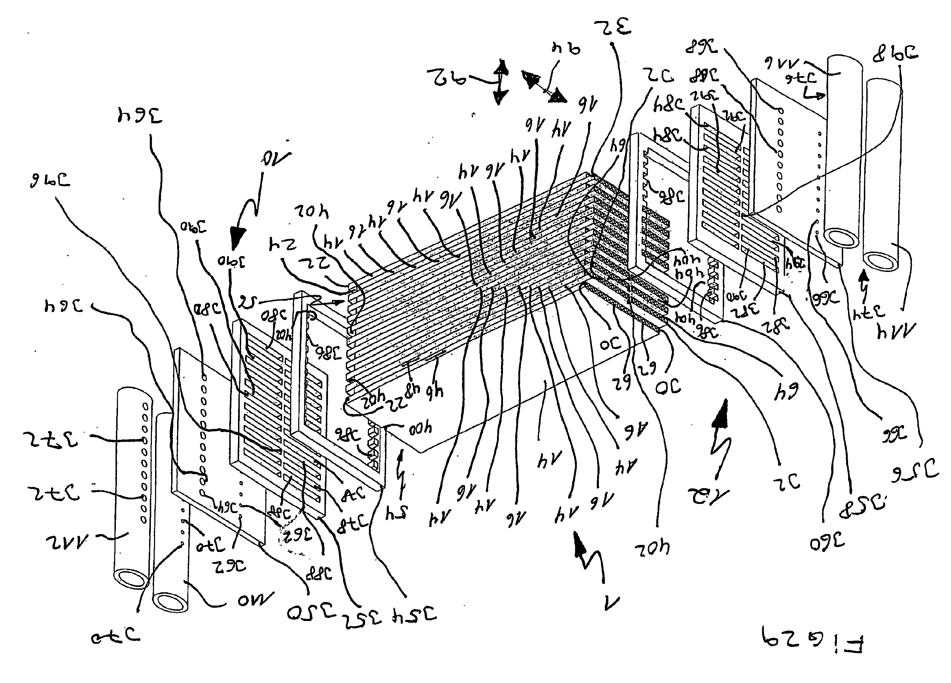

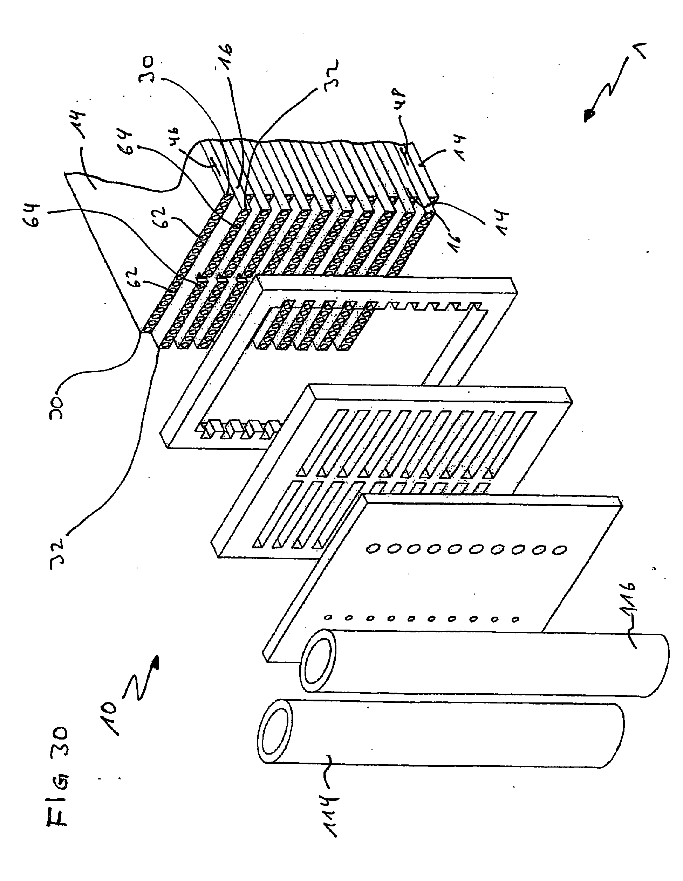

Es kann bei jeder der Gestaltungen gemäß den Fig. 1 bis 30 vorgesehen sein, dass jedes der Verbindungsrohre 14 etc. genau einen Kanal 38 etc. aufweist. Es kann auch bei jeder der Gestaltungen gemäß den Fig. 1 bis 30 vorgesehen sein, wie es beispielsweise in den Fig. 29 und 30 gezeigt ist, dass in jedem der Verbindungsrohre 14 etc. jeweils zwei oder mehrere Kanäle 38 etc. vorgesehen sind, und zwar insbesondere mehrere Kanäle 38etc., deren Längsachsen 46 etc. parallel verlaufen. Ferner kann bei jeder der Gestaltungen gemäß den Fig. 1 bis 30 vorgesehen sein, dass ein Teil der Verbindungsrohre 14 etc. jeweils mehrere Kanäle 38etc. aufweist und ein anderer Teil dieser Verbindungsrohre 14 etc. jeweils genau einen Kanal 38 etc. aufweist.

Bei Gestaltungen, bei denen mehrere Kanäle 38 etc. im selben Verbindungsrohr 14 etc. vorgesehen sind, ist jedem dieser Kanäle 38 etc. eine, insbesondere jeweils separate, erste Öffnung 54 etc. sowie eine, insbesondere jeweils separate, zweite Öffnung 62. etc. zugeordnet.

Bei den beispielhaften Gestaltungen gemäß den Fig. 1 bis 30 ist vorgesehen, dass die jeweilige erste Öffnung 54 etc. bzw. die jeweilige zweite Öffnung 62 etc. an einer am jeweiligen ersten Ende 22 etc. gelegenen Stirnseite 70 bzw. 72 bzw. 74 bzw. 76 bzw. einer am jeweiligen zweiten Ende 30 etc. gelegenen Stirnseite 78 bzw. 80 bzw. 82 bzw. 84 des betreffenden Verbindungsrohres 14 etc. angeordnet ist.

Es kann allerdings auch vorgesehen sein - was in den Fig. nicht gezeigt ist -, dass die ersten 54 etc. bzw. zweiten Öffnungen 62 etc. in einer Mantelwand des betreffenden Verbindungsrohres 14 etc. angeordnet sind. Bei einer solchen Gestaltung kann auch vorgesehen sein, dass sich der dieser betreffenden Öffnung 54 etc. bzw. 62 etc. zugeordnete Kanal 38 etc. - in seiner Längsrichtung 46 etc. - an der Öffnung 54 etc. bzw. 62 etc. vorbeierstreckt, wobei diese Öffnung 54 etc. bzw. 62 etc. in den Kanal 38 etc. mündet. Es kann auch vorgesehen sein, dass eine erste 54 etc. oder eine zweite Öffnung 62 etc. in der Mantelwand des Verbindungsrohres 14 etc. angeordnet ist und die andere Öffnung 62 etc. bzw. 54 etc. stirnseitig angeordnet ist. Ferner kann vorgesehen sein, dass einem Kanal 38 etc. mehrere erste 54 etc. und / oder mehrere zweite Öffnungen 62 etc. zugeordnet sind.

Gemäß den Fig. 1 bis 30 ist es allerdings beispielhaft so, dass der jeweilige Querschnitt der Kanäle 38 etc. dem Öffnungsquerschnitt der ersten Öffnungen 54 etc. sowie dem der zweiten Öffnungen 62 etc. entspricht, bzw. die Öffnungen 54 bzw. 62 im wesentlichen den Fortsatz bzw. Abschluss der Kanäle 38 etc. bilden. Dort ist jedem Kanal 38 etc. genau eine erste - insbesondere separate - Öffnung 54 etc. sowie genau eine - insbesondere separate - zweite Öffnung 62 etc. zugeordnet.

In den beispielhaften Gestaltungsformen gemäß den Fig. 1 bis 30 sind die Verbindungsrohre 14 etc. jeweils als Flachrohre gestaltet.

Diese Flachrohre weisen einen senkrecht zur Längsachse 46 etc. der Kanäle 38 etc. gelegenen Querschnitt auf, der im Wesentlichen rechteckig gestaltet ist bzw. eine im Wesentlichen rechteckige Außenkontur aufweist und zwei gegenüberliegende kurze Seiten der jeweiligen Außenkontur bzw. Außenoberfläche aufweist sowie zwei gegenüberliegende lange Seiten.

Sämtliche dieser Flachrohre sind in den beispielhaften Gestaltungen gemäß den Fig. 1 bis 30 so angeordnet, dass die langen Seiten der unterschiedlichen Flachrohre im Wesentlichen parallel zueinander angeordnet sind, und die kurzen Seiten der Flachrohre jeweils parallel zueinander angeordnet sind.

Es sei allerdings angemerkt, und dies in den Fig. 1 bis 30 nicht gezeigt ist, dass anstelle der Flachrohre auch anders gestaltete Verbindungsrohre 14 etc. gegeben sein können. So können beispielsweise die Verbindungsrohre 14 etc. als Rundrohre oder als Ovalrohre gestaltet sein. Bevorzugt ist ferner, dass die Verbindungsrohre 14 etc. als Rohrbündel gestaltet sind bzw. die Verbindungsrohre 14 etc. als Rohrbündel zusammengefasst sind.

Im Hinblick auf die Gestaltung gemäß den Fig. 1 bis 3 ist allerdings besonders bevorzugt vorgesehen, dass dort Flachrohre verwendet werden, da hierdurch in den dortigen Gestaltungen die Wärmeübertragungsflächen verbessert gestaltet sind, was damit zusammenhängt, dass die dortige Gestaltungsform so ist, dass die benachbarten Verbindungsrohre 14 und 18, einerseits, und 16 und 20, andererseits, jeweils mit Kontakt aneinander anliegen und somit zwischen sich Wärmeübertragungsflächen bilden. Allerdings können auch bei diesen Gestaltungen grundsätzlich andere Rohrformen gegeben sein.

Der Wärmetauscher 1 gemäß den beispielhaften Gestaltungen nach den Fig. 1 bis 30 weist senkrecht zur Längsachse der 46 etc. der Kanäle 38 etc. eine Breitenrichtung auf, die schematisch durch den Doppelpfeil 92 angedeutet ist, sowie eine senkrecht zu dieser Breitenrichtung 92 und senkrecht zu den Längsachsen 46 etc. gelegene Tiefenrichtung, die schematisch durch den Doppelpfeil 94 angedeutet ist.

Bei den Ausführungsbeispielen gemäß den Fig. 1 bis 30 sind in Strömungsrichtung bzw. in Richtung der Längsachse der Verbindungsrohre bzw. der Kanäle mindestens zwei verschiedene Längenniveaus der Flachrohre vorhanden. D.h. dass dann zwangsläufig bzw. zumindest in diesen beispielhaften Gestaltungen auch mindestens zwei getrennte Kammern oben oder unten oder oben und unten bzw. jeweils in der ersten Kammereinrichtung 10 und / oder der in der zweiten Kammereinrichtung 12 gegeben sind.

In den beispielhaften Gestaltungen gemäß den Fig. 1 bis 28 sind jeweils zwei als Flachrohre gestaltete Verbindungsrohre 14 etc. bzw. Flachrohrreihen in der Tiefe bzw. in Tiefenrichtung 94 angeordnet bzw. benachbart bzw. in Reihe angeordnet. Es können aber auch, was in diesen Figuren nicht gezeigt ist, mehr als zwei Flachrohre in der Tiefe bzw. in Tiefenrichtung 94 bzw. Tiefenrichtung 94 in Reihe angeordnet sein, wie beispielsweise drei oder vier oder mehr. Es kann auch vorgesehen sein, dass in der Tiefe bzw. in Tiefenrichtung 94 ein durchgängiges Flachrohr vorgesehen ist, was beispielhaft in den Fig. 29 und 30 gezeigt ist, aber auch in den Gestaltungen gemäß den Fig. 1 bis 28 gegeben sein kann.

Gemäß den Fig. 1 bis 22 ist - in Tiefenrichtung 94 gesehen - zwischen den Verbindungs- bzw. Flachrohren 14 etc. ein Zwischenraum 96 gegeben, so dass die jeweils in Tiefenrichtung 94 benachbarten Verbindungs- bzw. Flachrohre 14 etc. in Tiefenrichtung beabstandet sind. Dieser Zwischenraum 96 kann insbesondere auch so sein, dass er sich in Breitenrichtung 92 durch den gesamten Wärmetauscher 1 erstreckt. Es kann allerdings auch vorgesehen sein, dass anstelle der Zwischenräume 96 ein Kontakt der in Tiefenrichtung 94 jeweils benachbarten Verbindungs- bzw. Flachrohre 14 und 16 bzw. 18 und 20 gegeben ist und / oder in dieser Tiefenrichtung 94 die Flachrohre 14 etc. jeweils zu einem einstückigen Rohr verbunden sind bzw. jeweils genau ein Verbindungs- bzw. Flachrohr vorgesehen ist, was beispielsweise in den Fig. 29 und 30 gezeigt ist. Insbesondere in diesem Fall kann auch eine Trennwand vorgesehen sein, die ein Durchströmen des betreffenden in unterschiedlichen Richtungen ermöglicht.

In den beispielhaften Gestaltungen gemäß den Fig. 1 bis 28 sind in der Tiefe 94 jeweils mehrere bzw. - hier zwei - Flachrohrreihen angeordnet bzw. in Reihe angeordnet, wobei jede Flachrohrreihe 118 bzw. 124 bzw. 268 bzw. 306 bzw. 308 von mehreren sich jeweils in Breitenrichtung 92 erstreckenden Flachrohren 14 etc. gebildet wird.

In den Fig. 1 bis 30 sind in Breitenrichtung 94 jeweils beispielhaft eine bestimmte Anzahl von Verbindungsrohren 14 etc. in Reihe 118 etc. angeordnet. Die dort gezeigten Anzahlen sind jeweils bevorzugt. Es sei allerdings angemerkt, dass die Anzahl auch anders gestaltet sein kann. Insbesondere kann vorgesehen sein, dass mehr Flachrohre in Breitenrichtung 94 vorgesehen sind, als dies in den beispielhaften Gestaltungen nach den Fig. 1 bis 30 gezeigt ist.

Wie angesprochen, sind in den beispielhaften Gestaltungsformen gemäß den Fig. 1 bis 30 die erste Öffnung 54 etc. sowie die zweite Öffnung 62 etc jeweils stirnseitig an den Verbindungsrohren 14 etc. angeordnet, wobei verschiedene Verbindungsrohre 14 etc. existieren, deren erste Öffnungen 54 etc. in Längsrichtung 46 etc. der Verbindungsrohre 14 etc. voneinander beabstandet sind, und/oder deren zweiten Öffnungen 54 etc. in Längsrichtung 46 etc. der Verbindungsrohre 14 etc. voneinander beabstandet sind, so dass davon gesprochen werden kann, dass in Strömungsrichtung 120 bzw. 122 bzw. 126 bzw. 128 bzw. 260 bzw. 262 bzw. 264 bzw. 266 mindestens zwei verschiedene Längenniveaus der Flachrohre 14 etc. gegeben sind, und zwar insbesondere in Bezug auf den gleichen, also ersten bzw. zweiten, Endbereich dieser Flachrohre. Diese voneinander beabstandeten ersten 54etc. bzw. zweiten Öffnungen 62 etc. sind an verschiedenen Verbindungs- 14 etc. bzw. Flachrohren angeordnet. In den Gestaltungen gemäß den Fig. 1 bis 30 werden dann auch mindestens zwei getrennte Kammern 130 etc. bzw. 136 oben oder unten, oder oben und unten bzw. im Bereich der ersten Kammereinrichtung 10 und/oder der zweiten Kammereinrichtung 12 gebildet. Es ist also insbesondere vorgesehen, dass auf der Seite, auf der unterschiedliche Längenniveaus gegeben sind, zumindest zwei Verbindungsrohre 14 etc. in unterschiedliche solcher Kammern 130 etc. bzw. 136 etc. münden.

Es sei angemerkt, dass als "äußere" Kammer einer Kammereinrichtung 10 bzw. 12 jeweils eine solche Kammer 130 etc. bzw. 136 etc. bezeichnet werden kann, die der jeweils gegenüberliegenden Kammereinrichtung 10 bzw. 12 abgewandt ist und als "innere" Kammer 130 etc. bzw. 136 etc. einer Kammereinrichtung 10 bzw. 12 die Kammer 130 etc. bzw. 136 etc. bezeichnet werden kann, die der jeweils gegenüberliegenden Kammereinrichtung 10 bzw. 12 zugewandt ist. Diese Unterscheidung gilt insbesondere für Gestaltungen, bei denen zwei oder mehr Kammern 130 etc. bzw. 136 etc. gegeben sind, die derselben Kammereinrichtung 10 bzw. 12 zugeordnet sind, und die - in Richtung der Längsachse 46 etc. der Verbindungsrohre 14 etc. gesehen - räumlich bzw. mittel Zwischenwänden voneinander getrennt sind. In diesem Zusammenhang sei angemerkt, dass die Fig. 1 bis 30 Gestaltungsformen zeigen, bei denen in dieser Richtung bis zu zwei voneinander getrennte Kammern 130 etc. bzw. 136 etc. in jeweils selben Kammereinrichtung 10 bzw. 12 gegeben sind; in der jeweiligen Kammereinrichtung sind in zwei zueinander sowie zu den Längsachsen 46 etc. der Verbindungsrohre 14 etc. jeweils senkrecht gelegenen Richtungen jeweils bis zu zwei Kammern 130 etc. bzw. 136 etc. getrennt voneinander (in Reihe) angeordnet; in jeder dieser Richtungen - und insbesondere in Richtung der Längsachsen 46 etc. der Verbindungsrohre 14 etc, können in weiteren bevorzugten Gestaltungsformen auch mehr als zwei Kammern 130 etc. bzw. 136 etc. räumlich bzw. durch Zwischenwände getrennt voneinander angeordnet sein. Der Begriff "obere Kammer" soll anzeigen, dass die betreffende Kammer eine Kammer 130 etc. der ersten Kammereinrichtung 10 ist, während der Begriff "untere Kammer" anzeigen soll, dass diese Kammer 136 etc. eine Kammer 136 etc. der zweiten Kammereinrichtung 12 ist. Dies bedeutet allerdings nicht, dass der Wärmetauscher 1 so eingebaut werden muss, dass die erste Kammereinrichtung 10 tatsächlich oben gelegen ist und die zweite Kammereinrichtung 12 tatsächlich unten gelegen ist. Eine solche Anordnung ist allerdings auch bevorzugt.

Die Fig. 1 bis 3 zeigen eine erste beispielhafte Gestaltungsform in schematischer Darstellung.

Fig. 1 zeigt eine dreidimensionale Ansicht der ersten Gestaltungsform.

Der in Fig. 1 gezeigte Wärmetauscher 1 ist ein reiner innerer Wärmetauscher, das heißt, die Verbindungsrohre 14, 18 bzw. 16, 20 sind Rohr an Rohr bzw. mit Kontakt angeordnet und werden von zwei getrennten Medien m₁ und m₂ durchströmt. Dabei ist je eine Umlenkung in der Tiefe 94 in der inneren Kammer 130, 136 gegeben. Es können aber auch dieselben Medien m1 und m3, die allerdings in unterschiedlichen Druckniveaus im Kreislauf gegeben sind.

Für das erste Medium m₂ ist ein Zulauf 110 sowie ein Ablauf 112 vorgesehen.

Der Zulauf 110 sowie der Ablauf 112 für das erste Medium m₁ ist an der ersten Kammereinrichtung 10 vorgesehen. Wie Fig. 1 entnommen werden kann, sind der Zulauf 110 sowie der Ablauf 112 jeweils rohrförmige Stutzen mit kreiszylindrischer Querschnittsfläche. Die Querschnittsgeometrie kann auch anders gestaltet sein.

Der Zulauf 110 sowie der Ablauf 112 sind an der Seite der ersten Kammereinrichtung 10 angeordnet, die den Verbindungsrohren 14, 16, 18, 20 bzw. der zweiten Kammereinrichtung 12 abgewandt ist.

Gemäß der ersten Gestaltungsform ist ferner ein Zulauf 114 sowie ein Ablauf 116 für ein weiteres Medium m₃ vorgesehen.

Der Zulauf 114 sowie der Ablauf 116 sind in der Gestaltung gemäß Fig. 1 ebenfalls als Rohrstutzen mit kreisringförmigem Querschnitt gestaltet. Die Querschnittsgeometrie kann auch anders gestaltet sein. Der Zulauf 114 sowie der Ablauf 116 sind auf der den Verbindungsrohren 14, 16, 18, 20 bzw. der ersten Kammereinrichtung 10 abgewandten Seite der zweiten Kammereinrichtung 12 an dieser angeordnet.

Die Medien m₁ und m₃ können unterschiedliche Medien sein, die Bestandteile unterschiedlicher, separater Fluidkreisläufe sind, oder sie können ein Medium des gleichen Fluids bzw. Fluidkreislaufs sein, wobei die Medien m₁ und m₃ sich beim Durchströmen der Verbindungsrohre 14, 16, 18, 20 durch ihr Druck- und/oder Temperaturniveau unterscheiden. Beispielsweise kann vorgesehen sein, dass das aus dem Ablauf 116 für das Medium m₃ abgeführte Medium über den Zulauf 110 für das Medium m₁ zugeführt wird und das aus dem Ablauf 112 für das Medium m₁ abströmende Medium über den Zulauf 114 für das Medium m₃ zugeführt wird. In einer dieser Verbindungen kann dann beispielsweise ein Kondensator angeordnet sein. Druckniveau des Mediums kann dabei beispielsweise dann in den Verbindungsrohren 20 vom dem Druckniveau in den Verbindungsrohren 16 jeweils abweichen, sowie in den Verbindungsrohren 14 jeweils vom dem Druckniveau in den Verbindungsrohren 16.

Fig. 2 zeigt eine Draufsicht auf die Gestaltung gemäß Fig. 1.

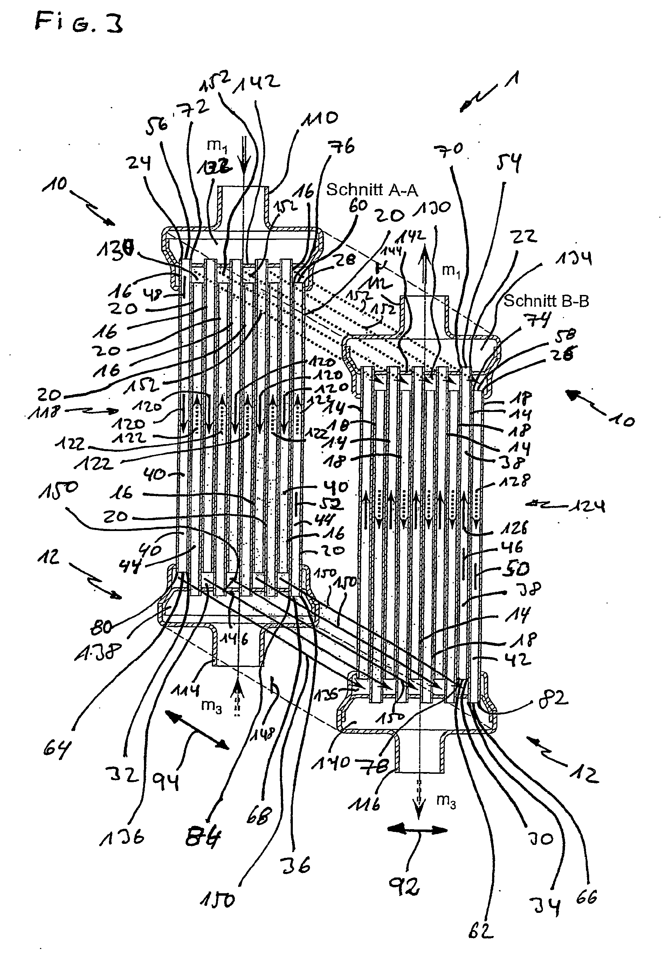

Fig. 3 zeigt einen Schnitt entlang der Linie A-A aus Fig. 2 sowie einen Schnitt entlang der Linie B-B aus Fig. 2.

Zu diesen Schnittdarstellungen entlang von Linien A-A sowie Linien B-B sowie entsprechenden auf weitere Gestaltungsformen in den Fig. gezeigte Schnittdarstellungen A-A und B-B, sei angemerkt, dass diese Schnitte A-A und B-B in den Fig. jeweils durch gestrichelte Linien verbunden sind, und in diesen Verbindungen teilweise Zwischenwände schematisch durch Linien angedeutet sind; ferner sind im Bereich diese Verbindungen Pfeile dargestellt, die anzeigen sollen dass und in welchem Bereich Medium zwischen den durch die Schnitte A-A und B-B gezeigten Bereichen (in Tiefenrichtung bzw. in der Tiefe) strömt. Dies bedeutet, dass strenggenommen auch der Zwischenbereich zwischen den Schnitten A-A und B-B in den entsprechenden Fig. grob angedeutet ist.

In der Gestaltung gemäß Fig. 3 sind die ersten Öffnungen 56 der Verbindungsrohre 16, in Längsrichtung 46, 48, 50, 52 der Verbindungsrohre gesehen, beabstandet von den ersten Öffnungen 60 der Verbindungsrohre 20. Ferner sind bei dieser Gestaltung die zweiten Öffnungen 64 der Verbindungsrohre 16 beabstandet von den zweiten Öffnungen 68 der Verbindungsrohre 20.

Die Verbindungsrohre 16 und 20 weisen in der Gestaltung gemäß Fig. 3 somit an beiden Seiten bzw. am ersten Ende 24, 28 sowie am zweiten Ende 32, 36 verschiedene bzw. unterschiedliche Längenniveaus auf.

Auch die Verbindungsrohre 14 und 18 weisen in der Gestaltung gemäß Fig. 3 an beiden Enden 30, 34 bzw. 22, 26 unterschiedliche Längenniveaus auf. Es sind also die ersten Öffnungen 54 der Verbindungsrohre 14, in Richtung der Längsachsen 46, 50 gesehen, beabstandet von den ersten Öffnungen 58 der Verbindungsrohre 18 und die zweiten Öffnungen 62 der Verbindungsrohre 14 ebenfalls in Längsrichtung 46, 50 beabstandet von den zweiten Öffnungen 66 der Verbindungsrohre 18.

In der Gestaltung gemäß Fig. 3 ist ferner vorgesehen, dass die Verbindungsrohre 16 und 14 an beiden Enden bzw. an beiden Seiten im Wesentlichen das gleiche Längenniveau aufweisen. Ferner ist in der Gestaltung gemäß Fig. 3 vorgesehen, dass die Verbindungsrohre 18 und 20 an ihren beiden Seiten bzw. Enden 26, 28 das gleiche Längenniveau aufweisen bzw. die jeweiligen dort angeordneten Öffnungen nicht voneinander beabstandet sind.

Diese Längenniveaus sind insbesondere in Längsrichtung der Verbindungsrohre bzw. der Kanäle dieser Verbindungsrohre bzw. in Strömungsrichtung gegeben, also insbesondere in der Strömungsrichtung, in welcher die Verbindungsrohre im Betrieb des Wärmetauschers von Fluid bzw. Medium durchströmt werden.

In der Gestaltung gemäß Fig. 3 ist - im Schnitt A-A ersichtlich - eine Reihe 118 von Verbindungsrohren 16, 20 vorgesehen.

Diese Reihe 118 wird von mehreren jeweils parallel angeordneten Verbindungsrohren 16, 18 bzw. Kanälen 40, 44 der Verbindungsrohre 16, 18 gebildet, die im Wesentlichen parallel ausgerichtet sind. In der Gestaltung gemäß Fig. 3 ist beispielhaft gezeigt, dass eine solche Reihe 118 aus in Breitenrichtung aufeinanderfolgenden Verbindungsrohren 16, 20 bzw. Kanälen 40, 44 bestehen kann. Die Pfeile 120, 122 deuten schematisch die Strömungsrichtung an, in der Fluid bzw. Medium die betreffenden Kanäle 40, 44 bzw. Verbindungsrohre 16, 20 im Betrieb durchströmt.

Anhand dieser Pfeile wird deutlich, dass in der Reihe 118 aufeinander folgende Kanäle 40, 44 bzw. Verbindungsrohre 16, 20 gegeben sind, die im Betrieb in entgegengesetzten Strömungsrichtungen von Fluid bzw. Medium durchströmt werden.

In der Gestaltung gemäß Fig. 3 wird diese Reihe 118 beispielhaft aus fünf Verbindungsrohren 16 bzw. fünf Kanälen 40 und fünf Verbindungsrohren 20 bzw. fünf Kanälen 44 gebildet. Diese Anzahl kann auch abweichend gestaltet sein; vorzugsweise weicht ist die Anzahl der Verbindungsrohre 16 in dieser Reihe 118 jedoch nur um eins von der Anzahl der Verbindungsrohre 20 in dieser Reihe ab, oder die Anzahl ist gleich.

In der Gestaltung gemäß Fig. 3 sind diese Kanäle beispielhaft so angeordnet, dass aufeinanderfolgend die Kanäle 40, 44 bzw. die Verbindungsrohre 16, 20 im Wechsel angeordnet sind.

Anhand der Pfeile 120, 122 kann somit an dieser beispielhaften Gestaltung erkannt werden, dass neun Wechsel der Strömungsrichtung 120, 122 in dieser Reihe 118 gegeben sind.

Es sei in diesem Zusammenhang allerdings angemerkt, dass die Anzahl der Verbindungsrohre 16, 20 bzw. Kanäle 40, 44 rein beispielhaft und schematischer Natur ist und auch größer oder kleiner sein kann.

In der Gestaltung gemäß Fig. 3 ist ferner eine zweite Reihe 124 von Verbindungsrohren 14, 18 bzw. Kanälen 38, 42 vorgesehen, bei denen jeweils aufeinanderfolgende Verbindungsrohre 14, 18 bzw. Kanäle 42, 38 gegeben sind, die in entgegengesetzten Strömungsrichtungen durchströmt werden. Die Strömungsrichtungen in denen diese Verbindungsrohre 14, 18 von Fluid bzw. Medium im Betrieb durchströmt werden, sind schematisch durch die Pfeile 126, 128 angedeutet, wobei hierzu anzumerken ist, dass aus Gründen der besseren Übersichtlichkeit lediglich ein Teil dieser Pfeile mit Bezugszeichen versehen ist.

Auch in diesem Schnitt B-B sind beispielhaft neun Wechsel der Strömungsrichtung in der Reihe 124 gegeben.

Es sei in diesem Zusammenhang allerdings angemerkt, dass auch hier selbstverständlich eine abweichende Anzahl der Kanäle 38, 42 bzw. Verbindungsrohre 14, 18 gegeben sein kann.

Die erste Kammereinrichtung 10 weist gemäß der ersten Gestaltungsform drei Kammern 130, 132, 134 auf. Die zweite Kammereinrichtung 12 weist gemäß der ersten Gestaltungsform ebenfalls drei Kammern 136, 138, 140 auf. Die Anzahl der Wechsel der Strömungsrichtung 122, 126 in der Reihe 118, die hier beispielhaft gleich neun ist, ist folglich größer als die Anzahl der Kammern 130, 132, 134, die in der ersten Kammereinrichtung 10 gegeben ist. Ferner ist die Anzahl der in der Reihe 118 gegebenen Wechsel der Strömungsrichtung, die hier beispielhaft neun ist, größer als die Anzahl der Kammern 136, 138, 140, die in der zweiten Kammereinrichtung 12 gegeben sind. Es sei allerdings angemerkt, das auch bevorzugt ist, dass die Anzahl der Verbindungsrohre 16, 20 bzw. 14, 18 in der Reihe 118, 124 so gewählt wird, dass das genannte Verhältnis nicht gegeben ist.

Die erste Kammereinrichtung 10 weist eine Trenn- bzw. Zwischenwand 142 auf, welche eine äußere Kammer 132 der ersten Kammereinrichtung 10 von einer inneren Kammer 130 der ersten Kammereinrichtung 10 trennt, sowie eine äußere Kammer 134 der ersten Kammereinrichtung 10 von der inneren Kammer 130 der ersten Kammereinrichtung 10. Die erste Kammer 130 und die zweite Kammer 132 bzw. die erste Kammer 130 und die dritte Kammer 134 sind, in Längsrichtung 46, 48, 50, 52 der Verbindungsrohre 16, 20 bzw. der Kanäle 40, 44 gesehen, voneinander beabstandet bzw. benachbart, wobei die Zwischenwand 142 - in dieser Richtung gesehen - zwischen den Kammern 130, 132 bzw. 130, 134 positioniert ist.

Die Zwischenwand 142 ist in der Gestaltung gemäß Fig. 3 so, dass sie, sowohl in Tiefenrichtung 94 als auch in Breitenrichtung 92 gesehen, gegenüberliegende Wände der ersten Kammereinrichtung 10, die hier Außenwände sind, miteinander verbindet.

Die Zwischenwand 142 ist in der Gestaltung gemäß Fig. 3 in dem Bereich, in dem sie die Trennung der Kammern 130, 132 bzw. 130, 134 bewirkt, im Wesentlichen eben gestaltet und senkrecht zu den Längsachsen 48, 52 der Kanäle 40, 44 bzw. der Verbindungsrohre 16, 20 angeordnet. An ihren außen gelegenen Endbereichen ist diese Zwischenwand 142 abgewinkelt und an die Innenkontur der jeweiligen Außenwand der ersten Kammereinrichtung 10 angepasst. Solche Trennwände 142 können auch in anderer Weise gestaltet und angeordnet sein.

Der aus Sicht der Verbindungsrohre 14, 16, 18, 20 auf der abgewandten Seite der Zwischenwand 142 angeordnete Bereich der Kammereinrichtung 10, der durch die Zwischenwand 142 von der ersten Kammer 130 der ersten Kammereinrichtung 10 separiert ist, ist durch eine durch die Linie 144 grob schematisch angedeutete weitere Zwischenwand 144 unterteilt, so dass sich die zweite Kammer 132 und die dritte Kammer 134 bilden. Die Zwischenwand 144 kontaktiert die Zwischenwand 142 und kann beispielsweise senkrecht zu dieser positioniert sein.

In entsprechender Weise, wie es in Bezug auf die Zwischenwand 142 beschrieben wurde, ist in der zweiten Kammereinrichtung 12 eine Trennwand bzw. Zwischenwand 146 eingezogen. Die Zwischenwand 146 trennt die in Richtung der Längsachsen 46, 48, 50, 52 der Verbindungsrohre 14, 16, 18, 20 bzw. der Kanäle 38, 40, 42, 44 beabstandet bzw. benachbart angeordneten Kammern der zweiten Kammereinrichtung 12, und zwar eine innere Kammer 136 von einer äußeren Kammer 138 sowie die innere Kammer 136 von einer äußeren Kammer 140.

Die erste 136 dieser Kammern der zweiten Kammereinrichtung 12 ist auf der den Verbindungsrohren 12, 14, 16, 18 bzw. der ersten Kammereinrichtung 10 zugewandten Seite der Zwischenwand 146 angeordnet, während die zweite Kammer 138 und die dritte Kammer 140 auf der abgewandten Seite dieser Zwischenwand 146 angeordnet sind.

Auf dieser abgewandten Seite dieser Zwischenwand 146 ist in entsprechender Weise, wie es in Bezug auf die weitere Zwischenwand 144 erläutert wurde, ebenfalls eine weitere Zwischenwand eingezogen, die grob schematisch durch die Linie 148 angedeutet ist.

Die Kammern 130, 136 können auch als innere Kammern bezeichnet werden, da sie auf der den Rohren 14, 16, 18, 20 zugewandten (inneren) Seite des Wärmetauschers 1 angeordnet sind, während die Kammern 132, 134, 138, 140 in entsprechender Weise als äußere Kammern bezeichnet werden können bzw. bezeichnet werden.

Gemäß der ersten Gestaltungsform ist vorgesehen, dass die Verbindungsrohre 16 und 14 jeweils eine äußere Kammer 132 bzw. 134 der ersten Kammereinrichtung 10 strömungstechnisch mit der inneren Kammer 136 der zweiten Kammereinrichtung 12 verbinden.

Dies ist so, dass die Verbindungsrohre 16 jeweils mit ihrer ersten Öffnung 56 in die dritte Kammer 132 der ersten Kammereinrichtung 10 münden und mit ihrer zweiten Öffnung 32 jeweils in die erste Kammer 136 der zweiten Kammereinrichtung 12. Die Verbindungsrohre 14 münden jeweils mit ihrer ersten Öffnung 54 in die dritte Kammer 134 der ersten Kammereinrichtung 10 und mit ihrer zweiten Öffnung 34 jeweils in die Kammer 136 der zweiten Kammereinrichtung 12.

Die Verbindungsrohre 18 und 20 erzeugen in der Gestaltung gemäß Fig. 3 eine strömungstechnische Verbindung zwischen einer inneren Kammer der ersten Kammereinrichtung 10 und einer äußeren Kammer der zweiten Kammereinrichtung 12.

Dies ist in der Gestaltung gemäß Fig. 3 so, dass die Verbindungsrohre 14 die erste Kammer 130 der ersten Kammereinrichtung 10 strömungstechnisch mit der dritten Kammer 140 der zweiten Kammereinrichtung 12 verbinden und die Verbindungsrohre 20 die Kammer 130 der ersten Kammereinrichtung 10 mit der zweiten Kammer 138 der zweiten Kammereinrichtung 12 strömungstechnisch verbinden.

In der Gestaltung gemäß den Fig. 1 bis 3 ist vorgesehen, dass der Zulauf 110 für das Medium m₁ und der Ablauf 112 für das Medium m₁ jeweils an der ersten Kammereinrichtung 10 in Bezug auf eine senkrecht zu den Längsachsen 48, 50, 52, 46 gelegene Richtung im Wesentlichen zentral bzw. symmetrisch angeordnet sind. Diese Richtung ist hier die Breitenrichtung 92.

In der Gestaltung gemäß Fig. 3 ist ferner vorgesehen, dass in entsprechender Weise der Zulauf 114 für das Medium m₃ und der Ablauf 116 für das Medium m₃ in entsprechender Weise symmetrisch bzw. zentral in Bezug auf eine senkrecht zu den Längsachsen 46, 48, 50, 52 der Verbindungsrohre in der zweiten Kammereinrichtung 12 angeordnet sind. Diese Richtung ist hier die Breitenrichtung 92.

Die Zwischenwände 142, 146 sind in der Gestaltung gemäß Fig. 3 jeweils mit Öffnungen versehen, wobei sich durch die Zwischenwand 142 bzw. deren Öffnungen die Verbindungsrohre 14, 16 erstrecken und wobei sich durch die Zwischenwand 146 bzw. deren Öffnungen die Verbindungsrohre 18, 20 erstrecken.

In der Gestaltung gemäß Fig. 3 sind die erste Kammereinrichtung und die zweite Kammereinrichtung vorzugsweise aus Teilen zusammengesetzt, die als Ziehteile und / oder Pressteile gefertigt sind oder ebene Platten darstellen.

Im Folgenden soll nun die Strömungsführung der Medien m₁ und m₃ bei der beispielhaften Gestaltung gemäß den Fig. 1 bis 3 näher erläutert werden.

Ein Medium m₁ wird durch den Zulauf 110 der äußeren Kammer 132 der ersten Kammereinrichtung 10 zugeführt und strömt durch die Verbindungsrohre 16 bzw. deren Kanäle 40 in die innere Kammer 136 der zweiten Kammereinrichtung 12 und wird dort in der Tiefe bzw. in Tiefenrichtung 94 umgelenkt, was schematisch durch die Pfeile 150 angedeutet ist, so dass das Medium m₁ durch die erste Kammer 136 der zweiten Kammereinrichtung 12 in die Verbindungsrohre 14 strömt, durch welche es in die äußere Kammer 134 der ersten Kammereinrichtung 10 strömt, von welcher es über den Ablauf 112 aus dieser austritt.

Das Medium m₃ strömt über den Zulauf 114 in die äußere Kammer 138 der zweiten Kammereinrichtung 12, von welcher es durch die Verbindungsrohre 20 bzw. deren Kanäle 44 in die innere Kammer 130 der ersten Kammereinrichtung 10 strömt, in welcher es dann zu den Verbindungsrohren 18 strömt, was durch die Pfeile 152 schematisch angedeutet ist. Dieses Medium m₃ strömt dann durch die Verbindungsrohre 18 bzw. deren Kanäle 42 in die äußere Kammer 140 der zweiten Kammereinrichtung 12, aus welcher es durch den Ablauf 116 austritt.

Gemäß der ersten Gestaltungsform werden folglich die Medien m₁ und m₃ jeweils in der Tiefe in den inneren Kammern 130, 136 umgelenkt.

Wie angesprochen, können die Medien m₁ und m₂ unterschiedliche Medien sein oder dieselben; im letztgenannten Fall kann der Wärmetauscher 1 beispielsweise ein innerer Wärmetauscher sein bzw. als innerer Wärmetauscher eingesetzt werden, bei dem im jeweiligen Wärmetauschbereich unterschiedliche Temperaturen und gegebenenfalls unterschiedliche Druckverhältnisse gegeben sind.

Der Wärmetauscher 1 gemäß der ersten Gestaltungsform kann beispielsweise ein innerer Wärmetauscher sein, der im CO₂-Kreislauf betrieben wird, bzw. als solcher verwendet werden. Es kann also insbesondere das Medium m₁ sowie das Medium m₃ CO₂ sein, wobei die Medien m₁ sowie m₃ Bestandteils des selben Fluidkreislaufs sind. Es kann dabei beispielsweise das aus dem Ablauf 116 aus der zweiten Kammereinrichtung 12 ausströmende Medium zum Zulauf 110 geleitet werden, so dass es über diesen in die erste Kammereinrichtung 10 einströmt, und das aus dem Ablauf 112 aus der ersten Kammereinrichtung 10 ausströmende Medium zum Zulauf 114 geleitet werden, so dass es über diesen in die zweite Kammereinrichtung einströmt. Dabei kann beispielsweise vorgesehen sein, dass dieser CO₂ zwischen dem Ablauf 116 und dem Zulauf 110 und / oder zwischen dem Ablauf 112 und dem Zulauf 114 durch einen Kondensator geleitet wird, und dieser CO₂ dann in den Verbindungsrohren 16 ein anderes Temperatur- und / oder Druckniveau aufweist als in den Verbindungsrohren 20, bzw. in den Verbindungsrohren 14 ein anderes Temperatur- und / oder Druckniveau aufweist als in den Verbindungsrohren 18. Es kann dann beispielsweise in den jeweiligen Kontaktbereichen zwischen den Verbindungsrohren 16 und 20 bzw. in den jeweiligen Kontaktbereichen zwischen den Verbindungsrohren 14 und 18 eine Wärmeübertragung zwischen dem in den Verbindungsrohren 16 und 20 bzw. dem in den Verbindungsrohren 14 und 18 strömenden Medium stattfinden.

Es kann vorgesehen sein, dass das Medium m₁ und / oder das Medium m₂ ein Kältemittel, insbesondere CO₂ sind, und zwar insbesondere auch bei einer Gestaltung mit einem Fluidkreislauf.

Eine Gestaltung mit einer Rohr an Rohr Ausführung bzw. die Gestaltung gemäß den Fig. 1 bis 3 ermöglicht einen direkten Kontakt von zwei Medien bzw. der Verbindungsrohre durch die diese beiden Medien jeweils strömen sowie eine kompakte Bauart.

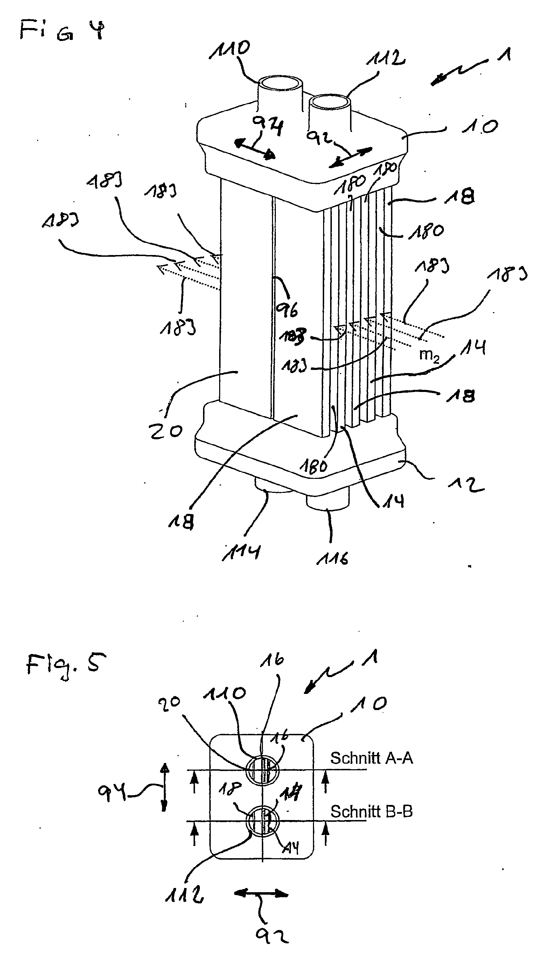

Die Fig. 4 bis 6 zeigen eine zweite, beispielhafte Gestaltungsform in schematischer Darstellung.

Im Folgenden sollen im wesentlichen die Unterschiede zu der anhand der Fig. 1 bis 3 dargestellten Gestaltung erläutert werden, so dass im übrigen auf die dortigen Ausführungen verwiesen wird.

Fig. 4 zeigt eine dreidimensionale Ansicht einer zweiten beispielhaften Gestaltungsform in schematischer Darstellung.

Im Gegensatz zu der Gestaltung gemäß den Fig. 1 bis 3 sind in der Gestaltung gemäß Fig. 4 die Verbindungsrohre 14, 18, einerseits, bzw. die Verbindungsrohre 16, 20, andererseits, nicht mit direktem Kontakt aneinander, und zwar insbesondere in Breitenrichtung gesehen. Gemäß der zweiten Gestaltungsform ist vielmehr vorgesehen, dass zwischen den benachbarten Rohren 14, 18 bzw. 16, 20 jeweils Zwischenräume 180 bzw. 182 gegeben sind.

In diesen bzw. durch diese Zwischenräume 180, 182 strömt im Betrieb ein Fluid bzw. ein Medium m₂. Es kann beispielsweise vorgesehen sein, dass dies nicht kanalisiert ist. Es kann also beispielsweise vorgesehen sein, dass Luft durch diese Zwischenräume 180, 182 im Betrieb strömt, ohne dass besondere zusätzliche Kanäle für diese Luft gegeben sind. Beispielsweise kann der Wärmetauscher 1 in einem Kraftfahrzeug verbaut sein, so dass die entsprechende Luft aufgrund der Fahrgeschwindigkeit des Fahrzeugs relativ zu dem Wärmetauscher 1 bewegt wird. Es kann auch sein, dass ein Lüfter vorgesehen ist, der solche Luft in bzw. durch die Zwischenräume 180, 182 bläst.

Hierbei kann ein Wärmeaustausch zwischen dieser Luft und dem in den Kanälen 14 bzw. 18 bzw. 16 bzw. 20 strömenden Medium stattfinden.

Gemäß der zweiten Gestaltungsform berühren sich die einzelnen Verbindungsrohre 14, 16, 18, 20 also nicht direkt. In die Zwischenräume 180, 182 können auch Rippen eingesetzt sein, welche beispielsweise eine Art Kanalisierung des strömenden Mediums bewirken, wobei sich diese Kanäle vorzugsweise nicht außerhalb des Wärmetauschers 1 fortsetzen. Solche Rippen können allerdings auch weggelassen sein. Weiter kann in einer Abwandlung vorgesehen sein, dass sich durch bzw. in diese Zwischenräume 180, 182 weitere - in den Fig. 4 bis 6 nicht dargestellte - Verbindungsrohre erstrecken, die eine dritte mit einer vierten Kammereinrichtung strömungstechnisch verbinden, wobei die dritte und die vierte Kammereinrichtung von der ersten und der zweiten Kammereinrichtung verschieden sind, und voneinander beabstandet sind. Solche zusätzlichen Verbindungsrohre können quer bzw. unter einem Winkel zu den Verbindungsrohren 14, 16, 18, 20 angeordnet sein; und mit diesen in Kontakt stehen.

Ein Unterschied der Gestaltung gemäß Fig. 1 und Fig. 4 besteht ferner darin, dass die Anzahl der Verbindungsrohre 14, 16, 18, 20 unterschiedlich ist und, in Fig. 4 dem Betrachter zugewandt, die Rohre 18, 20 anstelle der Rohre 14, 16 angeordnet sind. Die Anzahl der Rohre kann allerdings, wie bereits mehrfach erwähnt, ohnehin variiert werden, so dass auch bei dieser Gestaltung Rohre 14, 16 betrachterseitig davor gesetzt sein können. Die in den Figuren gezeigten Anzahlen dieser Rohre können in bevorzugter Weise so sein, wie es jeweils in den Figuren gezeigt ist. In der Kraftfahrzeuganwendung ist es allerdings besonders bevorzugt, mehrere Rohre in der entsprechenden Anordnung vorzusehen, was aus Gründen der Übersichtlichkeit nicht dargestellt ist.

Gemäß der zweiten Gestaltungsform ist das - gegenüber der ersten Gestaltungsform zusätzliche bzw. hinzukommende - dritte Medium m₂ im Betrieb quer zur Strömungsrichtung der beiden anderen Medien m₁ und m₃ strömt. Dieses "quer" bezieht sich insbesondere auf die Strömungsrichtung 120, 122, 126, 128 der Medien m₁ und m₃ in den Verbindungsrohren 14, 16, 18, 20. In der Gestaltung gemäß Fig. 4 ist dies so, dass das Medium m₂ senkrecht zu den Strömungsrichtungen 120, 122, 126, 128 strömt. Der Winkel kann aber auch ein anderer sein. Die Strömungsrichtung des Mediums m₂ ist in Fig. 4 schematisch durch die Pfeile 183 angedeutet.

Fig. 5 zeigt eine Draufsicht auf die Gestaltung gemäß Fig. 4.

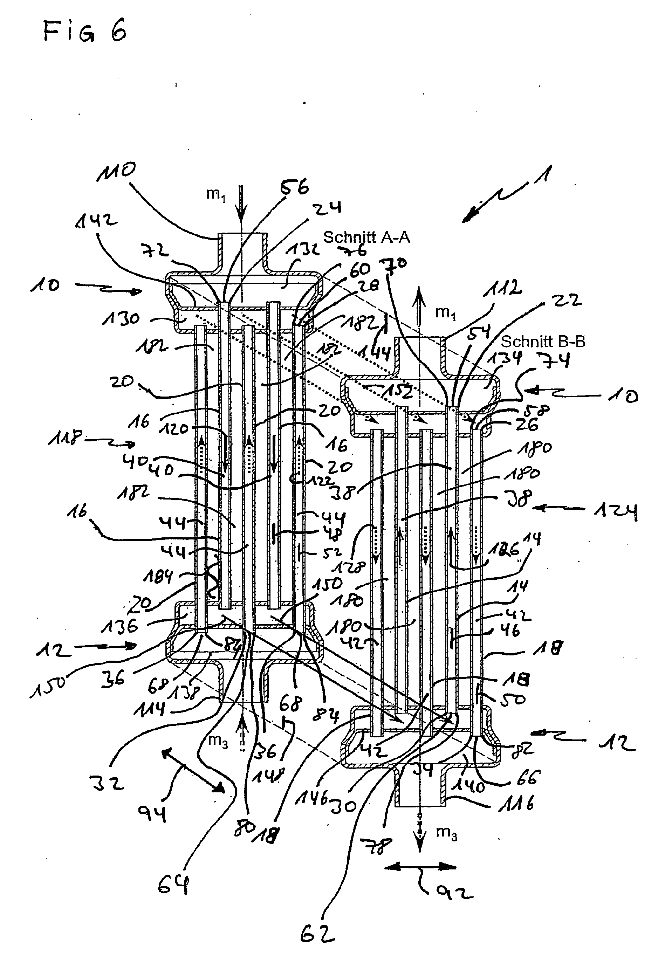

Fig. 6 zeigt Schnittansichten A-A und B-B der Gestaltung gemäß Fig. 5.

In der Gestaltung gemäß Fig. 6 ist deutlich zu erkennen, dass die Verbindungsrohre 16, 20 bzw. 14, 18 nicht direkt mit Kontakt aneinander anliegen. In den Zwischenräumen 180, 182 können beispielsweise auch, wie dies durch das Bezugszeichen 184 schematisch angedeutet ist, Rippen vorgesehen sein, wie gewellte Rippen. Insbesondere kann vorgesehen sein, dass in jedem der Zwischenräume 180, 182 eine oder mehrer Rippen bzw. Rippenplatten 184 vorgesehen sind. Ebenso sind in den Zwischenräumen Rohre einsetzbar, die beispielsweise senkrecht zur Strömungsrichtung der Rohre 14, 16, 18, 20 ausgerichtet sind.

Wie in der Gestaltung gemäß den Fig. 1 bis 3 sind in der Gestaltung gemäß den Fig. 4 bis 6 die Verbindungsrohre 14, 16, 18, 20 jeweils gleich lang, wobei die Verbindungsrohre 14 und 16 an beiden Enden das gleiche Längenniveau aufweisen und wobei die Verbindungsrohre 18 und 20 an beiden Enden das gleiche Längenniveau aufweisen.

In der Gestaltung gemäß Fig. 4 bis 6 sind die Verbindungsrohre 16 gegenüber den Verbindungsrohren 20 in ihrer Längsrichtung 48, 52 gesehen, - wie auch in Fig. 1 bis 3 gezeigt - zueinander versetzt angeordnet, ebenso wie die Verbindungsrohre 14 und 18, in ihrer Längsrichtung 46, 50 gesehen, versetzt zueinander angeordnet sind.

Die Strömungsführung bei dem Wärmetauscher gemäß der zweiten Gestaltungsform ist im Wesentlichen so, wie es anhand der Fig. 1 bis 3 erläutert wurde, wobei anzumerken ist, dass gemäß der zweiten Gestaltungsform, wie erwähnt, ein drittes Medium hinzukommt, so dass hier ein Wärmeübertragung in Bezug auf drei Medien stattfindet.

Es kann beispielsweise vorgesehen sein, dass das Medium m₁ ein Kühlmittel, das Medium m₃ Öl und das Medium m₂ Luft ist.

Die Medien m₁ und m₃ werden gemäß der zweiten Gestaltungsform, wie auch gemäß der ersten, in der Tiefe in den jeweiligen inneren Kammern 130, 136 umgelenkt.

Die Gestaltung gemäß der zweiten Gestaltungsform kann beispielsweise als bzw. für einen Luft-Öl-Kühlmittel-Wärmeübertragung verwendet werden.

Die zweite Gestaltungsform ist ein Beispiel für eine Gestaltung, bei der mehr als zwei Medien an Wärmeübertragungsprozessen beteiligt sein können bzw. sind.

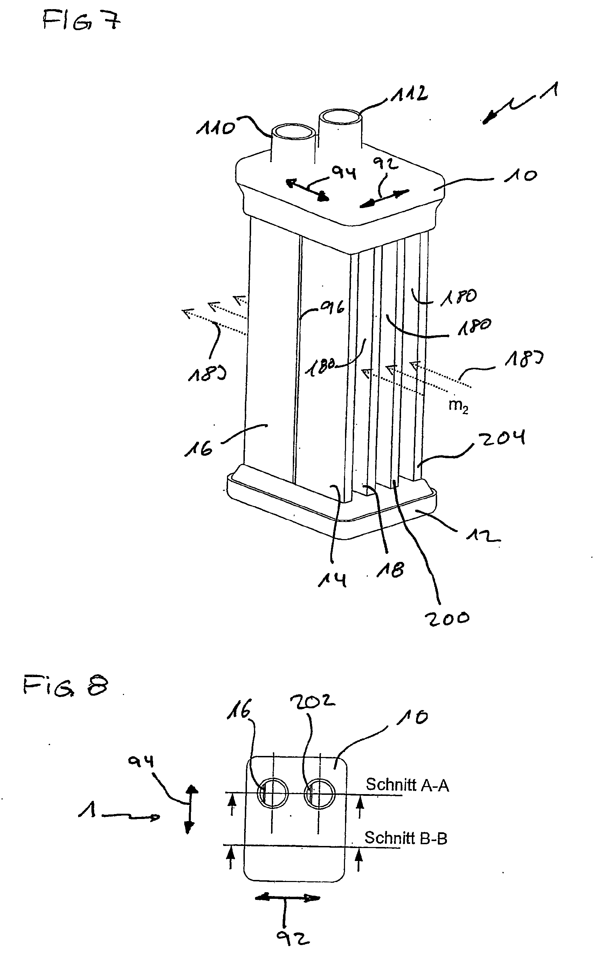

Die Fig. 7 bis 9 zeigen eine dritte, beispielhafte Gestaltungsform in schematischer Darstellung.

Bezugnehmend auf die Ausführungen zu den Fig. 4 bis 6 sollen im Folgenden im wesentlichen die diesbezüglichen Unterschiede der Gestaltung gemäß den Fig. 7 bis 9 erläutert werden, so dass im übrigen auf die dortigen Ausführungen verwiesen wird.

Fig. 7 zeigt eine dreidimensionale schematische Ansicht der dritten Gestaltungsform.

Im Gegensatz zu der Gestaltung gemäß den Fig. 4 bis 6 sind in der Gestaltung gemäß den Fig. 7 bis 9 nicht nur Verbindungsrohre 14, 16, 18, 20 vorgesehen, sondern zusätzlich Verbindungsrohre 200, 202, 204, 206, was im Folgenden noch anhand der Fig. 7 bis 9 näher erläutert werden wird.

Ferner sind in der Gestaltung gemäß Fig. 7 bis 9 im Gegensatz zur Gestaltung gemäß Fig. 4 bis 6 der Zulauf 110 und der Ablauf 112 bzw. die entsprechenden Stutzen nicht in Bezug auf die Breite 92 im Wesentlichen mittig angeordnet. In der Gestaltung gemäß Fig. 7 sind der Zulauf 110 und der Ablauf 112 für das Medium m₁ im Wesentlichen auf unterschiedlichen Seiten einer senkrecht zur Breitenrichtung 92 stehenden Mittenebene der ersten Kammereinrichtung 10 angeordnet. Ferner sind der Zulauf 110 und der Ablauf 112 asymmetrisch in Bezug auf die Tiefenrichtung 94 an dieser ersten Kammereinrichtung positioniert.

Fig. 8 zeigt eine Draufsicht auf die Gestaltung gemäß Fig. 7.

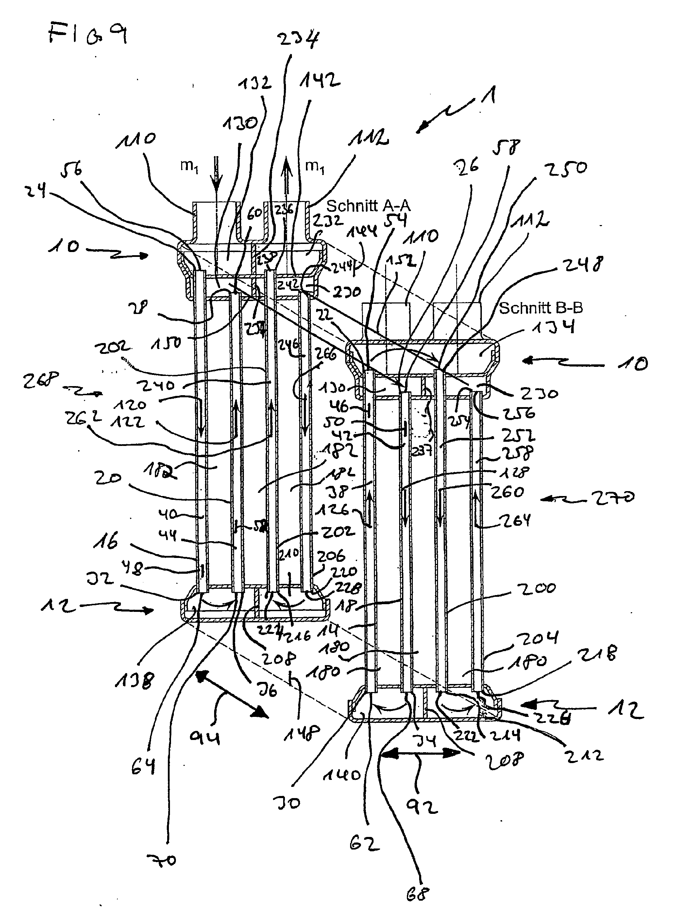

Fig. 9 zeigt Schnittansichten A-A und B-B der Gestaltung gemäß Fig. 8.

Wie auch Fig. 7, kann Fig. 9 entnommen werden, dass der Wärmetauscher 1 gemäß den Fig. 7 bis 9 im Gegensatz zur Gestaltung gemäß den Fig. 4 bis 6 nicht von einem Medium m₃ durchströmt wird. Mit anderen Worten, die Verbindungsrohre des Wärmetauschers 1, die die erste Kammereinrichtung 10 mit der zweiten Kammereinrichtung 12 strömungstechnisch verbinden und parallel zueinander angeordnet sind, werden gemäß den Fig. 7 bis 9 nur von dem Medium m₁ durchströmt. Folglich fehlt bei dieser Gestaltung gegenüber der gemäß den Fig. 4 bis 6 der Zulauf 114 sowie der Ablauf 116. In dieser Gestaltung sind allerdings auch zwischen den Verbindungsrohren 14, 16, 18, 20, 200, 202, 204, 206 Zwischenräume 180 gegeben, die von einem Medium m₂, wie oben dargestellt, durchströmt werden.

Die Verbindungsrohre 200, 202, 204, 206 können so gestaltet bzw. geformt sein, wie es oben in Bezug auf die Verbindungsrohre 14, 16, 18, 20 dargestellt wurde.

Im Gegensatz zu der Gestaltung gemäß Fig. 6 ist in der Gestaltung gemäß Fig. 9 nicht eine Trennwand 146 vorgesehen, welche zwei in Längsrichtung der Verbindungsrohre bzw. der Kanäle benachbarte Kammern der zweiten Kammereinrichtung 12 voneinander trennt. Stattdessen ist in der Gestaltung gemäß Fig. 9 in der zweiten Kammereinrichtung eine Trenn- bzw. Zwischenwand 208 vorgesehen, welche in senkrecht zu den Rohrlängsachsen gelegener Richtung, die hier der Breitenrichtung 92 entspricht, eine Kammer 138 der zweiten Kammereinrichtung 12 von einer Kammer 210 dieser zweiten Kammereinrichtung 12 trennt bzw. eine Kammer 140 der zweiten Kammereinrichtung 12 von einer Kammer 212 dieser zweiten Kammereinrichtung.

Die Zwischenwand 148 ist allerdings entsprechend der Gestaltung gemäß Figur 6 auch in der Gestaltung gemäß Fig. 9 gegeben.

Da sich somit die Zwischenwände 148 und 208 kreuzen, kann es sinnvoll sein, zumindest eine dieser Zwischenwände zweiteilig zu gestalten.

Dies bezieht sich im übrigen auch auf sämtliche andere Gestaltungsformen, bei denen sich Zwischen- bzw. Trennwände kreuzen.

In der Gestaltung gemäß Fig. 9 ist die Zwischenwand 208 im Wesentlichen senkrecht zur Zwischenwand 148 gelegen, wobei die Zwischenwände 148, 208 jeweils eben gestaltet sind. Diese Zwischenwände 148, 208 können allerdings auch uneben gestaltet sein und/oder unter einem anderen Winkel zueinander angeordnet sein.

Die am jeweiligen zweiten Ende 30, 32, 34, 36, 214, 216, 218, 220 der jeweiligen Verbindungsrohre 14, 18, 16, 20, 200, 202, 204, 206 gelegenen zweiten Öffnungen 62, 64, 66, 68, 222, 224, 226, 228 sind in der Gestaltung gemäß Fig. 9 in Längsrichtung der Verbindungsrohre bzw. Kanäle gesehen, nicht voneinander beabstandet.

Die Längenniveaus an den jeweiligen zweiten Ende 30, 32, 34, 36, 214, 216, 218, 220 der Verbindungsrohre 14, 18, 16, 20, 200, 202, 204, 206 sind also in der Gestaltung gemäß Fig. 9 jeweils gleich.

Die erste Kammereinrichtung 10 der Gestaltung gemäß Fig. 9 ist anders gestaltet, als die in der Gestaltung gemäß Fig. 6 und weist fünf Kammern 130, 132, 134, 230, 232 auf.

Wie in der Gestaltung gemäß Fig. 6 ist auch in der Gestaltung gemäß Fig. 9 eine Zwischenwand 142 der ersten Kammereinrichtung 10 vorgesehen, welche quer zu den Längsachsen 46, 48, 50, 52 der Verbindungsrohre bzw. - kanäle ausgerichtet ist, und in dieser Richtung gesehen in der ersten Kammereinrichtung 10 die innere Kammer 130 von der äußeren Kammer 132, bzw. die innere Kammern 230 von der äußeren Kammer 232, bzw. die innere Kammer 130 von der äußeren Kammer 134 bzw. die innere Kammern 230 von der äußeren Kammer 134 trennt. In der Gestaltung gemäß Fig. 9 erstreckt sich diese Trennwand 142 ebenfalls an einer bestimmten Stelle in Breitenrichtung 92 sowie in Tiefenrichtung 94 über den gesamten Innenraum der ersten Kammereinrichtung 10.

Wie in der Gestaltung gemäß Fig. 6 ist in der Gestaltung gemäß Fig. 9 ebenfalls eine Trennwand 144 vorgesehen, die in senkrecht zur Längsachse 46, 48, 50, 52 der Kanäle bzw. Verbindungsrohre gesehener Richtung auf der aus Sicht der den Verbindungsrohren bzw. der zweiten Kammereinrichtung 12 abgewandten Seite der Zwischenwand 142 den dortigen Kammerbereich unterteilt, so dass in der ersten Kammereinrichtung 10 die äußere Kammer 132 von der äußeren Kammer 134 und die äußere Kammer 232 von der äußeren Kammer 134 mittels dieser Zwischenwand 144 getrennt wird. Die Zwischenwand 144 kann beispielsweise senkrecht zur Zwischenwand 142 ausgerichtet sein.

Auf ihren einen Seite wird die Zwischenwand 144 von einer weiteren, in der Gestaltung gemäß Fig. 6 nicht gegebenen, Zwischenwand 234 kontaktiert, die auf dieser Seite der Zwischenwand 144 in der ersten Kammereinrichtung 10 die äußere Kammer 132 von der äußeren Kammer 232 trennt. Es kann beispielsweise vorgesehen sein, dass die Zwischenwand 234 senkrecht zur Zwischenwand 142 und senkrecht zur Zwischenwand 144 ausgerichtet ist. Zwischen diesen Zwischenwänden können auch Winkel gegeben sein, die von 90 Grad abweichen.

Ferner ist in der Kammereinrichtung 10 gemäß Fig. 9 - in Abweichung von der Gestaltung gemäß Fig. 6 - auf der der zweiten Kammereinrichtung 12 zugewandten Seite der Zwischenwand 142 eine Zwischenwand 136 vorgesehen, welche die Zwischenwand 142 kontaktiert. In der Gestaltung gemäß Fig. 9 ist die Zwischenwand 237 im Wesentlichen senkrecht zur Zwischenwand 142 angeordnet. Sie kann aber auch unter einem von 90 Grad abweichenden Winkel angeordnet sein. Mittels der Zwischenwand 237 wird die innere Kammer 130 von der inneren Kammer 230 der ersten Kammereinrichtung 10 getrennt.

Die Verbindungsrohre 14, 16, 18, 20, 200, 202, 204, 206 sind in der Gestaltung gemäß Fig. 9 wie folgt angeordnet:

Das Verbindungsrohr 16 erstreckt sich mit seinem ersten Ende 24 in die äußere Kammer 132, so dass die erste Öffnung 56 des Verbindungsrohres 16 eine strömungstechnische Verbindung zwischen der äußeren Kammer 132 der ersten Kammereinrichtung 10 und dem Kanal 40 des Verbindungsrohres 16 erzeugt.

Das Verbindungsrohr 20 erstreckt sich mit seinem ersten Ende 28 in die innere Kammer 130 der ersten Kammereinrichtung 10, so dass die erste Öffnung 60 des Verbindungsrohres 20 eine strömungstechnische Verbindung zwischen der Kammer 130 und dem Kanal 44 des Verbindungsrohres 20 erzeugt.

Das erste Ende 236 des Verbindungsrohres 202 erstreckt sich in die äußere Kammer 232 der ersten Kammereinrichtung 10, so dass über die erste Öffnung 238 des Verbindungsrohres 202 eine strömungstechnische Verbindung zwischen der Kammer 232 und dem in dem Verbindungsrohr 202 angeordneten Kanal 240 erzeugt wird.

Das erste Ende 242 des Verbindungsrohres 206 erstreckt sich in die innere Kammer 230 der ersten Kammereinrichtung 10, so dass über die erste Öffnung 244 des Verbindungsrohres 206 eine strömungstechnische Verbindung zwischen der Kammer 230 mit dem in dem Verbindungsrohr 206 angeordneten Kanal 246 erzeugt wird.

Die Verbindungsrohre 16, 20 erstrecken sich die zweiten Enden 32 bzw. 36 in die Kammer 138 der zweiten Kammereinrichtung 12, so dass , so dass die zweite Öffnung 64 des Verbindungsrohres 16 eine strömungstechnische Verbindung zwischen der Kammer 138 der zweiten Kammereinrichtung 12 und dem Kanal 40 des Verbindungsrohres 16 erzeugt und die zweite Öffnung 68 des Verbindungsrohres 20 eine strömungstechnische Verbindung zwischen der Kammer 138 und dem Kanal 44 des Verbindungsrohres 20 erzeugt.

Das zweite Ende 216 bzw. 220 des Verbindungsrohres 202 bzw. 206 erstreckt sich in die Kammer 210 der zweiten Kammereinrichtung 12, so dass über die zweite Öffnung 224 des Verbindungsrohres 202 eine strömungstechnische Verbindung zwischen der Kammer 210 und dem Kanal 240 des Verbindungsrohres 202 erzeugt wird, und über die zweite Öffnung 228 des Verbindungsrohres 206 eine strömungstechnische Verbindung zwischen der Kammer 210 und dem Kanal 246 des Verbindungsrohres 206 erzeugt wird.

Es wird also mittels des Verbindungsrohres 16 eine strömungstechnische Verbindung zwischen der äußeren Kammer 232 der ersten Kammereinrichtung 10 und der Kammer 138 der zweiten Kammereinrichtung 12, mittels des Verbindungsrohres 20 eine strömungstechnische Verbindung zwischen der inneren Kammer 130 ersten Kammereinrichtung 10 und der Kammer 138 zweiten Kammereinrichtung 12, mittels des Verbindungsrohres 202 eine strömungstechnische Verbindung zwischen der äußeren Kammer 232 der ersten Kammereinrichtung 10 und der Kammer 210 der zweiten Kammereinrichtung 12 und mittels des Verbindungsrohres 206 eine strömungstechnische Verbindung zwischen der inneren Kammer 230 der ersten Kammereinrichtung 10 und der Kammer 210 der zweiten Kammereinrichtung 12 erzeugt.

In entsprechender Weise wird mittels des Verbindungsrohres 14 eine strömungstechnische Verbindung zwischen der äußeren Kammer 134 der ersten Kammereinrichtung 10 und der Kammer 140 der zweiten Kammereinrichtung 12 erzeugt, mittels des Verbindungsrohres 18 eine strömungstechnische Verbindung zwischen der inneren Kammer 130 der ersten Kammereinrichtung 10 und der Kammer 140 der zweiten Kammereinrichtung 12, mittels des Verbindungsrohres 200 eine strömungstechnische Verbindung zwischen der äußeren Kammer 134 der ersten Kammereinrichtung 10 und der Kammer 212 der zweiten Kammereinrichtung 12, und mittels des Verbindungsrohres 204 eine strömungstechnische Verbindung zwischen der inneren Kammer 230 der ersten Kammereinrichtung 10 und der Kammer 212 der zweiten Kammereinrichtung 12. Bezogen auf das Verbindungsrohr 200 ist das erste Ende mit dem Bezugszeichen 248, die erste Öffnung mit dem Bezugszeichen 250, der Kanal im Verbindungsrohr mit dem mit dem Bezugszeichen 252, das zweite Ende mit dem Bezugszeichen 214 und die zweite Öffnung mit dem Bezugszeichen 222 bezeichnet. Bezogen auf das Verbindungsrohr 204 ist das erste Ende mit dem Bezugszeichen 254, die erste Öffnung mit dem Bezugszeichen 256, der Kanal im Verbindungsrohr mit dem Bezugszeichen 258, das zweite Ende mit dem Bezugszeichen 218 und die zweite Öffnung mit dem Bezugszeichen 226 versehen.

In der Gestaltung gemäß Fig. 9 sind die Längenniveaus der Verbindungsrohre 16, 202, 14 und 200 im Bereich der entsprechenden ersten Enden 24, 236, 22, 248 gleich. Diese Verbindungsrohre 16, 202, 14 und 200 weisen in der Gestaltung gemäß Fig. 9 ferner die gleiche Länge auf.

Die Längenniveaus der Verbindungsrohre 16, 202, 14, 200 unterscheiden sich im Bereich der ersten Enden in der Gestaltung gemäß Fig. 9 allerdings von den Längenniveaus der Verbindungsrohre 20, 206, 18, 24. Im Bereich der ersten Enden 28, 242, 26, 254 sind die Längenniveaus der Verbindungsrohre 20, 206, 18, 204 gleich.

Dementsprechend sind die ersten Öffnungen 60, 244, 58, 256 der Verbindungsrohre 20, 206, 18, 204 in der Gestaltung gemäß Fig. 9, in Längsrichtung der Verbindungsrohre bzw. Kanäle gesehen, jeweils beabstandet von den ersten Öffnungen 56, 238, 54, 250 der Verbindungsrohre 16, 202, 14, 200.

Die Strömungsrichtungen, die im Betrieb in den Kanälen 38, 40, 42, 44, 252, 240, 258 und 246 gegeben ist, sind in Fig. 9 durch die Pfeile 126, 120, 128, 122, 260, 262, 264 und 266 schematisch angedeutet. Dem kann entnommen werden, dass die Anzahl der Strömungswechsel, die in der von den aufeinanderfolgenden Kanälen 40, 44, 240 und 246 gebildeten Reihe 268 gegeben ist, sowie die Anzahl der Strömungswechsel in der Reihe 270, die von den aufeinanderfolgenden Kanälen 38, 42, 252 und 258 gebildet wird, nicht größer oder gleich der Anzahl der Kammern ist, die in der ersten 10 bzw. zweiten Kammereinrichtung 12 gebildet werden.

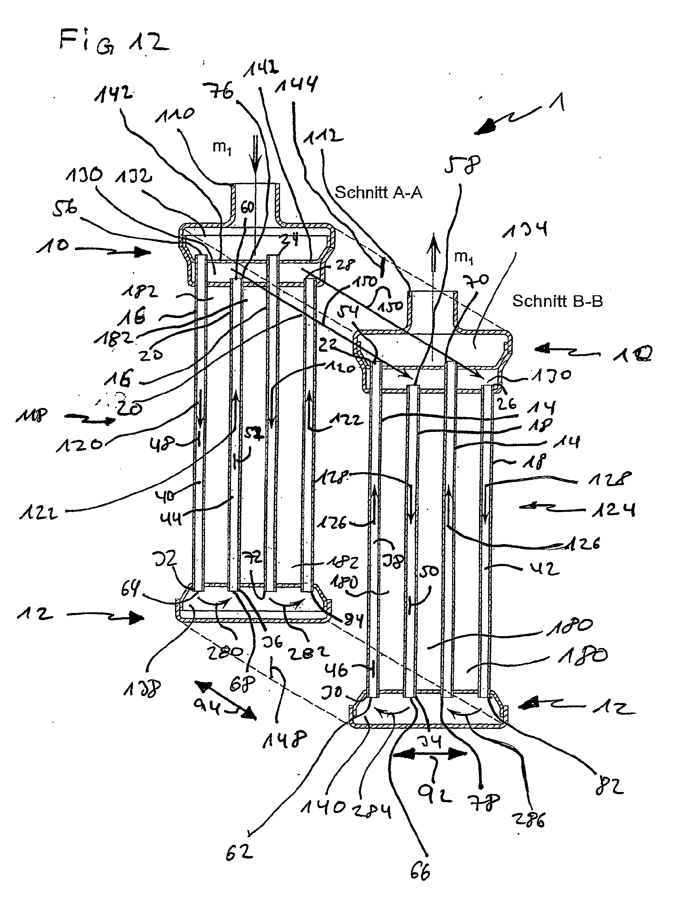

Da Fig. 9 allerdings nur schematischer Natur ist, können in der Reihe 268 und/oder der Reihe 270 auch mehrere Verbindungsrohrpaare 16, 20 bzw. 202, 206 bzw. 14, 18 bzw. 200, 204 jeweils aufeinanderfolgend gegeben sein. Anstelle dieser Paare kann also beispielsweise eine Struktur gegeben sein, die im Schnitt A-A oder B-B der Fig. 12 gezeigt ist, wobei auch mehr als zwei Paare gegeben sein können. Auf diese Art und Weise kann die Anzahl der Wechsel der Strömungsrichtungen aufeinanderfolgender Kanäle in der Reihe 268 bzw. der 270 bei gleichbleibender Anzahl der Kammern in der ersten Kammereinrichtung 10 sowie gleichbleibender Anzahl in der zweiten Kammereinrichtung 12 erhöht werden, so dass auch in der Gestaltung gemäß Fig. 9 die Anzahl der in der Reihe 268 und/oder der Reihe 270 gegebenen Wechsel der Strömungsrichtung größer oder gleich der Anzahl der Kammern in der ersten Kammereinrichtung 10 und der Anzahl der Kammern in der zweiten Kammereinrichtung 12 sein kann.

In der Gestaltung gemäß Fig. 9 können allerdings auch einzelne oder alle der dort gezeigten Verbindungsrohre als Rohrbündel gestaltet sein, so dass in der Reihe 268 und/oder der Reihe 270 mehrere der dort gezeigten Verbindungsrohre jeweils nebeneinander angeordnet sind.

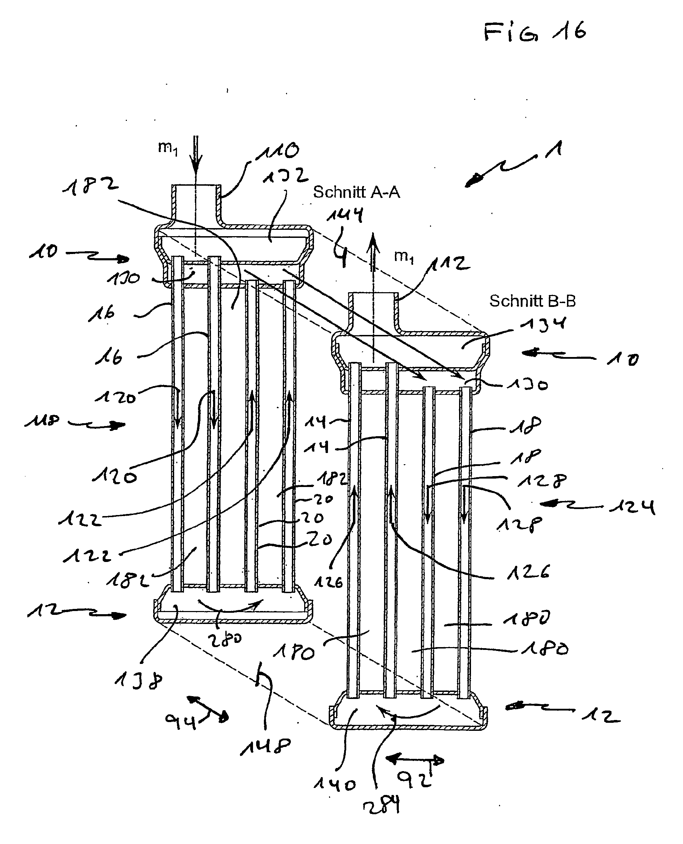

Die in gleicher Richtung durchströmten Verbindungsrohre können sich dabei berühren oder mit Abstand zueinander angeordnet sein. Ein Beispiel für eine bündelweise Anordnung, bei dem die Bündel aus jeweils zwei Rohren bestehen, ist - allerdings für anders gestaltete erste und zweite Kammereinrichtungen - in der Fig. 16 gezeigt.

Im Betrieb ist die Strömungsführung für das Medium m₁ in der Gestaltung gemäß Fig. 9 wie folgt:

Das Medium m₁ strömt über den Zulauf 110 in die äußere Kammer 132 der ersten Kammereinrichtung 10 und von dort über das Verbindungsrohr 16 in die Kammer 138 der zweiten Kammereinrichtung 12, in welcher es umgelenkt wird, so dass das Medium m₁ anschließend über das Verbindungsrohr 20 in die innere Kammer 130 der ersten Kammereinrichtung 10 strömt, in welcher es so umgelenkt wird (vgl. Pfeil 150), dass es anschließend durch das Verbindungsrohr 18 in die Kammer 140 der zweiten Kammereinrichtung 12 strömt, in welcher es so umgelenkt wird, dass es anschließend durch das Verbindungsrohr 14 in die äußere Kammer 134 der ersten Kammereinrichtung 10 strömt. In der Kammer 134 wird das Medium m₁ so umgelenkt, dass es anschließend über das Verbindungsrohr 200 in die Kammer 212 der zweiten Kammereinrichtung 12 strömt. In der Kammer 212 wird das Medium m₁ so umgelenkt, dass es anschließend durch das Verbindungsrohr 204 in die innere Kammer 230 der ersten Kammereinrichtung 10 strömt, in welcher das Medium m₁ zum Verbindungsrohr 206 umgelenkt wird (vgl. Pfeil 152), durch welches es anschließend in die Kammer 210 der zweiten Kammereinrichtung 12 strömt. In der Kammer 210 wird das Medium m₁ so umgelenkt, dass es anschließend durch das Verbindungsrohr 202 in die äußere Kammer 232 der ersten Kammereinrichtung 10 strömt, welche es durch den Ablauf 112 verlässt. Im Wesentlichen senkrecht zur Bildebene der Fig. 9 strömt ferner durch die Zwischenräume 180, 182 ein weiteres Medium m₂, wie beispielsweise Luft.

In der Gestaltung gemäß Fig. 9 bis 13 ist insbesondere vorgesehen, dass die Verbindungsrohre 14, 16, 18, 20, 200, 202, 204, 206 bzw. die Flachrohre nur von einem Medium m₁ durchströmt werden. Die zweite Kammereinrichtung 12 bzw. die 138, 210, 140, 212 Kammern der zweiten Kammereinrichtung 12 oder sämtliche Kammern der zweiten Kammereinrichtung 12 werden dabei zur Umlenkung in der Breite bzw. in Breitenrichtung 92 genutzt. Die oberen inneren Kammern 130, 230 bzw. die inneren Kammern 130, 230 der ersten Kammereinrichtung 10 oder sämtliche inneren Kammern der ersten Kammereinrichtung 10 werden zur Umlenkung in der Tiefe bzw. Tiefenrichtung 94 genutzt. Die obere äußere Kammer dient zur "Übergabe" an die nächste Verschaltungsfolge. Ein Rohr kann auch ein Rohrbündel sein.

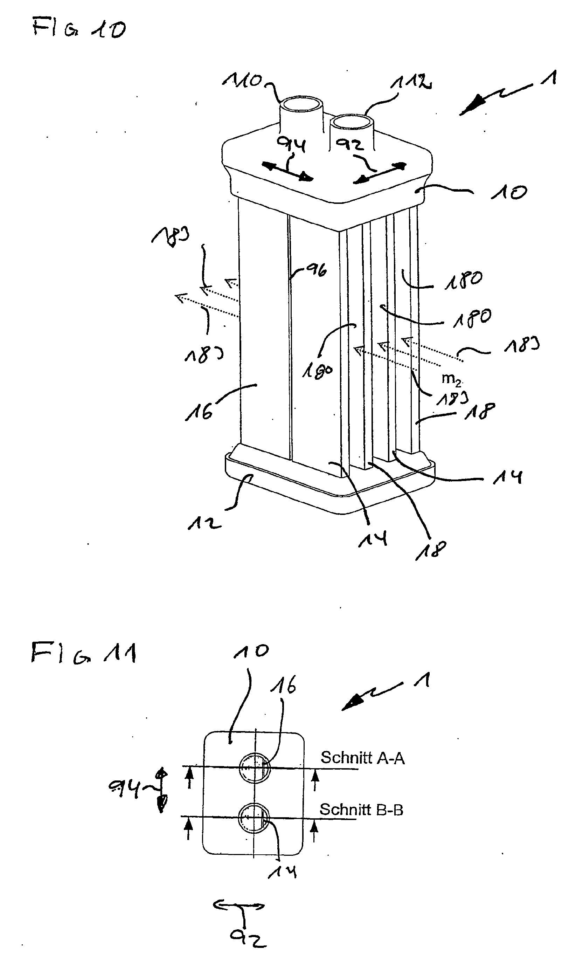

Die Figuren 10 bis 13 zeigen eine vierte beispielhafte Gestaltungsform in schematischer Darstellung.

Im Folgenden sollen insbesondere die Unterschiede des in den Figuren 10 bis 13 gezeigten Wärmetauschers 1 gegenüber dem in den Figuren 7 bis 9 gezeigten Wärmetauscher 1 dargestellt werden. Ergänzend wird insbesondere auf die Erläuterungen zu den Fig. 7 bis 9 verwiesen.

Fig. 10 zeigt eine dreidimensionale Außenansicht der vierten Gestaltungsform eines Wärmetauschers 1.

Wie insbesondere aus der Fig. 10 hervorgeht, sind der Zulauf 110 sowie der Ablauf 112 für das Medium m₁ in der Gestaltung gemäß den Figuren 10 bis 13 abweichend von der Gestaltung gemäß den Figuren 7 bis 9 so gestaltet, wie in den Gestaltungen gemäß den Figuren 1 bis 6.

Fig. 11 zeigt eine Draufsicht auf die Gestaltung gemäß Fig. 10.

Fig. 12 zeigt Schnittansichten A-A und B-B der Gestaltung gemäß Fig. 11.

Wie Fig. 12 entnommen werden kann, ist die erste Kammereinrichtung 10 in der Gestaltung gemäß Fig. 12 im Wesentlichen so gestaltet, wie es anhand der Figuren 1 bis 6 erläutert wurde.

Die erste Kammereinrichtung 10 in der Gestaltung gemäß Fig. 12 unterscheidet sich somit von der Kammereinrichtung der Gestaltung gemäß Fig. 9 im Wesentlichen dadurch, dass der Zulauf 110 und der Ablauf 112 abweichend angeordnet ist, sowie dadurch, dass in der Gestaltung gemäß Fig. 12 die Zwischenwände 234, 237 nicht gegeben sind, so dass in der Gestaltung gemäß Fig. 12 - abweichend von der Gestaltung gemäß Fig. 9 - nicht separate Kammern 130, 230 bzw. 132, 232 gegeben sind, sondern lediglich separate Kammern 130, 132 der ersten Kammereinrichtung 10.

Die zweite Kammereinrichtung 12 gemäß der vierten Gestaltungsform unterscheidet sich von der zweiten Kammereinrichtung in der Gestaltung gemäß Fig. 7 bis 9 im Wesentlichen dadurch, dass die Trennwand 208 nicht gegeben ist, so dass in der Gestaltung gemäß Fig. 12, abweichend von der Gestaltung gemäß Fig. 9, lediglich zwei Kammern 138, 140 der zweiten Kammereinrichtung 12 gegeben sind.

Die Verbindungsrohre sind in der Gestaltung gemäß Fig. 12 im Wesentlichen so gestaltet angeordnet, wie es anhand der Fig. 9 erläutert wurde, wobei die dortigen Verbindungsrohre 202, 206, 200 und 204 in der Gestaltung gemäß Fig. 12 durch Verbindungsrohre 16, 20, 14, 18 ersetzt sind; Unterschiede ergeben sich allerdings bei gleicher Gestaltung und Anordnung dieser Verbindungsrohre durch die unterschiedliche Kammeraufteilung der ersten Kammereinrichtung 10 sowie der zweiten Kammereinrichtung 12.

So kann Fig. 12 entnommen werden, dass die Verbindungsrohre 16 jeweils die äußere Kammer 132 der ersten Kammereinrichtung 10 mit der Kammer 138 der zweiten Kammereinrichtung 12 strömungstechnisch verbinden und die Verbindungsrohre 20 die innere Kammer 130 der ersten Kammereinrichtung 10 mit der Kammer 138 der zweiten Kammereinrichtung 12. Ferner verbinden in der Gestaltung gemäß Fig. 12 die Verbindungsrohre 14 die äußere Kammer 134 der ersten Kammereinrichtung 10 mit der Kammer 140 der zweiten Kammereinrichtung 12 und die Verbindungsrohre 18 die innere Kammer 130 der ersten Kammereinrichtung 10 mit der Kammer 140 der zweiten Kammereinrichtung 12.

Insbesondere hierdurch wird gemäß der vierten Gestaltungsform auch eine gegenüber der dritten Gestaltungsform abweichende Strömungsführung des Mediums m₁ bewirkt.

Es werden insbesondere in der Reihe 118 die jeweils aufeinander folgenden Kanäle bzw. Verbindungsrohre 16, 20 in entgegengesetzten Strömungsrichtungen 120, 122 durchströmt, ebenso wie die in der Reihe 124 die jeweils aufeinanderfolgenden Kanäle bzw. Verbindungsrohre 14, 18 in entgegengesetzten Strömungsrichtungen durchströmt werden. In der Reihe 118 wechseln sich die Verbindungsrohre 16 und 20 ab. In der Reihe 124 wechseln sich die Verbindungsrohre 14 und 18 ab.

Gemäß Fig. 12 sind in den Reihen 118 und 124 jeweils drei Wechsel der Strömungsrichtungen aufeinanderfolgender Rohre gegeben, so dass die Anzahl hier gleich der Anzahl der Kammern 130, 132, 134 ist, die in der ersten Kammereinrichtung 10 gebildet werden und größer als die Anzahl der Kammern 138, 140 ist, die in der zweiten Kammereinrichtung 12 gebildet werden.

In der Gestaltung gemäß Fig. 12 sind allerdings - wie in der Gestaltung gemäß Fig. 9 - Zwischenräume 180, 182 gegeben, die von einem Medium m₂, wie Luft, durchströmt werden können.

Die Strömungsführung des Mediums m₁, das als einziges Medium die Verbindungsrohre 14, 16, 18, 20 durchströmt, ist wie folgt:

Das Medium m₁ strömt über den Zulauf 110 in die äußere Kammer 132 der ersten Kammereinrichtung 10 und von dort aus durch die Verbindungsrohre 16 in die Kammer 138 der zweiten Kammereinrichtung 12. In der Kammer 138 wird das Medium m₁ so umgelenkt, dass es anschließend aus der Kammer 138 durch die Verbindungsrohre 20 in die innere Kammer 130 der ersten Kammereinrichtung 10 strömt. In der Kammer 130 wird das Medium m₁ so umgelenkt gelenkt, dass es anschließend durch die Verbindungsrohre 18 in die Kammer 140 der zweiten Kammereinrichtung 12 strömt. In der Kammer 140 wird das Medium so umgelenkt, dass es anschließend durch die Verbindungsrohre 14 in die äußere Kammer 134 der ersten Kammereinrichtung 10 strömt, aus welcher es durch den Ablauf 112 strömt.

In den Kammern 138, 140 der zweiten Kammereinrichtung 12 erfolgt eine Durchmischung bzw. eine totale Durchmischung des Mediums m₁. So strömt in der Kammer 138 das durch ein jeweiliges Verbindungsrohr 16 der Kammer 138 zugeführte Medium m₁ im Wesentlichen durch das in der Reihe 118 jeweils folgende Verbindungsrohr 20, wie durch die Pfeile 280, 282 schematisch dargestellt ist. In der Kammer 140 strömt das dieser Kammer 140 über ein jeweiliges der Verbindungsrohre 18 zugeführte Medium m₁, wie schematisch durch die Pfeile 284, 286 angedeutet, in ein in der Reihe 124 jeweils folgendes Verbindungsrohr 14.

Die Verbindungsrohre 14, 16, 18, 20 bzw. die Flachrohre werden nur von einem Medium m₁ durchströmt. Die zweite Kammereinrichtung 12 bzw. die unteren Kammer 138, 140 werden zur Umlenkung des Mediums m₁ in der Breite bzw. in Breitenrichtung 92 genutzt. Hier erfolgt eine Durchmischung bzw. eine totale Durchmischung. Die obere innere Kammer 130 wird zur Umlenkung in der Tiefe bzw. in Tiefenrichtung 94 genutzt.

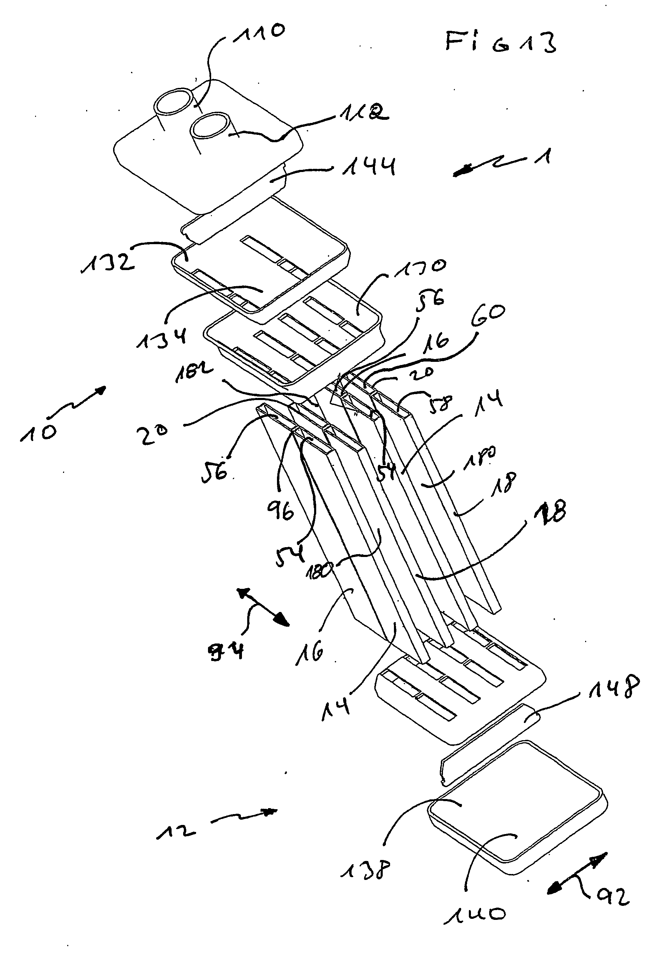

Fig. 13 zeigte eine Explosionsansicht der Gestaltung gemäß den Figuren 10 bis 12. Dort sind insbesondere die Zwischenwände 144, 148 gut zu erkennen.

Die Gestaltung gemäß den Fig. 10 bis 13 kann beispielsweise als bzw. für einen Verdampfer verwendet werden oder als bzw. bei einem Wärmetauscher, bei dem homogenes Temperaturprofil gefordert oder vorteilhaft ist.

Die Gestaltung gemäß Fig. 10 bis 13 hat den Vorteil, dass in der zweiten Kammereinrichtung 12 bzw. in den unteren Kammern 138, 140 eine Durchmischung stattfindet und die Umlenkung in der Breite bzw. in Breitenrichtung 92 im Wesentlichen von Rohr zu Rohr erfolgt, und nicht separat, wie es beispielsweise in Fig. 16 gezeigt ist, die auch eine beispielhafte Gestaltungsform zeigt. Hierdurch kann in der Gestaltung gemäß Fig. 12 ein gleichmäßiges Temperaturprofil bewirkt werden. Bei einer Verschaltung gemäß dieser beispielhaften Gestaltung kann auch ein homogenes Luftaustrittstemperaturprofil erreicht werden.

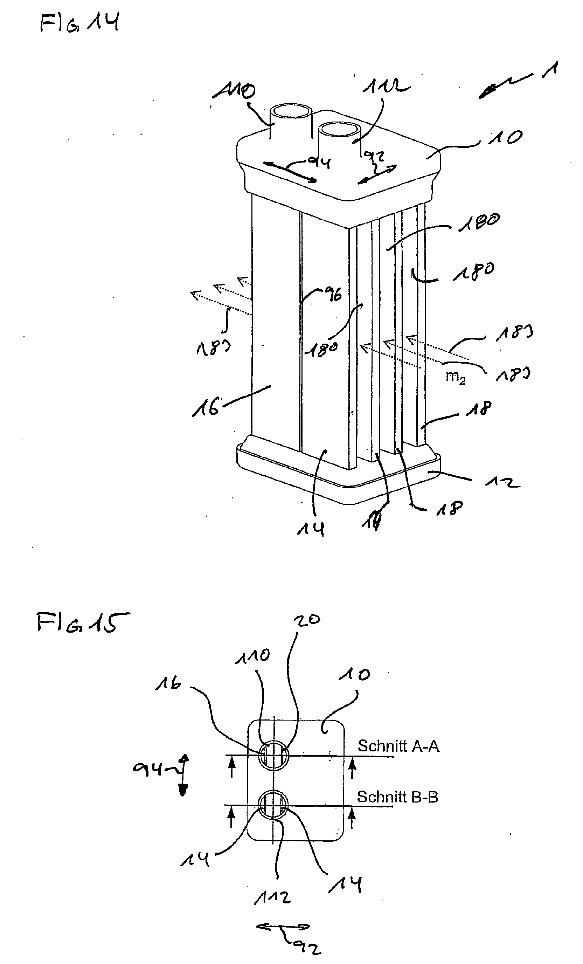

Die Figuren 14 bis 16 zeigen eine fünfte, beispielhafte Gestaltungsform in schematischer Darstellung.

Im Folgenden sollen insbesondere die Unterschiede zwischen den Gestaltungen gemäß Fig. 14 bis 16 und Fig. 10 bis 13 beschrieben werden. Im übrigen wird insbesondere auf die Beschreibung zu den Fig. 10 bis 13 Bezug genommen.

Fig. 14 zeigte eine dreidimensionale Ansicht der fünften Gestaltungsform.

Fig. 15 zeigt eine Draufsicht auf die Gestaltung gemäß Fig. 14.

Fig. 16 zeigt Schnittansichten A-A und B-B der Gestaltung gemäß Fig. 15.

Wie den Fig. 14 bis 16 entnommen werden kann, unterscheidet sich die erste Kammereinrichtung 10 in den Gestaltungen gemäß den Figuren 14 bis 16 von der ersten Kammereinrichtung 10 gemäß den Figuren 10 bis 13 im Wesentlichen durch die Anordnung des Zulaufs 110 sowie des Ablaufs 112 für das Medium m₁. Der Zulauf 110 und der Ablauf 112 sind gemäß den Fig. 14 bis 16 auf der der zweiten Kammereinrichtung 12 abgewandten Seite der ersten Kammereinrichtung 10 an dieser angeordnet, und zwar so, dass sie 110, 112 auf der gleichen Seite einer sich in Tiefenrichtung 94 erstreckenden Mittenebene der ersten Kammereinrichtung 10 positioniert sind und auf unterschiedlichen Seiten einer sich in Breitenrichtung 92 erstreckenden Mittenebene der ersten Kammereinrichtung10. Im übrigen ist die erste Kammereinrichtung 10 in der Gestaltung gemäß den Fig. 14 bis 16 im wesentlichen so gestaltet wie die erste Kammereinrichtung gemäß den Fig. 10 bis 13.

Die zweite Kammereinrichtung 12 ist in der Gestaltung gemäß den Figuren 14 bis 16 im Wesentlichen so gestaltet wie in der Gestaltung gemäß den Figuren 10 bis 13.

Die Gestaltung gemäß den Figuren 14 bis 16 unterscheidet sich von der Gestaltung gemäß den Figuren 10 bis 13 durch die Anordnung der Verbindungsrohre 16, 20, 14, 18. Diese Verbindungsrohre verbinden in der Gestaltung gemäß den Figuren 14 bis 16 im Wesentlichen die gleichen Kammern wie in der Gestaltung gemäß den Figuren 10 bis 13. Allerdings sind in der Gestaltung gemäß den Figuren 14 bis 16 die Verbindungsrohre 16 in der Reihe 118 jeweils nebeneinander angeordnet und die Verbindungsrohre 20 in der Reihe 118 ebenfalls jeweils nebeneinander angeordnet. Es sind also in der Gestaltung gemäß den Figuren 14 bis 16 in der Reihe 118 jeweils Rohrbündel 16 und Rohrbündel 20 angeordnet, die so sind, dass so dass im wesentlichen sämtliche der in der Reihe 118 gegebenen Verbindungsrohre 16 aufeinanderfolgen und sämtliche der in der Reihe 118 gegebenen Verbindungsrohre 20 aufeinanderfolgen.

In entsprechender Weise sind die Rohre 14 und 18 in der Reihe 124 angeordnet.

Die Strömungsführung des Mediums m₁ bei der Gestaltung gemäß den Figuren 14 bis 16 ist im Wesentlichen wie folgt:

Das Medium m₁ strömt über den Zulauf 110 in die äußere Kammer 132 der ersten Kammereinrichtung 10 und von dort durch die - im Gegensatz zur Gestaltung gemäß Fig. 10 bis 13 einander benachbarten - Verbindungsrohre 16 in die Kammer 138 der zweiten Kammereinrichtung 12, in welcher das Medium m₁ so umgelenkt wird, dass es durch die - im Gegensatz zur Gestaltung gemäß Fig. 10 bis 13 einander benachbarten - Verbindungsrohre 20 in die innere Kammer 130 der ersten Kammereinrichtung 10 strömt. In der Kammer 130 wird das Medium m₁ so umgelenkt, dass es anschließend durch die - im Gegensatz zur Gestaltung gemäß Fig. 10 bis 13 einander benachbarten - Verbindungsrohre 18 in die Kammer 140, in welcher es so umgelenkt wird, dass es anschließend durch die - im Gegensatz zur Gestaltung gemäß Fig. 10 bis 13 einander benachbarten - Verbindungsrohre 14 in die äußere Kammer 134 der ersten Kammereinrichtung 10 strömt, aus welcher es durch den Ablauf 112 strömt.

Auch bei der Gestaltung gemäß den Figuren 14 bis 16 werden die Verbindungsrohre 14, 16, 18, 20 bzw. Flachrohre nur von einem Medium m₁ durchströmt, wobei in den Zwischenräumen 180, 182 ebenfalls ein Medium m₂, wie Luft oder dergleichen, strömen kann. Die zweite Kammereinrichtung 12 bzw. sämtliche Kammern der zweiten Kammereinrichtung 12 bzw. die unteren Kammern 138, 140 werden in der Gestaltung gemäß Fig. 16 zur Umlenkung in Breitenrichtung 92 genutzt. Im Gegensatz zur Gestaltung gemäß den Fig. 10 bis 13 strömt das Medium m₁ hier allerdings nicht jeweils in ein benachbartes Rohr, sondern aus den Rohren 16 bzw. 18 einer Anordnung benachbarter Rohre 16 bzw. 18 in die Rohre 20 bzw. 14 einer andere Anordnung von Rohren 20 bzw. 14, die ihrerseits benachbart sind, wie die Pfeile 280 bzw. 284 schematisch andeuten.

Die obere innere Kammer 130 wird in der Gestaltung gemäß den Figuren 14 bis 16 zur Umlenkung in der Tiefe bzw. in Tiefenrichtung 94 genutzt.

Die Gestaltung gemäß der Figuren 14 bis 16 kann beispielsweise für eine blockweise Verschaltung verwendet werden, wie beispielsweise dergestalt, wie sie bei einem Flachrohrverdampfer gegeben sein kann.

Die Gestaltung gemäß Fig. 14 bis 16 weist den Vorteil auf, dass in der zweiten Kammereinrichtung 12 bzw. den unteren Kammern 138, 140 eine Durchmischung stattfindet.

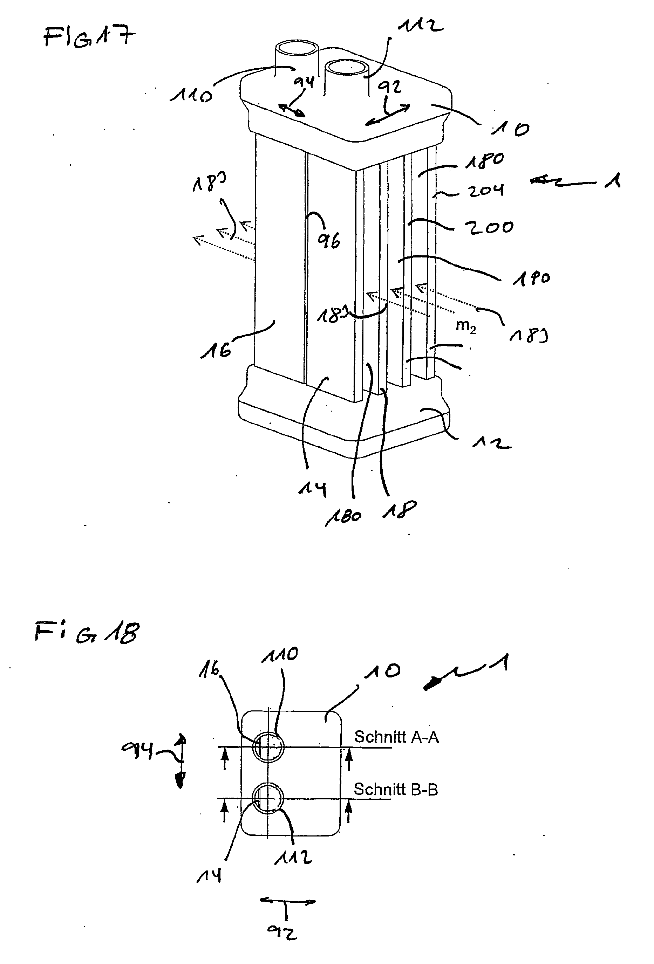

Die Figuren 17 bis 19 zeigen eine sechste, beispielhafte Gestaltungsform in schematischer Darstellung.

Fig. 17 zeigt eine dreidimensionale Ansicht der sechsten Gestaltungsform.

In der Gestaltung gemäß den Figuren 17 bis 19 ist vorgesehen, dass zwischen den Rohren 14, 18, 200, 204, 16, 20, 280, 282 in bereits oben beschriebener Weise Zwischenräume 180, 182 gegeben sind, die bereits beschriebener Weise von einem Medium m₂, dass nicht die vorgenannten Verbindungsrohre durchströmt, durchströmt werden können. Dies kann beispielsweise Luft sein.

Die genannten Verbindungsrohre, die die erste Kammereinrichtung 10 mit der zweiten Kammereinrichtung strömungstechnisch verbinden, werden in der Gestaltung gemäß den Figuren 17 bis 19 lediglich von einem Medium, dem Medium m₁, durchströmt.

Der Zulauf 110 sowie der Ablauf 112 sind in der Gestaltung gemäß den Figuren 17 bis 19 im wesentlichen so an der ersten Kammereinrichtung 10 angeordnet wie in der Gestaltung gemäß den Fig. 14 bis 16.

Fig. 18 zeigt eine Draufsicht auf die Gestaltung gemäß Fig. 17.

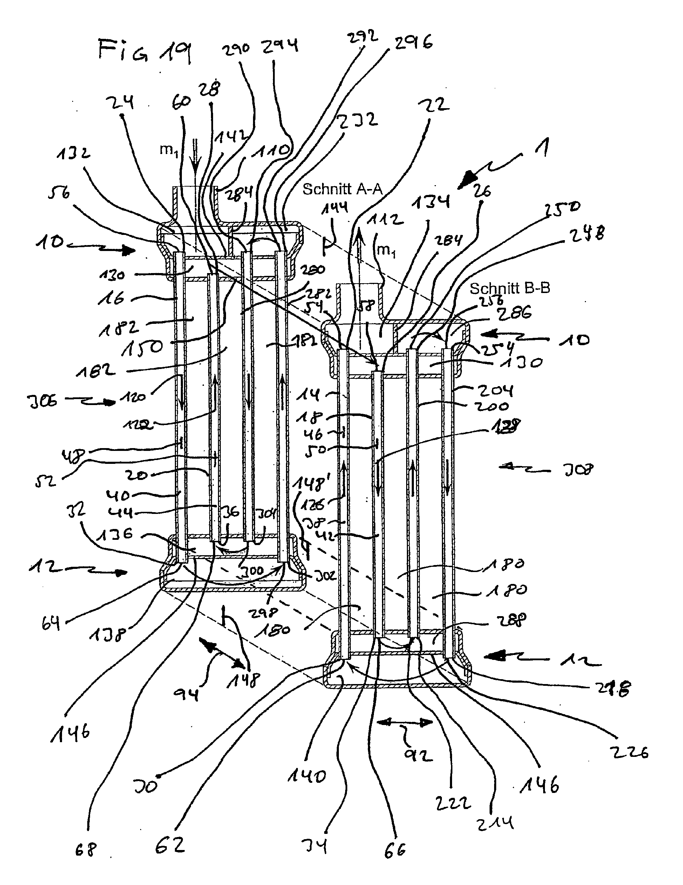

Fig. 19 zeigt Schnittansichten entlang der Linie A-A und B-B auf Fig. 18.

Die in der Gestaltung gemäß den Figuren 17 bis 19 gegebene erste Kammereinrichtung 10 unterscheidet sich von der in der Gestaltung gemäß den Figuren 1 bis 6 gegebenen ersten Kammereinrichtung 10 im Wesentlichen einerseits durch die Anordnung des Zulaufs 110 sowie des Ablaufs 112 für das Medium m₁, und andererseits dadurch, dass in der Gestaltung gemäß den Figuren 17 bis 19 eine weitere Trenn- bzw. Zwischenwand 284 der ersten Kammereinrichtung 10 gegeben ist, die in den Gestaltungen gemäß den Figuren 1 bis 6 nicht vorhanden ist.

Die Zwischenwand 284 ist auf der der zweiten Kammereinrichtung 12 abge-. wandten Seite der Zwischenwand 142 angeordnet und kontaktiert diese Zwischenwand 142. Die Zwischenwand 284 ist in der Gestaltung gemäß Fig. 19 insbesondere so angeordnet, dass sie sich in Tiefenrichtung 94 im Wesentlichen durch den gesamten Innenraum der ersten Kammereinrichtung 10 zieht.

Die Zwischenwand 144 ist in der Gestaltung gemäß Fig. 19 so, dass sie die Zwischenwand 284 kreuzt. Mittels der Zwischenwand 144 sowie mittels der Zwischenwand 284 werden also auf der in der zweiten Kammereinrichtung 12 abgewandten Seite der Zwischenwand 142 vier Kammern gebildet. Es kann beispielsweise, wie in Fig. 19 gezeigt, vorgesehen sein, dass die Zwischenwände 284, 144 jeweils eben gestaltet sind sowie unter einem rechten Winkel angeordnet sind. Die Zwischenwände 284, 144 können ferner jeweils unter einem rechten Winkel zur Zwischenwand 142 angeordnet sein.

In der Gestaltung gemäß Fig. 17 bis 19 trennt die Zwischenwand 284 die äußere Kammer 132 der ersten Kammereinrichtung 10 von der äußeren Kammer 232 der ersten Kammereinrichtung 10 sowie die äußere Kammer 134 der ersten Kammereinrichtung 10 von der äußeren Kammer 286 der ersten Kammereinrichtung 10.

Die Zwischenwand 142 trennt jeweils die äußeren Kammern 132, 232, 134, 286 der ersten Kammereinrichtung 10 von der inneren Kammer 130 der ersten Kammereinrichtung 10.

Die zweite Kammereinrichtung 12 ist in der Gestaltung gemäß Fig. 17 bis 19 im Wesentlichen so gestaltet, wie die zweite Kammereinrichtung 12 in den Fig. 1 bis 6, unterscheidet sich von dieser allerdings dadurch, dass der gemäß den Fig. 1 bis 6 gegebene Zulauf 114 für ein Medium m₃ sowie der dort gegebene Ablauf 116 für ein Medium m₃ nicht gegeben ist und die zweite Kammereinrichtung 12 stattdessen in der Gestaltung gemäß Fig. 19 an den entsprechenden Stellen geschlossen ist. Ein weiterer Unterschied zwischen der zweiten Kammereinrichtung 12 gemäß den Figuren 1 bis 6 einerseits und gemäß den Figuren 17 bis 19 andererseits besteht darin, dass in der Gestaltung gemäß Fig. 17 bis 19 die Zwischenwand 148 nicht nur auf der der ersten Kammereinrichtung 10 abgewandten Seite der Zwischenwand 146 angeordnet ist, sondern auch auf der der ersten Kammereinrichtung 10 zugewandten Seite der Zwischenwand 146, was in Fig. 19 durch das Bezugszeichen 148' verdeutlicht ist.

Demzufolge werden in der Gestaltung gemäß Fig. 17 bis 19 in der zweiten Kammereinrichtung 12 vier Kammern 136, 138, 140, 288 gebildet, wobei die Zwischenwand 148' die inneren Kammern 136 und 288 der zweiten Kammereinrichtung 12 voneinander trennt, wobei die Zwischenwand 148 die äußeren Kammer 138 und 140 der zweiten Kammereinrichtung 12 von einander trennt, wobei die Zwischenwand 146 einerseits die innere Kammer 136 der zweiten Kammereinrichtung 12 von der äußeren Kammer 138 der zweiten Kammereinrichtung 12 trennt und andererseits die innere Kammer 288 der zweiten Kammereinrichtung 12 von der äußeren Kammer 140 der zweiten Kammereinrichtung 12.

Die Kammern 130, 136, 288 sind innere Kammern, also solche die der jeweils anderen Kammereinrichtung 10 bzw. 12 zugewandt sind, und die Kammern 132, 232, 134, 286, 138, 140 sind äußere Kammern, also solche, die der jeweils gegenüberliegenden Kammereinrichtung 10 bzw. 12 abgewandt sind.

Das bzw. die Verbindungsrohre 16 verbinden eine äußere Kammer 132 der ersten Kammereinrichtung 10 strömungstechnisch mit einer äußeren Kammer 138 der zweiten Kammereinrichtung 12. Das bzw. die Verbindungsrohre 20 verbinden eine innere Kammer 130 der ersten Kammereinrichtung 10 strömungstechnisch mit einer inneren Kammereinrichtung 136 der zweiten Kammereinrichtung 12. Das bzw. die Verbindungsrohre 280 verbinden eine äußere Kammer 232 der ersten Kammereinrichtung 10 strömungstechnisch mit der inneren Kammer 136 der zweiten Kammereinrichtung 12. Das bzw. die Verbindungsrohre 282 verbinden die äußere Kammer 232 der ersten Kammereinrichtung 10 strömungstechnisch mit der äußeren Kammer 138 der zweiten Kammereinrichtung 12.

Das bzw. die Verbindungsrohre 14 verbinden eine äußere Kammer 134 der ersten Kammereinrichtung 10 strömungstechnisch mit einer äußeren Kammer 140 der zweiten Kammereinrichtung 12. Das bzw. die Verbindungsrohre 18 verbinden die innere Kammer 130 der ersten Kammereinrichtung 10 strömungstechnisch mit einer inneren Kammer 288 der zweiten Kammereinrichtung 12. Das bzw. die Verbindungsrohre 200 verbinden eine äußere Kammer 286 der ersten Kammereinrichtung 10 strömungstechnisch mit der inneren Kammer 288 der zweiten Kammereinrichtung 12. Das bzw. die Verbindungsrohre 204 verbinden die äußere Kammer 286 der ersten Kammereinrichtung 10 strömungstechnisch mit der äußeren Kammer 140 der zweiten Kammereinrichtung 12.

In der Gestaltung gemäß Fig. 19 sind die ersten Öffnungen 56, 290, 292, 54, 250, 256 der Verbindungsrohre 16, 280, 282, 14, 200, 204, in Richtung der Längsachsen 46, 50, 48, 52 der Verbindungsrohre gesehen, nicht voneinander beabstandet. Auch die ersten Öffnungen 60, 58 der Verbindungsrohre 20, 18 sind in der Gestaltung gemäß Fig. 19 in Richtung der Längsachsen 50, 52 der Verbindungsrohre gesehen, nicht voneinander beabstandet.

Die ersten Öffnungen 56, 290, 292, 54, 250, 256 der Verbindungsrohre 16, 280, 282, 14, 200, 204, einerseits, sind in der Gestaltung gemäß Fig. 19 allerdings, in Richtung der Längsachsen 48, 50, 52, 54 gesehen, beabstandet von den ersten Öffnungen 60, 58 der Verbindungsrohre 20, 18, andererseits.

Es weisen also die Verbindungsrohre 16, 280, 282, 14, 200, 204, einerseits, an ihrem ersten Ende 24, 28, 294, 296, 22, 248, 254 ein anderes Längenniveau auf als die Verbindungsrohre 20, 18 an ihrem ersten Ende 142, 26, andererseits.

Die zweiten Öffnungen 64, 298, 62, 226 der Verbindungsrohre 16, 282, 14, 204 sind in der Gestaltung gemäß Fig. 19, in Richtung der Längsachsen 48, 46 der Verbindungsrohre gesehen, nicht voneinander beabstandet. Auch die zweiten Öffnungen 68, 300, 66, 222 der Verbindungsrohre 20, 280, 18, 200 sind in der Gestaltung gemäß Fig. 19, in Richtung der Längsachsen 48, 50 der Verbindungsrohre gesehen, nicht voneinander beabstandet. In der Gestaltung gemäß Fig. 19 sind jedoch die zweiten Öffnungen 64, 298, 62, 226 der Verbindungsrohre 16, 282, 14, 204, einerseits, in Richtung der Längsachsen der Verbindungsrohre gesehen beabstandet von den zweiten Öffnungen 68, 300, 66, 222 der Verbindungsrohre 20, 280, 18, 200, andererseits.

Die Verbindungsrohre 16, 282, 14, 204, einerseits, weisen gemäß der sechsten Gestaltungsform an ihrem zweiten Ende 32, 302, 30, 218 ein anderes Längenniveau auf als die Verbindungsrohre 20, 280, 18, 200 an ihrem zweiten Ende 36, 304, 34, 214.

In der Reihe 306, 308 können jeweils - was in Fig. 19 nicht gezeigt ist - jeweils mehrere Verbindungsrohre 16 bzw. 20 bzw. 280 bzw. 282 bzw. 14 bzw. 18 bzw. 200 bzw. 204 benachbart nebeneinander angeordnet sein; in Fig. 19 ist jeweils eins solcher Verbindungsrohre 16 bzw. 20 bzw. 280 bzw. 282 bzw. 14 bzw. 18 bzw. 200 bzw. 204 gezeigt.

Gemäß den Fig. 17 bis 19 weist die erste Kammereinrichtung 10 fünf Kammern 130, 132, 232, 134, 286 auf, und die zweite Kammereinrichtung 12 vier Kammern 136, 138, 288, 140.

Gemäß Fig. 17 bis 19 ist also die Anzahl der Wechsel der Strömungsrichtungen in der von den Verbindungsrohren 16, 20, 280, 282 gebildeten Reihe 306 kleiner als die Anzahl der Kammern, die in der ersten Kammereinrichtung 10 gebildet werden, und kleiner als die Anzahl der Wechsel der Strömungsrichtungen in der Reihe 308, die von den Verbindungsrohren 14, 18, 200, 204 gebildet wird. Dies bezieht sich allerdings auf die Darstellung, wie sie exakt in Fig. 19 gezeigt ist, bzw. auf eine Gestaltung, bei der mehrere Verbindungsrohre 16 bzw. 20 bzw. 280 bzw. 282 bzw. 14 bzw. 18 bzw. 200 bzw. 204 benachbart nebeneinander angeordnet sind. Es kann allerdings auch vorgesehen sein, dass sich mehrere Verbindungsrohrpaare 16, 20 und/oder 280, 282 und/oder 14, 18 und/oder 200, 204 in der jeweiligen Reihe, abweichend von der Darstellung in Fig. 19, benachbart wiederholten bzw. mehrfach aufeinanderfolgend nebeneinander angeordnet sind, so dass auch in der Gestaltung gemäß der sechsten Gestaltungsform die Anzahl der Wechsel der Strömungsrichtung in einer Reihe aufeinanderfolgender Verbindungsrohre größer oder gleich der Anzahl der Kammern ist bzw. sein kann, die in der ersten Kammereinrichtung gebildet werden, und größer oder gleich der Anzahl der Kammern ist, die in der zweiten Kammereinrichtung 12 gebildet werden.

Die Strömungsführung der Mediums m₁ ist eine Gestaltung gemäß Fig. 17 bis 19 wie folgt:

Das Medium m₁ strömt über den Zulauf 110 in die äußere Kammer 132 der ersten Kammereinrichtung 10 strömt von dort durch die Verbindungsrohre 16 in die äußere Kammer 138 der zweiten Kammereinrichtung 12, in welcher es zu den Verbindungsrohren 282 umgelenkt wird, durch welche es in die äußere Kammer 232 der ersten Kammereinrichtung 10 strömt. In der Kammer 232 wird das Medium m₁ umgelenkt und strömt anschließend durch die Verbindungsrohre 280 in die innere Kammer 136 der zweiten Kammereinrichtung 12. In der Kammer 136 wird das Medium m₁ umgelenkt und strömt durch die Verbindungsrohre 20 in die innere Kammer 130 der ersten Kammereinrichtung 10. In der Kammer 130 wird das Medium m₁ so umgelenkt, dass es anschließend durch die Verbindungsrohre 18 in die innere Kammer 288 der zweiten Kammereinrichtung 12 strömt, in welcher es so umgelenkt wird, so dass es anschließend durch die Verbindungsrohre 200 in die äußere Kammer 286 der ersten Kammereinrichtung 10 strömt. In der äußeren Kammer 286 wird das Medium m₁ so umgelenkt, dass es anschließend durch die Verbindungsrohre 204 in die äußere Kammer 140 der zweiten Kammereinrichtung 12 strömt. In der Kammer 140 wird das Medium m₁ so umgelenkt, so dass es anschließend durch die Verbindungsrohre 14 in die äußere Kammer 134 der ersten Kammereinrichtung 10 strömt, aus welcher es anschließend durch den Ablauf 112 strömt.

Auch in der Gestaltung gemäß den Fig. 17 bis 19 werden die Verbindungs- bzw. Flachrohre nur von einem Medium m₁ durchströmt. Die bzw. sämtliche Kammern der zweiten Kammereinrichtung bzw. die untere äußeren Kammern 138, 140 und die unteren inneren Kammern 136, 288 werden - wie auch die vier gebogenen Pfeile in der zweiten Kammereinrichtung in Fig. 19 verdeutlichen - zur Umlenkung in der Breite bzw. in Breitenrichtung 92 genutzt.

Die obere innere Kammer 130 wird - wie durch den Pfeil 150 in Fig. 19 verdeutlicht ist - zur Umlenkung in der Tiefe bzw. in Tiefenrichtung 94 genutzt. Die oberen äußeren Kammern 232, 286, in welche nicht der Zulauf 110 bzw. der Ablauf 112 mündet, werden - wie die beiden gebogenen Pfeile in der ersten Kammereinrichtung in Fig. 19 verdeutlichen - zur Umlenkung in der Breite bzw. in Breitenrichtung 92 genutzt.

Durch eine derartige Gestaltung mit jeweils mindestens einer äußeren sowie inneren oberen Kammer und mindestens einer inneren sowie äußeren unteren Kammer sind sehr komplexe Strömungsführungen realisierbar. Ein Verbindungsrohr kann auch ein Rohrbündel sein. Ferner wird ermöglicht, bestimmte Temperaturfelder an definierte Bereiche des Wärmetauschers zu platzieren.

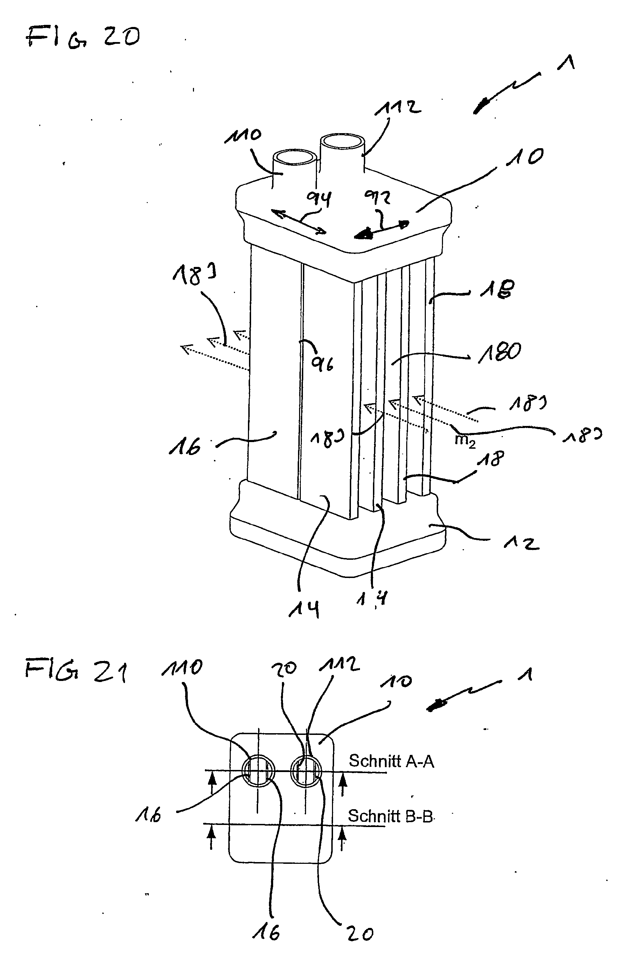

Die Figuren 20 bis 22 zeigen eine siebente, beispielhafte Gestaltungsform eines Wärmetauschers 1.

Fig. 20 zeigt eine dreidimensionale Ansicht der siebenten Gestaltungsform.

Wie auch bei den Gestaltungsformen gemäß den Figuren 7 bis 19 werden die bzw. sämtliche Verbindungsrohre, die insbesondere als Flachrohre gestaltet sind, also hier die Verbindungsrohre 14, 16, 18, 20, von nur bzw. genau einem Medium m₁ durchströmt. Gemäß der siebenten Gestaltungsform sind zwischen den Verbindungsrohren 14, 18 bzw. 16, 20 Zwischenräume 180, 182 gegeben, die von einem weiteren Medium, hier dem Medium m₂, durchströmt werden können. Wie angesprochen, kann das Medium m₂ beispielsweise Luft sein.

Der Zulauf 110 sowie der Ablauf 112 ist gemäß der siebenten Gestaltungsform im Wesentlichen so an der ersten Kammereinrichtung 10 angeordnet, wie in der Gestaltung gemäß der Figuren 7 bis 9.

Fig. 21 zeigt eine Draufsicht auf die Gestaltung gemäß Fig. 20.

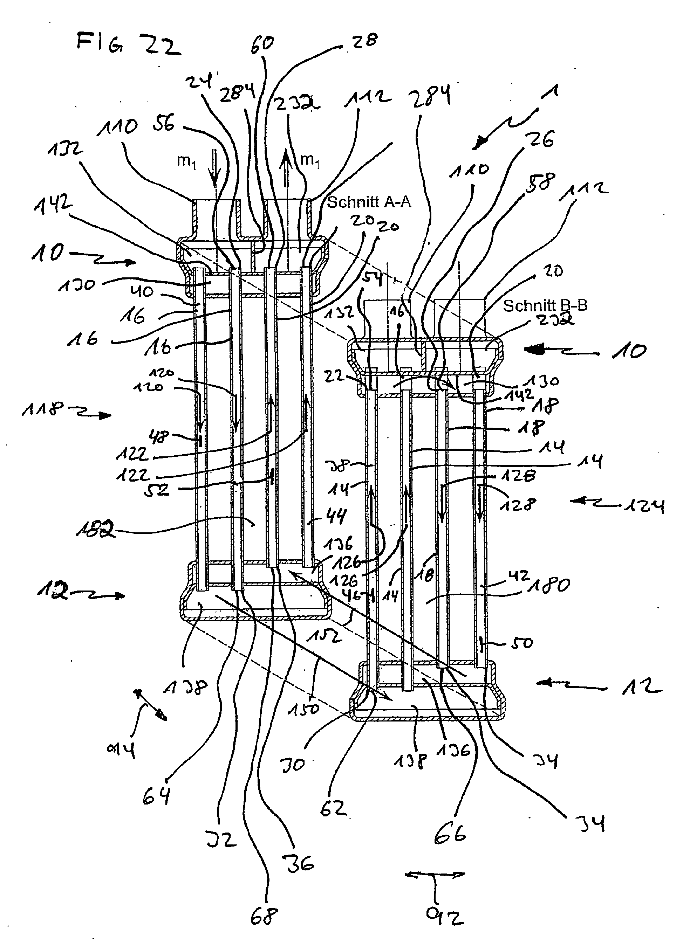

Fig. 22 zeigt Schnittansichten entlang den Linien A-A und B-B aus Fig. 21.

In der Gestaltung gemäß den Figuren 20 bis 22 ist eine erste Kammereinrichtung 10 gegeben, die sich von der ersten Kammereinrichtung gemäß den Figuren 17 bis 19 durch die Anordnung des Zulaufs 110 sowie des Ablaufs 112 unterscheidet, sowie dadurch, dass die Zwischenwand 144 der ersten Kammereinrichtung 10 in der Gestaltung gemäß den Figuren 20 bis 22 nicht gegeben ist. In der Gestaltung gemäß den Figuren 20 bis 22 ist allerdings ebenfalls eine Zwischenwand 284 der ersten Kammereinrichtung 10 gegeben, die auch bei der Gestaltung gemäß Fig. 19 erläutert wird.

Folglich weist die erste Kammereinrichtung 10 in der Gestaltung gemäß den Figuren 20 bis 22 nur drei Kammern 132, 232, 130 auf.

Im übrigen ist die erste Kammereinrichtung 10 in der Gestaltung gemäß den Figuren 19 bis 22 im Wesentlichen so gestaltet, wie die erste Kammereinrichtung in der Gestaltung gemäß den Figuren 17 bis 19.

Die zweite Kammereinrichtung 12 der siebenten Gestaltungsform unterscheidet sich von der gemäß der sechsten Gestaltungsform, wie insbesondere der Vergleich der Figuren 22 und 13 zeigt, im Wesentlichen dadurch, dass gemäß der siebenten Gestaltungsform die Zwischenwände 148, 148' nicht gegeben sind. Gemäß der siebenten Gestaltungsform weist die zweite Kammereinrichtung folglich zwei Kammern 136, 138 auf.

Gemäß der siebenten Gestaltungsform sind die ersten Öffnungen 56 der Verbindungsrohre 16, in Richtung der Längsachsen 48, 52 der Verbindungsrohre 16, 20 gesehen, nicht von den ersten Öffnungen 60 der Verbindungsrohre 20 beabstandet. Die ersten Öffnungen 54 der Verbindungsrohre 14 sind gemäß der siebenten Gestaltungsform, in Richtung der Längsachsen 46, 50 der Verbindungsrohre 14, 18 gesehen, nicht von den ersten Öffnungen 58 der Verbindungsrohre 18 beabstandet. Die ersten Öffnungen 56, 60, einerseits, sind allerdings beabstandet von den ersten Öffnungen 54, 58, andererseits. Die Verbindungsrohre 16, 20 weisen somit an ihren ersten Enden 24, 28 ein anderes Längenniveau auf, als die Verbindungsrohre 14, 16 an ihren ersten Enden 22, 26.

Die zweiten Öffnungen 64 der Verbindungsrohre 16 sind, in Richtung der Längsachsen 48, 52 gesehen, beabstandet von den zweiten Öffnungen 68 der Verbindungsrohre 20. Die Verbindungsrohre 16 weisen somit an ihren zweiten Enden 32 ein anderes Längenniveau auf als die Verbindungsrohre 20 an ihren zweiten Enden 36.

Die zweiten Öffnungen 62 der Verbindungsrohre 14 sind, in Richtung der Längsachsen 46, 50 der Verbindungsrohre 14, 18 gesehen, beabstandet von den zweiten Öffnungen 66 der Verbindungsrohre 18. Die Verbindungsrohre 14 weisen somit an ihren zweiten Enden 30 ein anderes Längenniveau auf als die Verbindungsrohre 18 an ihren zweiten Enden 34.

Die Verbindungsrohre 16 weisen an ihren zweiten Enden 32 das gleiche Längenniveau auf, wie die Verbindungsrohre 14. Ferner weisen die Verbindungsrohre 20 an ihren zweiten Enden 36 das gleiche Längenniveau auf, wie die Verbindungsrohre 18 an ihren zweiten Enden 34.

Gemäß der siebenten Gestaltungsform ist vorgesehen, dass die Verbindungsrohre 16 die äußere Kammer 132 der ersten Kammereinrichtung 10 strömungstechnisch mit der äußeren Kammer 138 der zweiten Kammereinrichtung 12 verbinden. Ferner ist vorgesehen, dass die Verbindungsrohre 20 die äußere Kammer 232 der ersten Kammereinrichtung 10 strömungstechnisch mit der inneren Kammer 136 der zweiten Kammereinrichtung 12 verbinden. Die Verbindungsrohre 14 verbinden die innere Kammer 130 der ersten Kammereinrichtung 10 strömungstechnisch mit der äußeren Kammer 138 der zweiten Kammereinrichtung 12. Die Verbindungsrohre 18 verbinden die innere Kammer 130 der ersten Kammereinrichtung 10 strömungstechnisch mit der inneren Kammer 136 der zweiten Kammereinrichtung 12.

Gemäß den Fig. 20 bis 22 sind die bzw. sämtliche in der Reihe 118 gegebenen Verbindungsrohre 16 nebeneinander aufeinanderfolgend angeordnet. Ferner sind die bzw. sämtliche in der Reihe 118 gegebenen Verbindungsrohre 20 nebeneinander aufeinanderfolgend angeordnet. Die bzw. sämtliche der in der Reihe 124 gegebenen Verbindungsrohre 14 sind in dieser Reihe 124 nebeneinander aufeinanderfolgend angeordnet. Ferner sind die bzw. sämtliche in der Reihe 124 gegebenen Verbindungsrohre 18 nebeneinander aufeinanderfolgend angeordnet. In Fig. 22 sind jeweils zwei Verbindungsrohre 14, 16, 18, 20 gezeigt; dies können jeweils auch mehr als zwei sein. Damit ist in der Reihe 118 sowie in der Reihe 124 jeweils ein Wechsel der Strömungsrichtung gegeben, so dass in der exakten Darstellung gemäß Fig. 22 die Anzahl der Wechsel der Strömungsrichtungen in diese Reihen 118, 124 jeweils kleiner ist als die Anzahl der Kammern 130, 132, 232, die in der ersten Kammereinrichtung 10 gegeben sind, sowie kleiner ist als die Anzahl der Kammern 136, 140, die in der zweiten Kammereinrichtung 12 gegeben sind. Es kann in einer bevorzugten Abwandlung auch vorgesehen sein, dass ein Teil der Verbindungsrohre 16 mit einem Teil der Verbindungsrohre 14 so vertauscht angeordnet ist und / oder ein Teil der Verbindungsrohre 20 mit einem Teil der Verbindungsrohre 18 so vertauscht angeordnet ist, dass in der Reihe 118 und / oder in der Reihe 124 die Anzahl der Wechsel der Strömungsrichtung größer oder gleich der Anzahl der Kammern 130, 132, 232 ist, die in der ersten Kammereinrichtung 10 gegeben sind, sowie größer oder gleich der Anzahl der Kammern 136, 140, die in der zweiten Kammereinrichtung 12 gegeben sind. Beispielsweise würde ein Vertauschen des einen, in der Reihe 118 in Fig. 22 außen gelegenen Verbindungsrohres 16 mit dem einen, in der Reihe 124 in Fig. 22 außen gelegenen Verbindungsrohres 14, sowie würde ein Vertauschen des einen, in der Reihe 118 in Fig. 22 außen gelegenen Verbindungsrohres 20 mit dem einen, in der Reihe 124 in Fig. 22 außen gelegenen Verbindungsrohres 18 bewirken, dass in den Reihen 118, 124 jeweils drei Wechsel der Strömungsrichtung gegeben sind, so dass diese Anzahl gleich der Anzahl der Kammern 130, 132, 232 ist, die in der ersten Kammereinrichtung 10 gegeben sind, sowie größer als die Anzahl der Kammern 136, 140, die in der zweiten Kammereinrichtung 12 gegeben sind. Bei Erhöhung der Anzahl der Verbindungsrohr sowie des entsprechenden Vertauschens können auch mehr Strömungswechsel in den Reihen 118, 124 erzeugt werden.

Im Betrieb strömt das Medium m₁ wie folgt:

Das Medium m₁ strömt über den Zulauf 110 in die äußere Kammer 132 der ersten Kammereinrichtung 10 und von dort durch die Verbindungsrohre 16 in die äußere Kammer 138 der zweiten Kammereinrichtung 12. In der Kammer 138 wird das Medium m₁ so umgelenkt (vgl. Pfeil 150), dass anschließend durch die Verbindungsrohre 14 in die innere Kammer 130 der ersten Kammereinrichtung 10 strömt, in welcher es so umgelenkt wird (vgl. gekrümmter Pfeil), dass es anschließend durch die Verbindungsrohre 18 in die innere Kammer 136 der zweiten Kammereinrichtung 12 strömt. In der Kammer 136 wird das Medium m₁ so umgelenkt (vgl. Pfeil 152), dass es anschließend durch die Verbindungsrohre 20 in die äußere Kammer 232 der ersten Kammereinrichtung 10 strömt, aus welcher es durch den Ablauf 112 strömt.

In der Gestaltung gemäß den Figuren 20 bis 22 sind sowohl in Tiefenrichtung 94 als auch in Breitenrichtung 92 unterschiedliche Längenniveaus der Verbindungsrohre gegeben.

Auch gemäß der siebenten Gestaltungsform werden die Verbindungsrohre 14, 16, 18,20 bzw. die Flachrohre nur von einem Medium m₁ durchströmt. Durch auch in Tiefe bzw. in Tiefenrichtung 94 variable bzw. unterschiedliche Rohrlängen kann die erste Umlenkung als Umlenkung in der Tiefe bzw. in Tiefenrichtung 94 in der unteren äußeren Kammer 138 realisiert werden. Die obere innere Kammer 130 dient zur Umlenkung in der Breite bzw. in Breitenrichtung 92, und zwar in Verbindung mit den Verbindungsrohren 14, 18, die dort ein geringeres Längenniveau aufweisen bzw. gekürzt sind.

Ein Vorteil der Gestaltung gemäß den Figuren 20 bis 22 besteht darin, dass auch die inneren Kammern bzw. eine Innere Kammer zur Umlenkung in Breitenrichtung 94 in der Breite genutzt werden kann.

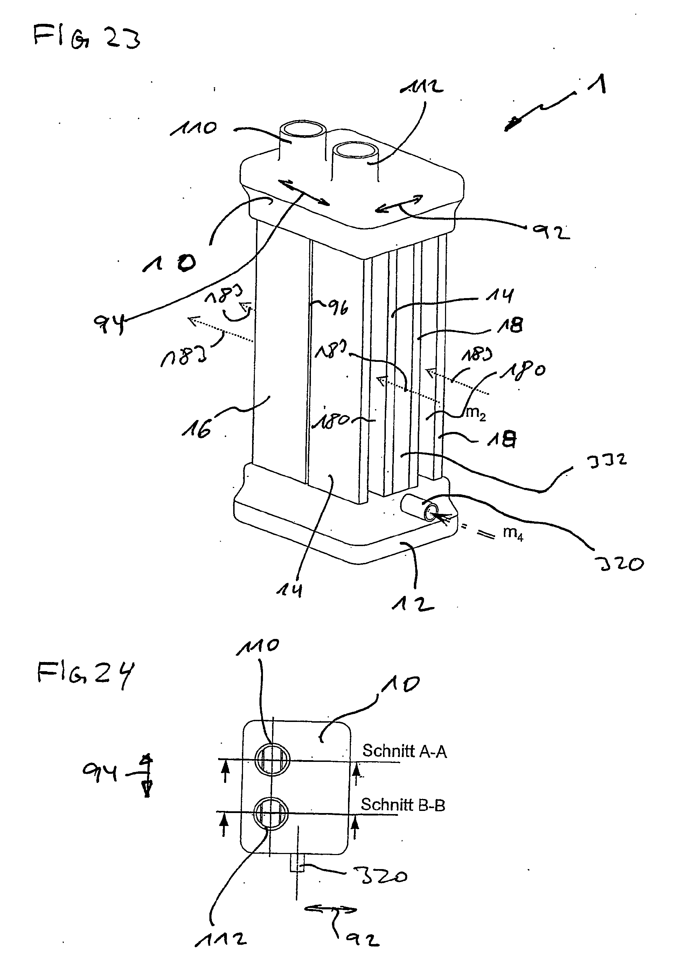

Die Figuren 23 bis 25 zeigen eine achte, beispielhafte Gestaltungsform eines Wärmetauschers 1.

Fig. 23 zeigt eine dreidimensionale Ansicht einer achten Gestaltungsform eines Wärmetauschers 1.

Fig. 24 zeigt eine Draufsicht auf die Gestaltung gemäß Fig. 23.

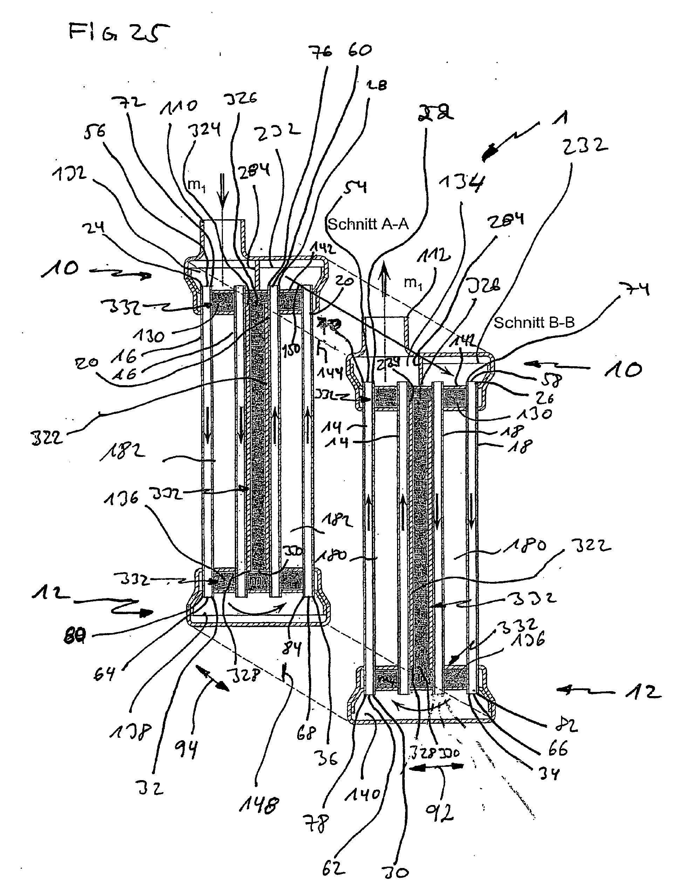

Fig. 25 zeigt Schnittansichten A-A und B-B aus der Gestaltung gemäß Fig. 24.

Der Wärmetauscher 1 weist eine erste Kammereinrichtung 10 sowie eine zweite Kammereinrichtung 12 auf. Die erste Kammereinrichtung 10 der achten Gestaltungsform unterscheidet sich von der ersten Kammereinrichtung gemäß den Figuren 17 bis 19 im Wesentlichen dadurch, dass die Trennwand 144 lediglich die Kammer 132 von der Kammer 134 trennt, und nicht darüber hinaus eine Kammer 232 von einer Kammer 286. Auf der den Kammern 132, 134 abgewandten Seite der Zwischenwand 284 wird somit gemäß der achten Gestaltungsform nur eine Kammer 232 gebildet.

Die zweite Kammereinrichtung 12 der achten Gestaltungsform unterscheidet sich von der zweiten Kammereinrichtung gemäß den Figuren 17 bis 19 im Wesentlichen dadurch, dass gemäß der achten Gestaltungsform die Zwischenwand 148' nicht gegeben ist, sowie dadurch, dass gemäß der achten Gestaltungsform ein Anschlussstutzen 320 an der zweiten Kammereinrichtung 12 gegeben ist.

Durch das Fehlen der Zwischenwand 148' sind gemäß der achten Gestaltungsform nicht - wie in der Gestaltungsform gemäß der Figuren 17 bis 19 - Kammern 136, 288 durch die Trennwand 148' voneinander getrennt, sondern bilden vielmehr eine einheitliche Kammer 136.

Auch in der achten Gestaltungsform ist allerdings die Kammer 138 von der Kammer 140 durch eine Zwischenwand 148 getrennt.

Der Anschlussstutzen 320 ermöglicht die Zu- und Abfuhr eines Mediums m₄ in das Kammern 130, 136 sowie das Verbindungsrohr 322 aufweisende System.

Das Verbindungsrohr 322 stellt eine strömungstechnische Verbindung zwischen der Kammer 130 und der Kammer 136 her. Im Unterschied zu den Verbindungsrohren, die bei den Gestaltungen gemäß den Figuren 1 bis 19 eine strömungstechnische Verbindung zwischen der ersten Kammereinrichtung 10 und der zweiten Kammereinrichtung 12 erzeugen, wird das Verbindungsrohr 322 gemäß der achten Gestaltungsform im Betrieb allerdings nicht von Medium, also hier Medium m₄, durchströmt. Das System mit der Kammer 130, dem Verbindungsrohr 322, der Kammer 136 hat vielmehr eine Speicherfunktion für das Medium m₄, so dass dieses Medium im Betrieb im Wesentlichen nicht bewegt wird. Das Medium m₄ wird vielmehr im Wesentlichen nur zum Befüllen dieser Speichereinrichtung 332 bzw. beim Entleeren bewegt.

Es kann vorgesehen sein, dass genau ein Verbindungsrohr 322 vorgesehen ist. Es können auch mehrere Verbindungsrohre 322 bzw. "Taschen" vorgesehen sein.

Der Anschlussstutzen 320 ist gemäß der achten Gestaltungsform senkrecht zur Längsachse der Verbindungsrohre ausgerichtet, und zwar seitlich an der zweiten Kammereinrichtung 12.

Gemäß der achten Gestaltungsform sind zwischen den Rohren 14 bzw. 16 bzw. 18 bzw. 20 Zwischenräume 180 bzw. 182 gegeben, die oben beispielhaft erwähnter Weise von einem Medium m₂, wie beispielsweise Luft, durchströmt werden können.

Gemäß der achten Gestaltungsform sind allerdings wenigstens zwei Verbindungsrohre 14, 18 bzw. wenigstens zwei Verbindungsrohre 16, 20 gegeben, in deren Zwischenraum das Verbindungsrohr 322 angeordnet ist, und zwar so, dass es die Verbindungsrohre 14, 18 bzw. 16, 20 kontaktiert, so dass eine Wärmeübertragung zwischen dem im Verbindungsrohr 322, einerseits, befindlichen Medium m₄ und dem in den Verbindungsrohren 14, 16, 18, 20 andererseits strömenden Medium ermöglicht wird.

Der Querschnitt bzw. Kanalquerschnitt des Verbindungsrohres 322 ist in der Gestaltung gemäß Fig. 25 größer als der jeweilige Querschnitt bzw. Kanalquerschnitt der Verbindungsrohre 14, 16, 18, 20.

Im Folgenden soll nun die Strömungsführung des Mediums m₁ dargestellt werden:

Das Medium m₁ strömt über den Zulauf 110 in die äußere Kammer 132 der ersten Kammereinrichtung 1 und von dort durch die Verbindungsrohre 16 in die äußere Kammereinrichtung 138 der zweiten Kammereinrichtung 12. In der Kammer 138 wird das Medium m₁ so umgelenkt (vgl. gekrümmter Pfeil in Fig. 25 in Kammer 138), und zwar insbesondere in die Breitenrichtung 92, so dass es anschließend durch die Verbindungsrohre 20 in die äußere Kammer 232 der ersten Kammereinrichtung 10 strömt. In der Kammer 232 wird das Medium m₁ so umgelenkt (vgl. Pfeil 150), und zwar insbesondere in Tiefenrichtung 94, dass es anschließend durch die Verbindungsrohre 18 in die äußere Kammer 140 der zweiten Kammereinrichtung 12 strömt. In dieser Kammer 140 wird das Medium m₁ so umgelenkt (vgl. gekrümmter Pfeil in Fig. 25 in Kammer 140), und zwar insbesondere in der Breite bzw. in Breitenrichtung 92, dass es anschließend durch die Verbindungsrohre 14 in die äußere Kammer 134 der ersten Kammereinrichtung 10 strömt, aus welcher es über den Ablauf 112 strömt.

Wie insbesondere Fig. 25 zeigt, ist die am ersten Ende 324 des Verbindungsrohres 322 gelegene erste Öffnung 326 des Verbindungsrohres 322, in Richtung der Längsachsen der Verbindungsrohre gesehen, beabstandet zu den ersten Öffnungen 56, 60, 54, 58 der Verbindungsrohre 16, 20, 14, 18. Im Bereich des jeweiligen ersten Endes 324 weist somit das Verbindungsrohr 322 ein anderes Längenniveau auf, als die Verbindungsrohre 16, 20, 14, 18 im Bereich ihres ersten Endes. Die Verbindungsrohre 14, 16, 18, 20 weisen im Bereich ihres ersten Endes in der Gestaltung gemäß den Figuren 23 bis 25 jeweils das gleiche Längenniveau auf.

Die im Bereich des zweiten Endes 328 gelegene zweite Öffnung 330 des Verbindungsrohres 322 ist in der Gestaltung gemäß Fig. 23 bis 25, in Richtung der Längsachse der Verbindungsrohre gesehen, beabstandet zu den zweiten Öffnungen 64, 68, 62, 66 der Verbindungsrohre 16, 20, 14, 18. Das Verbindungsrohr 322 weist im Bereich seines zweiten Endes 328 ein anderes Längenniveau auf als die Verbindungsrohre 14, 16, 18, 20, die in dieser Gestaltung jeweils das gleiche Längenniveau aufweisen.

Das Medium m₄ ist eingeschlossen bzw. fest bevorratet, und kann gegebenenfalls ausgewechselt werden, wozu der Anschlussstutzen 320 beispielsweise mit einem lösbaren Deckel versehen sein kann.

Die zwei inneren Kammern 130, 136 dienen zur Befüllung eines weiteren Mediums m₄ und werden im Betrieb nicht durchströmt. Die äußeren zwei bzw. drei Kammern 232, 138 bzw. 132 in Verbindung mit den Trenn- bzw. Zwischenwänden 284, 148 kann beispielsweise eine Abbildung der Strömungsführung darstellen, wie sie bei einem 2-Tank-Verdampfer gegeben sein kann. Es können auch mehrere solcher Flachrohre oder "Taschen" für das Medium m₄ im Wärmtauscher 1 eingesetzt werden.

Die Gestaltung gemäß den Figuren 23 bis 25 kann beispielsweise für einen Idle/Stop-Verdampfer eingesetzt bzw. verwendet werden, bzw. als solcher, oder allgemein als bzw. bei einem Wärmetauscher, bei dem ein Speichermedium (hier m₄) eingesetzt werden soll oder muss. Ein Idle/Stop-Verdampfer kann insbesondere so sein, dass die Funktion des Mediums m₁ vom Medium m₄ übernommen wird, wenn das Medium m₁ zum Erliegen kommt.

Die Gestaltung gemäß Fig. 20 bis 22 hat beispielsweise den Vorteil, dass Kammern bzw. eine bzw. die inneren Kammern zur Befüllung eines Speichermediums bzw. des Mediums m₄ eingesetzt werden.

Bevorzugt ist vorgesehen, dass als Medium m₄ ein Medium eingesetzt wird, was im Vergleich zum Medium m₁ bei relativ hohen Temperaturen gefriert.

Es kann beispielsweise auch folgendes vorgesehen sein: Das Medium m₁ kann beispielsweise ein Kältemittel sein. Es kann beispielsweise die Gestaltung gemäß den Figuren 23 bis 25 in einem Kraftfahrzeug eingesetzt werden, wobei während der Fahrt des Kraftfahrzeuges die Zwischenräume 180, 182 von Luft (m₂) durchströmt werden. Die Temperatur des Mediums m₁ liegt unterhalb der Gefriertemperatur des Mediums m₄ und friert es ein. Kommt das Medium m₂ zum Erliegen, beispielsweise bei stehendem Motor, dann entzieht das Medium m₄ Wärme dem Medium m₂.

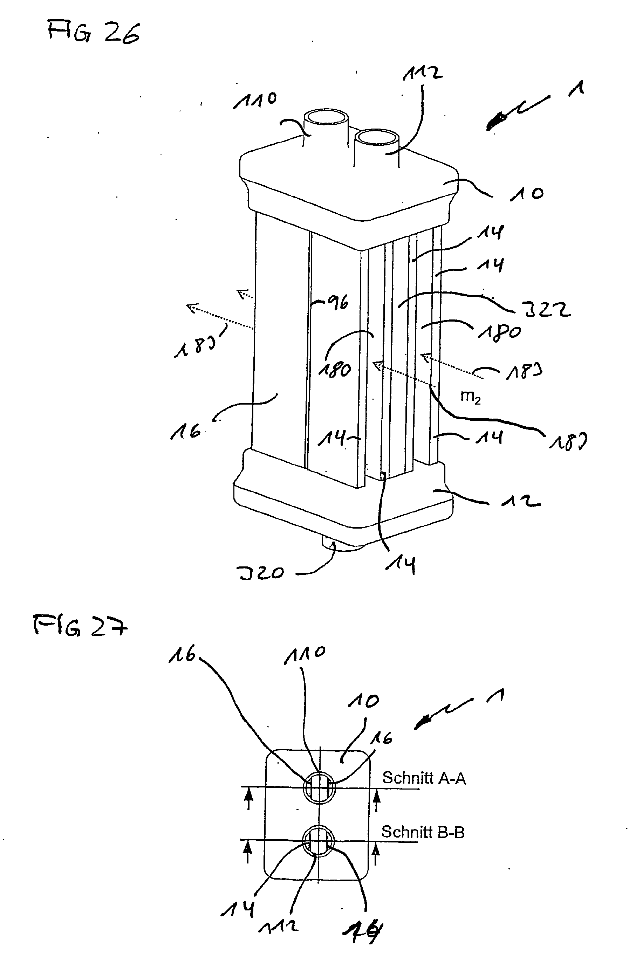

Die Figuren 26 bis 28 zeigen eine neunte, beispielhafte Gestaltungsform in schematischer Darstellung.

Fig. 26 zeigt eine dreidimensionale Ansicht der neunten Gestaltungsform.

Fig. 27 zeigt eine Draufsicht auf die Gestaltung gemäß Fig. 26.

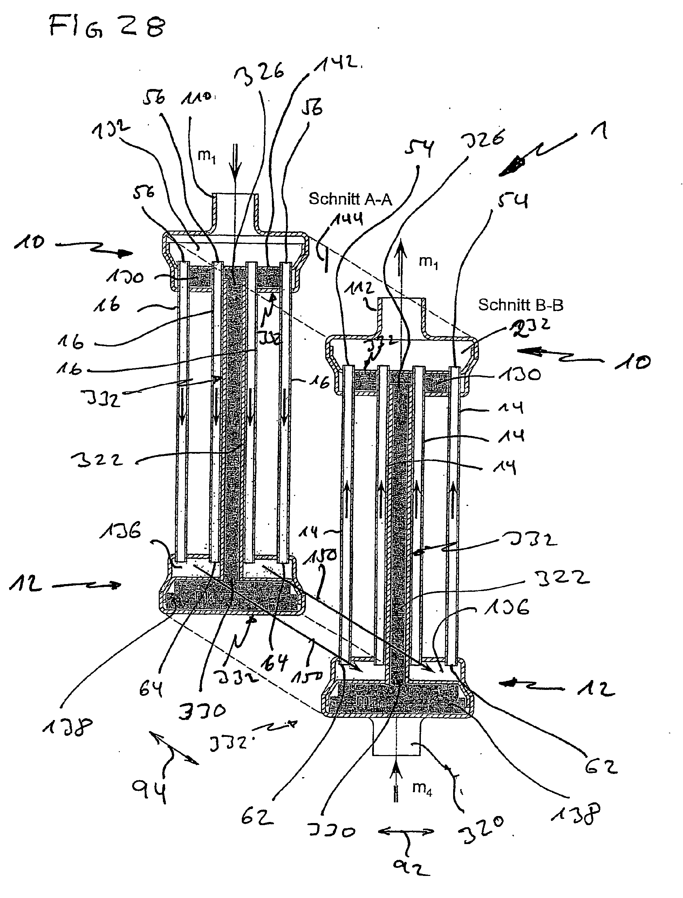

Fig. 28 zeigen Schnittansichten A-A und B-B aus Fig. 27.

Im folgenden sollen insbesondere Unterschiede der Gestaltung gemäß den Fig. 26 bis 28 gegenüber der Gestaltung gemäß den Fig. 23 bis 25 erläutert werden. Im übrigen wird auf die Beschreibung der Gestaltung gemäß den Fig. 23 bis 25 verwiesen.

Die Gestaltung gemäß Fig. 26 bis 28 unterscheidet sich der gemäß Fig. 23 bis 25 im Wesentlichen dadurch, dass der Zulauf 110 und der Ablauf 112 so angeordnet ist, wie beispielsweise in den Gestaltungen gemäß der Figuren 1 bis 6 sowie 10 bis 12. Ferner unterscheidet sich die Gestaltung gemäß Fig. 26 bis 28 dadurch, dass der Anschlussstutzen 320 für das Medium m₄ nicht seitlich an der zweiten Kammereinrichtung 12 angeordnet ist, sondern auf der der ersten Kammereinrichtung 10 abgewandten Seite. Die Längsachse dieses Stutzens 320 verläuft im Wesentlichen parallel zu den Längsachsen der Verbindungsrohre.

In Fig. 26 sind ferner nur Verbindungsrohre 16 und 14 dargestellt, und nicht Verbindungsrohre 18 und 20. Ein Verbindungsrohr 322 ist allerdings auch in der Gestaltung gemäß Fig. 26 gegeben.

Die erste Kammereinrichtung 10 in der Gestaltung gemäß Fig. 26 bis 28 unterscheidet sich von der in der Gestaltung gemäß Fig. 23 bis 25 im Wesentlichen durch die Anordnung des Zulaufs 110 sowie des Ablaufs 112 sowie dadurch, dass auf der aus Sicht der zweiten Kammereinrichtung 12 abgewandten Seite der Zwischenwand 142 keine Zwischenwand 284 gegeben ist, dafür allerdings die Zwischenwand 144 in Breitenrichtung 192 durchläuft, also nicht nur bis zu der - ohnehin nicht vorhandenen - Zwischenwand 284.

Die zweite Kammereinrichtung 12 gemäß Fig. 26 bis 28 unterscheidet sich von der zweiten Kammereinrichtung 12 gemäß Fig. 23 bis 25 im Wesentlichen dadurch, dass die Zwischenwand 148 in der Gestaltung gemäß Fig. 26 bis 28 fehlt, so dass in der zweiten Kammereinrichtung 12 nicht zwei, sondern eine äußere Kammer 138 vorgesehen ist.

Gegenüber der Gestaltung gemäß Fig. 23 bis 25 sind in der Gestaltung gemäß Fig. 26 bis 28 ferner die Verbindungsrohre 14, 16, 322 abweichend angeordnet. Die Verbindungsrohre 18, 20 sind in der Gestaltung gemäß Fig. 26 bis 28 nicht gegeben bzw. sind Verbindungsrohre 14, 16.

In der Gestaltung gemäß Fig. 26 bis 28 verbinden die Verbindungsrohre 16 die äußere Kammer 132 der ersten Kammereinrichtung 10 strömungstechnisch mit der inneren Kammer 136 der zweiten Kammereinrichtung 12. Die Verbindungsrohre 14 verbinden die äußere Kammer 232 der ersten Kammereinrichtung 10 strömungstechnisch mit der inneren Kammer 136 der zweiten Kammereinrichtung 12.

Das Verbindungsrohr 322 verbindet in der Gestaltung gemäß Fig. 26 bis 28 die innere Kammer 130 der ersten Kammereinrichtung 10 strömungstechnisch mit der äußeren Kammer 138 der zweiten Kammereinrichtung 12.

In der Gestaltung gemäß Fig. 26 bis 28 sind die ersten Öffnungen 56 der Verbindungsrohre 16, in Richtung der Längsachsen der Verbindungsrohre gesehen, nicht von den ersten Öffnungen 54 der Verbindungsrohre 14 nicht beabstandet. Die ersten Öffnungen 56, 54 sind in der Gestaltung gemäß Fig. 26 bis 28 allerdings, in Richtung der Längsachsen der Verbindungsrohre gesehen, beabstandet von der ersten Öffnung 326 des Verbindungsrohrs 322 angeordnet. Auch in der Gestaltung gemäß Fig. 26 bis 28 weisen die Verbindungsrohre 14, 16 einerseits und das Verbindungsrohr 326 andererseits somit im Bereich des ersten Endes unterschiedliche Längeniveaus auf.

Unterschiedliche Längenniveaus der genannten Verbindungsrohre sind auch im Bereich der zweiten Enden gegeben. Die zweiten Öffnungen 64 der Verbindungsrohre 16 sowie die zweiten Öffnungen 62 der Verbindungsrohre 14 sind, in Richtung der Längsachsen der Verbindungsrohre gesehen, in der Gestaltung gemäß Fig. 26 bis 28 nicht zueinander beabstandet, allerdings zur zweiten Öffnung 330 des Verbindungsrohres 322.

Wie auch in der Gestaltung gemäß Fig. 23 bis 25 ist in der Gestaltung gemäß Fig. 26 bis 28 eine Speichereinrichtung 332 für ein Medium m₄ vorgesehen, welches über den Stutzen 320 eingefüllt werden kann. Während diese Speichereinrichtung 332 in der Gestaltung gemäß Fig. 23 bis 25 die Kammern 130, 136 sowie das Verbindungsrohr 122 aufweist, ist in der Gestaltung gemäß Fig. 26 bis 28 vorgesehen, dass diese Speichereinrichtung 332 die innere Kammer 130 der ersten Kammereinrichtung 10, die äußere Kammer 138 der zweiten Kammereinrichtung 12 sowie das Verbindungsrohr 322 aufweist. Der Anschlussstutzen 320 kann ebenfalls von einem Deckel versehen sein, der geöffnet und verschlossen werden kann, und gegebenenfalls lösbar ist.

Die Strömungsführung für das Medium m₁ ist in der Gestaltung gemäß den Figuren 26 bis 28 wie folgt:

Das Medium m₁ wird über den Zulauf 110 in die äußere Kammer 132 der ersten Kammereinrichtung 10 geleitet und strömt von dort durch die Verbindungsrohre 16 in die innere Kammer 136 der zweiten Kammereinrichtung 12. In der Kammer 136 wird das Medium m₁ so umgelenkt (Pfeil 150), und zwar insbesondere in der Tiefe bzw. in Tiefenrichtung 94, dass es anschließend durch das Verbindungsrohr 14 in die äußere Kammer 132 der ersten Kammereinrichtung 10 strömt, welches es über den Ablauf 112 verlässt.

Die unter äußere Kammer 138 sowie die obere innere Kammer 130 bzw. das Verbindungsrohr 322 dienen zur Befüllung eines (zweiten) Mediums m₄. Diese Kammern 138, 140 bzw. das Verbindungsrohr 322 werden im Betrieb nicht durchströmt. Das Medium m₁ wird nur einmal in der Tiefe bzw. in Tiefenrichtung 94 umgelenkt, und zwar hier in der unteren inneren Kammer 136.

Es können auch mehrere Flachrohre oder "Taschen" für das Medium m₄ im Wärmetauscher 1 gegeben sein.

Die Medien m1, m2, und m4 können beispielsweise so sein wie es beispielhaft im Rahmen der Beschreibung zu Fig. 23 bis 25 genannt ist. Die Gestaltung gemäß Fig. 26 bis 28 kann beispielsweise auch so eingesetzt bzw. verwendet werden, wie es im Rahmen der Beschreibung zu Fig. 23 bis 25 beispielhaft erläutert wurde.

Die Gestaltung gemäß Fig. 26 bis 28 hat den Vorteil, dass eine innere Kammer 130 und / oder eine äußere Kammer 138 zur Befüllung des Speichermediums bzw. des Mediums m₄ eingesetzt werden kann.

Fig. 29 zeigt eine erfindungsgemäße Ausführungsform der Erfindung in dreidimensionaler Explosionsansicht und schematischer Darstellung und Fig. 30 zeigt einen vergrößerten Ausschnitt der Gestaltung gemäß Fig. 29.

Der Wärmetauscher 1 gemäß der zehnten Gestaltungsform der Erfindung ist ein reiner innerer Wärmeübertrager, der in den Gestaltungen gemäß Fig. 29 und Fig. 30 als Plattenbauweise ausgeführt ist.

Der Wärmetauscher 1 weist einen Zulauf 110 sowie einen Ablauf 112 für ein Medium m₁ auf. Ferner weist der Wärmeübertrager 1 einen Zulauf 114 sowie einen Ablauf 116 für ein Medium m₃ auf.

Der Wärmetauscher 1 weist ferner eine erste Kammereinrichtung 10 auf sowie eine zweite Kammereinrichtung 12. Ferner weist der Wärmetauscher 1 eine Vielzahl von Verbindungsrohren 14, 16 auf, die jeweils die erste Kammereinrichtung 10 mit der zweiten Kammereinrichtung 12 strömungstechnisch verbinden.

Die Verbindungsrohre 14 und 16 sind jeweils als Flachrohre gestaltet. Die Verbindungsrohre 14 weisen an ihrem zweiten Ende 30 eine Vielzahl von zweiten Öffnungen 62 auf, und an ihrem ersten Ende 22 eine Vielzahl von in Fig. 29 verdeckt dargestellten ersten Öffnungen 54. Die ersten Öffnungen 54 und die zweiten Öffnungen 62 der Verbindungsrohre 14 sind an gegenüberliegenden Stirnseiten der Verbindungsrohre 14 angeordnet. Jede erste Öffnung 54 des Verbindungsrohres 14 wird mit jeweils einer zweiten Öffnung 62 strömungstechnisch über einen Kanal 38, der verdeckt dargestellt ist, im Inneren des Verbindungsrohres 14 verbunden. Sämtliche dieser Kanäle 38 des gleichen Verbindungsrohres 14 bzw. ihre Längsachsen sind parallel zueinander angeordnet. Die Kanäle 38 eines Verbindungsrohres 14 sind so angeordnet, dass sie in ihrer Gesamtheit eine Ebene aufspannen. Es sind also in einer Richtung - hier Tiefenrichtung 92 - die Kanäle 38 eines Verbindungsrohres 14 nebeneinander aufeinanderfolgend angeordnet, wobei senkrecht hierzu und senkrecht zur Längsachse der Kanäle 38 bei jedem der Verbindungsrohre 14 genau ein Kanal dieses Verbindungsrohres 14 vorgesehen ist. Wie Fig. 29 zeigt, sind in dieser Richtung, in der in jedem Verbindungsrohr 14 genau ein Kanal vorgesehen ist, - - diese Richtung ist hier die Breitenrichtung 94 - allerdings mehrere Verbindungsrohre 14 angeordnet, so dass auch mehrere Kanäle 38, die allerdings unterschiedlichen Verbindungrohren 14 zugeordnet sind, in dieser Richtung gegeben sind.

Auch die Verbindungsrohre 16 weisen eine Vielzahl von an ihrem zweiten Ende 32 angeordneten zweiten Öffnungen 64 auf, sowie eine Vielzahl von an ihrem ersten Ende 24 angeordneten ersten Öffnungen 56, die ebenfalls verdeckt dargestellt sind. Auch in den Verbindungsrohren 16 ist jeweils eine Vielzahl von Kanälen 40 gegeben.

Die Anordnung der Kanäle sowie der ersten und der zweiten Öffnungen ist bei den Verbindungsrohren 16 im wesentlichen so, wie es vorstehend in Bezug auf die Verbindungsrohre 14 beschrieben wurde.

Die Längsachsen der Kanäle 40 der Verbindungsrohre 16 sind jeweils parallel ausgerichtet zu den Längsachsen der Kanäle 38 der Verbindungsrohre 14.

Wie Fig. 29 zeigt, ist eine Vielzahl von Verbindungsrohren 14, 16 jeweils im Wechsel angeordnet.

Die im Wechsel jeweils aufeinander folgenden Verbindungsrohre 14, 16 liegen jeweils an dem folgenden Verbindungsrohr an, so dass sie im Kontaktbereich Wärmeaustauschbereiche bilden, in dem ein Wärmeaustausch zwischen dem in den Verbindungsrohren 14 und dem in den Verbindungsrohren 16 strömenden Medium erfolgen kann.

Wie Fig. 29 zeigt, sind die ersten Öffnungen 54 der Verbindungsrohre 14, in Längsrichtung 46, 48 der Verbindungsrohre 14, 16 gesehen, beabstandet von den ersten Öffnungen 56 der Verbindungsrohre 16. Im Bereich ihrer ersten Enden 22, 24 weisen die Verbindungsrohre 14, 16 ein unterschiedliches Längenniveau auf.

In entsprechender Weise sind, wie deutlich auch aus der vergrößerten Darstellung gemäß Fig. 30 ersichtlich ist, die zweiten Öffnungen 62 der Verbindungsrohre 16, in Längsrichtung 46, 48 der Verbindungsrohre 14, 16 gesehen, voneinander beabstandet.

Die Verbindungsrohre 14, 16 weisen also auch an ihrem zweiten Ende 30, 32 ein unterschiedliches Längenniveau auf. In der Gestaltung gemäß der Figuren 29 und 30 sind die erste Kammereinrichtung 10 sowie die zweite Kammereinrichtung 12 jeweils plattenförmig aufgebaut. Die erste Kammereinrichtung 10 weist mehrere Platten 350, 352, 354 auf. Die zweite Kammereinrichtung 12 weist ebenfalls mehrere Platten 356, 358, 360 auf.

Die Platten 350, 356 sind Verbindungsplatten. Diese Verbindungsplatten weisen jeweils mehrere Öffnungen 362, 364 bzw. 366, 368 auf. Wie Fig. 29 entnommen werden kann, sind in den Verbindungsplatten 350, 356 jeweils mehrere Öffnungen 364 und mehrere Öffnungen 362 und mehrere Öffnungen 366 und mehrere Öffnungen 368 vorgesehen.

Jeder dieser Öffnungen 362, 364, 366, 368 ist jeweils eine Öffnung 370 bzw. 372 bzw. 374 bzw. 376 zugeordnet. Die Öffnungen 374, 376 sind in Fig. 29 verdeckt. Mehrere Öffnungen 370 sind an dem Zulauf 110 angeordnet, und mehrere Öffnungen 372 sind an dem Ablauf 112 vorgesehen. Mehrere Öffnungen 374 sind an dem Zulauf 114 vorgesehen, und mehrere Öffnungen 376 sind an dem Ablauf 116 vorgesehen. Diese Öffnungen 370, 372, 374, 376 sind jeweils an der Mantelfläche dieses Zu- bzw. Ablaufes angeordnet. Die Öffnungen 370 sind so angeordnet, dass sie im wesentlichen in Reihe liegen bzw. entlang einer Geraden angeordnet sind. Entsprechendes gilt für die Öffnungen 372, 374 und 376. Diese Gerade ist jeweils so ausgerichtet, dass sie im wesentlichen in Längsrichtung des betreffenden Zulaufs bzw. Ablaufs gelegen.

Die Längsachsen der Zuläufe 110, 114 sowie der Abläufe 112, 116 sind im wesentlichen parallel zueinander angeordnet und senkrecht zu den Längsachsen 46, 48 der Verbindungsrohre 14, 16 bzw. deren Kanälen ausgerichtet.

Die Platten 352 bzw. 358 weisen eine Vielzahl von Durchgangsöffnungen 378, 380 bzw. 382, 384 auf. Diese Öffnungen 378, 380 bzw. 382, 384 erstrecken sich im wesentlichen länglich in der Plattenebene der Platte 352 bzw. 358. Sie können beispielsweise - wie in den Figuren 29 und 30 gezeigt - im senkrecht zu den Längsachsen 46, 48 der Verbindungsrohre 14, 16 betrachteten Querschnitt im wesentlichen rechteckig gestaltet sein.

Jeder dieser Durchgangsöffnungen 378 bzw. 380 bzw. 382 bzw. 384 ist eine Öffnung 362 bzw. 364 bzw. 366 bzw. 368 der Verbindungsplatte 350 bzw. 358 sowie eine Öffnung 370 bzw. 372 bzw. 374 bzw. 376 des Zu- bzw. Ablaufs 110 bzw. 112 bzw. 114 bzw. 116 zugeordnet. Die Platte 350 deckt die Durchgangsöffnungen 378, 380 der Platte 352 von einer Seite ab, wobei allerdings eine Strömungsverbindung zwischen dem Zulauf 110 und der Durchgangsöffnung 378 über die Öffnung 362 gegeben ist und eine Strömungsverbindung zwischen der Durchgangsöffnung 380 und den Öffnungen 372 des Ablaufs 112 über die Öffnungen 364.

In entsprechender Weise deckt die Verbindungsplatte 356 die Durchgangsöffnungen 382, 384 ab.

Die Verbindungsplatte 350 ist also zwischen dem Zulauf 110 bzw. dem Ablauf 112, einerseits, und der Platte 352, andererseits, angeordnet. In entsprechender Weise ist die Verbindungsplatte 356 zwischen dem Zulauf 114 bzw. dem Ablauf 116, einerseits, und der Platte 358, andererseits, angeordnet.

Der Zu- 110 bzw. Ablauf 112 steht in Kontakt mit der Platte, 350 und die Platte 350 steht in Kontakt mit der Platte 352. In entsprechender Weise steht der Zu- 114 und der Ablauf 116 in Kontakt mit der Platte 356, und die Platte 356 steht in Kontakt mit der Platte 358.

Die Platten 354, 356 der ersten 10 bzw. zweiten Kammereinrichtung 12 sind jeweils auf der der anderen Kammereinrichtung 12, 10 zugewandten Seite der Kammereinrichtung 10, 12 angeordnet. Die Platte 354 kontaktiert die Platte 352, und die Platte 360 kontaktiert die Platte 358.

Die Platten 354, 360 sind im wesentlichen rahmenartig gestaltet und weisen Vorsprünge 386 auf.

Im montieren Zustand erstrecken sich die Verbindungsrohre 14, die an ihrem ersten Ende 22 ein längeres Längenniveau aufweisen als die Verbindungsplatten 16, also weiter nach außen vorstehen, durch die Platte 354. Entsprechend strecken sich die Platten 16, die im Bereich der zweiten Kammereinrichtung 12 gegenüber den Verbindungsrohren 14 sich weiter nach außen erstrecken bzw. ein größeres Längenniveau aufweisen, durch die Platte 360.

Die Platten 352, 358 weisen zwischen den Durchgangsöffnungen 378 bzw. zwischen den Durchgangsöffnungen 380 bzw. zwischen den Durchgangsöffnungen 382 bzw. zwischen den Durchgangsöffnungen 384 Stege 388 bzw. 390 bzw. 392 bzw. 394 auf. Das Dickenmaß dieser Stege, also der Abstand, der zwischen jeweils zwei benachbarten Durchgangsöffnungen 378 bzw. zwischen jeweils zwei benachbarten Durchgangsöffnungen 380 bzw. jeweils zwei benachbarten Durchgangsöffnungen 382 bzw. zwischen jeweils zwei benachbarten Durchgangsöffnungen 384 durch die Stege erzeugt wird, entspricht im wesentlichen der Dicke der Flachrohre, also deren Maß, das senkrecht zur Ebene gegeben ist, in dem sich diese Flachrohre erstrecken.

Senkrecht zu den Stegen 388, 390, 392, 394 sind in den Platten 352 bzw. 358 Stege 396 bzw. 398 vorgesehen, die die Durchgangsöffnungen 378 von den Durchgangsöffnungen 380 bzw. die Durchgangsöffnungen 382 von den Durchgangsöffnungen 384 trennen.

Die Verbindungsplatten 14 weisen im Bereich ihres ersten Endes endseitige Schlitze 400 auf und die Verbindungsplatten 16 weisen im Bereich ihres zweiten Endes 32 Schlitze 402 auf. Die Schlitze 400 bzw. 402 sind so, dass im montierten Zustand die Stege 396 in die Schlitze 400 eingreifen und die Stege 398 in die Schlitze 402. In diesem montierten Zustand werden in den Durchgangsöffnungen 378 Kammern gebildet, in welche die Öffnungen 362, einerseits, und ein Teil der ersten Öffnungen 54 der Verbindungsrohre 14, andererseits, münden. In entsprechender Weise werden in den Durchgangsöffnungen 380 jeweils Kammern gebildet, in welche die Öffnungen 364, einerseits, und ein Teil der ersten Öffnungen 54, andererseits, münden. Der Teil der Öffnungen 54, der in die Durchgangsöffnungen 378 mündet, ist der, der auf der einen Seite des Schlitzes 400 angeordnet ist, während der Teil der ersten Öffnungen 54, der in die Durchgangsöffnungen 380 jeweils mündet, der Teil ist, der auf der anderen Seite der Schlitze 400 angeordnet ist.

In entsprechender Weise werden in den Durchgangsöffnungen 382 jeweils Kammern gebildet, in welche die Öffnungen 366 der Platte 356 sowie ein Teil der zweiten Öffnungen 64 der Verbindungsrohre 16 münden. Auch hier ist dieser Teil der Öffnungen 64 der Teil, der auf der einen Seite des Schlitzes 402 angeordnet ist. Der jeweils auf der anderen Seite des Schlitzes 402 angeordnete Teil der zweiten Öffnungen 64 der Verbindungsrohre 16 mündet in Kammern, die in den Durchgangsöffnungen 384 gebildet werden, und in welche andererseits die Öffnungen 368 münden.

Die ersten Enden 24 der Verbindungsrohre 16 münden in die Platte 354, erstrecken sich allerdings nicht vollständig durch diese. Gegenüberliegend der ersten Stirnflächen, die an den ersten Enden 24 der Verbindungsrohre 16 angeordnet sind, sind Stege 388 jeweils positioniert, so dass in der Platte 354 innere Kammern 402 der ersten Kammereinrichtung 10 gebildet werden, die durch die ersten Endbereiche der benachbarten Verbindungsrohre 14, die Stege 388, 390 und die ersten Stirnflächen der Verbindungsrohre 16 sowie jeweils einen Abschnitt der rahmenartigen Platte 354 begrenzt werden. In diesen Kammern 402 münden die ersten Öffnungen 356 der Verbindungsrohre 16.

In entsprechender Weise werden in der Platte 360 Kammern 404 gebildet. Diese Kammern 404 werden jeweils durch Abschnitte der Wand 360 sowie durch die benachbarten, weiter nach außen vorstehenden Endbereiche der Verbindungsrohre 16 begrenzt. Ferner werden diese Kammern 404, in Richtung der Längsachsen 46 der Verbindungsrohre 14 gesehen, durch die am zweiten Ende der Verbindungsrohre 16 gelegenen Stirnflächen und, diesen gegenüberliegend, durch die Stege 392, 394 der Platte 358 begrenzt.

Die Strömungsführung des Mediums m₁ sowie des Mediums m₃ ist in der Gestaltung gemäß Fig. 29 und Fig. 30 wie folgt:

Das Medium m₁ wird durch den Zulauf 110 zugeführt und tritt durch dessen Öffnungen 370 sowie die sich an diese anschließenden, in der Platte 350 vorgesehenen Öffnungen 362 in die Kammern 378 ein. Von den Kammern 378 strömt das Medium m₁ durch die auf der einen Seite der Schlitze 400 gelegenen ersten Öffnungen der Verbindungsrohre 14 in die zugeordneten Kanäle 38 ein, aus welchen es durch die zweiten Öffnungen 62 dieser Verbindungsrohre 14 in die Kammer 404 strömt, in welcher das Medium m₁ so umgelenkt wird, und zwar insbesondere in Tiefenrichtung 94, dass es durch die verbleibenden zweiten Öffnungen 62 des jeweiligen, selben, Verbindungsrohres 14 in die verbleibenden Kanäle 38 dieses Verbindungsrohres 14 strömt, und aus diesen durch die verbleibenden, auf der anderen Seite des Schlitzes 400 angeordneten ersten Öffnungen der Verbindungsrohre 14 in die Kammern 380 strömt, welche das Medium m₁ durch die jeweilige Öffnung 364 sowie die jeweilige Öffnung 372 verlässt, um in den Ablauf 112 einzutreten.

In entsprechender Weise strömt das Medium m₃ vom Zulauf 114 durch dessen Öffnungen 374 sowie die Öffnungen 366 in die Kammern 382, aus welchen es durch einen Teil der zweiten Öffnungen 64 der Verbindungsrohre 16 sowie die sich hieran anschließenden Kanäle 40 der Verbindungsrohre strömt, um durch die diesen Kanälen 40 zugeordneten zweiten Öffnungen 56 der Verbindungsrohre 24 in die Kammern 402 zu strömen, in welchen das dritte Medium m₃, insbesondere in Tiefenrichtung 94, so umgelenkt wird, dass es anschließend durch die jeweils auf der anderen Seite der Schlitze 402 gelegenen ersten Öffnungen der Verbindungsrohre 16 sowie die sich an diese Öffnungen anschließenden Kanäle 40 der Verbindungsrohre 16 zur jeweiligen zweiten Öffnung 64, die dem jeweiligen Kanal 40 zugeordnet ist, strömt. Durch die zweiten Öffnungen 64 strömt das Medium m₃ in die Kammern 184, welches es über die Öffnungen 368 sowie die Öffnungen 376 verlässt; um in bzw. durch den Ablauf 116 zu strömen.

Wie auch die Ausführungsbeispiele gemäß den Fig. zeigen, legt die Erfindung eine grundlegende Basis für eine Vielzahl von Gestaltungsformen vorteilhaft gestalteter Wärmetauschern. Die Ausführungsbeispiele zeigen (nur) Wärmetauscher, bei denen in Richtung der Längsachsen der die erste und zweiten Kammereinrichtung strömungstechnisch verbindenden Verbindungsrohre in der ersten bzw. zweiten Kammereinrichtung bis zu zwei Kammern in Reihe bzw. hintereinander angeordnet sind. An den besagten Stellen können allerdings auch drei, vier fünf oder mehr Kammern hintereinander bzw. in Reihe angeordnet sein, wobei mittels der Erfindung auch solche Gestaltungen in beliebiger Weise und auf einfache Weise strömungstechnisch verschaltet werden können.

Mittels der Erfindung können insbesondere komplexe Strömungsführungen leicht realisiert werden.

Die Erfindung legt ferner die Basis für Gestaltungen, bei denen mehr als zwei Medien wärmtechnisch und gleichzeitig (örtlich und zeitlich) miteinander in Kontakt kommen.

Weiter legt die Erfindung die Basis für Gestaltungen, bei denen sowohl innere als auch äußere Sammelkammern sowohl zur Umlenkung in der Breite als auch zur Umlenkung der Tiefe benutzt werden.

Ferner legt die Erfindung die Basis für Gestaltungen, bei denen sowohl innere als auch äußere Sammelkammern zur Durchmischung des Fluids/Gases benutzt werden.

Ferner legt die Erfindung die Basis für Gestaltungen, bei denen sowohl innere als auch äußere Sammelkammern zur Befüllung und/oder zur Bevorratung, z. B. eines Speichermediums, verwendet werden.

Es sei klarstellend angemerkt, dass die genannten Vorteile bzw. Wirkungen selbstverständlich nicht bei sämtlichen Gestaltungsformen der Erfindung gegeben sind bzw. gegeben sein müssen; die Erfindung legt vielmehr die Basis für Gestaltungen, die solche Vorteile aufweisen.

## Patentansprüche

1. Wärmetauscher für Kraftfahrzeuge, welcher eine erste Kammereinrichtung (10) und eine von dieser beabstandete zweite Kammereinrichtung (12) aufweist, sowie mehrere Verbindungsrohre (14, 16, 18, 20), die sich jeweils mit ihrem ersten Ende (22, 24, 26, 28) in die erste Kammereinrichtung (10) und mit ihrem anderen, zweiten Ende (30, 32, 34, 36) in die zweite Kammereinrichtung (12) erstrecken, wobei jedes dieser Verbindungsrohre (14, 16, 18, 20) wenigstens einen Kanal (38, 40, 42, 44) mit einer sich gerade erstreckenden Längsachse (46, 48, 50, 52) aufweist, der eine erste, im Bereich des ersten Endes (22, 24, 26, 28) angeordnete Öffnung (54, 56, 58, 60) des jeweiligen Verbindungsrohres (14, 16, 18, 20) mit einer zweiten, im Bereich des zweiten Endes (30, 32, 34, 36) angeordnete Öffnung (62, 64, 66, 68) dieses jeweiligen Verbindungsrohres (14, 16, 18, 20), insbesondere strömungstechnisch, verbindet, wobei die beiden Kammereinrichtungen (10, 12) über jeden Kanal (38, 40, 42, 44) dieser Verbindungsrohre (14, 16, 18, 20), insbesondere strömungstechnisch, miteinander verbunden sind, und wobei die Längsachsen (46, 48, 50, 52) der Kanäle (38, 40, 42, 44) jeweils im Wesentlichen parallel zueinander verlaufen, wobei wenigstens eines dieser Verbindungsrohre (14, 16, 18, 20) zumindest eine erste Öffnung (54, 56, 58, 60) aufweist, die von zumindest einer ersten Öffnung (54, 56, 58, 60) wenigstens eines anderen dieser Verbindungsrohre (14, 16, 18, 20) in Richtung der Längsachse der Kanäle gesehen beabstandet ist, in einer sich senkrecht zu diesen Längsachsen (46, 48, 50, 52) der Kanäle (38, 40, 42, 44) erstreckenden Richtung (92 bzw. 94) mehrere dieser Kanäle (38, 40, 42, 44) in Reihe angeordnet sind, wobei in zumindest einer solchen Reihe jeweils aufeinander folgende Kanäle (38, 40, 42, 44) gegeben sind, die im Betrieb des Wärmetauschers in jeweils entgegengesetzten Strömungsrichtungen durchströmt werden, und wobei die Anzahl der in dieser Reihe im Betrieb des Wärmetauschers gegebenen Wechsel der Strömungsrichtung (120, 122 bzw. 126, 128) der jeweils aufeinanderfolgender Kanäle (38, 40, 42, 44) größer oder gleich der Anzahl der Kammern (130, 132, 134, 230, 232, 286, 402) ist, die in der ersten Kammereinrichtung (10) gegeben sind, und größer oder gleich der Anzahl der Kammern (136, 138, 140, 210, 212, 288, 404) ist, die in der zweiten Kammereinrichtung (12) gegeben sind, wobei die Verbindungsrohre (14,16) Rohr an Rohr und jeweils im Wechsel in Kontakt miteinander angeordnet sind und von zwei getrennten Medien m1 und m2 durchströmt werden und die Verbindungsrohre als Flachrohre ausgebildet sind, die im Bereich ihrer ersten Enden und ihrer zweiten Enden ein unterschiedliches Längenniveau aufweisen,
**dadurch gekennzeichnet, dass**
die ersten (10) und/oder die zweite Kammereinrichtung (12) von mehreren aneinander liegenden Platten gebildet wird, wobei eine erste dieser Platten eine Verbindungsplatte (350,356) mit Öffnungen (366,368,362,364) ist, welche einen Zulauf (110) und einen Ablauf (112) verbinden, eine zweite dieser Platten (352,358) der ersten Platte (350,356) benachbart ist und Öffnungen (378,380,382,384) aufweist, und eine dritte dieser Platten (354,360) rahmenartig gestaltet ist und Vorsprünge (368) aufweist, und den zweiten Platten benachbart ist, und dass die Verbindungsrohre sich an ihren ersten Enden durch die Platte (354) erstrecken und die Verbindungsrohre (16) sich an ihren zweiten Enden (32) durch die Platte (360) erstrecken, wobei die Platten (352,358) zwischen den Durchgangsöffnungen (378, 380, 382,388,390,392,394) Stege aufweisen, wobei der Abstand der zwischen zwei benachbarten Durchgangsöffnungen durch die Stege erzeugt wird im Wesentlichen der Dicke der Flachrohre entspricht.

2. Wärmetauscher nach Anspruch 1, **dadurch gekennzeichnet, dass** die erste Kammereinrichtung (10) mehrere über jeweils wenigstens eine Zwischenwand (142, 144, 234, 237, 284) getrennte Kammern (130, 132, 134, 230, 232, 286, 402) aufweist.

3. Wärmetauscher nach Anspruch 1 oder 2, **dadurch gekennzeichnet, dass** wenigstens ein einem Verbindungsrohr (14, 16, 18, 20) zugeordneter Kanal (38, 40, 42, 44) über eine erste Öffnung (54, 56, 58, 60) dieses Verbindungsrohres (14, 16, 18, 20) zum Inneren einer ersten Kammer (130) der ersten Kammereinrichtung (10) offen ist, und wenigstens ein einem anderen Verbindungsrohr (14, 16, 18, 20) zugeordneter Kanal (38, 40, 42, 44) über eine erste Öffnung (54, 56, 58, 60) dieses anderen Verbindungsrohres (14, 16, 18, 20) zum Inneren einer zweiten Kammer (132) der ersten Kammereinrichtung (10) offen ist, wobei diese erste Öffnung (54, 56, 58, 60) dieses einen Verbindungsrohres (14, 16, 18, 20) von der ersten Öffnung (54, 56, 58, 60) dieses anderen Verbindungsrohres (14, 16, 18, 20) in Längsrichtung (46, 48, 50, 52) der Verbindungsrohre (14, 16, 18, 20) gesehen beabstandet ist.

4. Wärmetauscher nach Anspruch 3, **dadurch gekennzeichnet, dass** diese erste (130) und diese zweite Kammer (132) der ersten Kammereinrichtung (10) in Längsrichtung (46, 48, 50, 52) der Verbindungsrohre (14, 16, 18, 20) gesehen beabstandet und / oder benachbart angeordnet sind.

5. Wärmetauscher nach einem der Ansprüche 1 bis 4, **dadurch gekennzeichnet, dass** die zweite Kammereinrichtung (12) mehrere über jeweils wenigstens eine Zwischenwand (146, 148, 148', 208) getrennte Kammern (136, 138, 140, 210, 212, 288, 404) aufweist.

6. Wärmetauscher nach einem der vorangehenden Ansprüche, **dadurch gekennzeichnet, dass** wenigstens eine zweite Öffnung (62, 64, 66, 68) eines dieser Verbindungsrohre (14, 16, 18, 20) in Längsrichtung (46, 48, 50, 52) der Verbindungsrohre (14, 16, 18, 20) bzw. Kanäle (38, 40, 42, 44) gesehen beabstandet ist zu wenigstens einer zweiten Öffnung (62, 64, 66, 68) eines anderen dieser Verbindungsrohre (14, 16, 18, 20).

7. Wärmetauscher nach Anspruch 6, **dadurch gekennzeichnet, dass** wenigstens ein Kanal (38, 40, 42, 44) eines der Verbindungsrohre (14, 16, 18, 20) über eine zweite Öffnung (62, 64, 66, 68) dieses Verbindungsrohres zum Inneren einer ersten Kammer der zweiten Kammereinrichtung (12) offen ist, und wenigstens ein Kanal (38, 40, 42, 44) eines anderen der Verbindungsrohre (14, 16, 18, 20) über eine zweite Öffnung (62, 64, 66, 68) dieses anderen Verbindungsrohres zum Inneren einer zweiten Kammer der zweiten Kammereinrichtung (12) offen ist, wobei diese zweite Öffnung (62, 64, 66, 68) dieses einen Verbindungsrohres (14, 16, 18, 20) von der zweiten Öffnung (62, 64, 66, 68) dieses anderen Verbindungsrohres (14, 16, 18, 20) in Längsrichtung (46, 48, 50, 52) der Verbindungsrohre (14, 16, 18, 20) gesehen beabstandet ist.

8. Wärmetauscher nach Anspruch 7, **dadurch gekennzeichnet, dass** diese erste und diese zweite Kammer der zweiten Kammereinrichtung (12) in Längsrichtung (46, 48, 50, 52) der Kanäle (38, 40, 42, 44) bzw. Verbindungsrohre (14, 16, 18, 20) gesehen beabstandet und /oder benachbart angeordnet sind.

9. Wärmetauscher nach einem der vorangehenden Ansprüche, **dadurch gekennzeichnet, dass** senkrecht zur Längsachse (46, 48, 50, 52) der Verbindungsrohre (14, 16, 18, 20) bzw. Kanäle (38, 40, 42, 44) eine Breitenrichtung (92) des Wärmetauschers (1) gegeben ist und senkrecht zu dieser Breitenrichtung (92) sowie zu dieser Längsachse (46, 48, 50, 52) eine Tiefenrichtung (94) des Wärmetauschers (1) gegeben ist, wobei in Breitenrichtung (92) und in Tiefenrichtung (94) gesehen jeweils wenigstens zwei Verbindungsrohre gegeben sind, deren ersten (54, 56, 58, 60) und / oder zweiten Öffnungen (62, 64, 66, 68) in Längsrichtung (46, 48, 50, 52) der Verbindungsrohre bzw. der Kanäle (38, 40, 42, 44) gesehen voneinander beabstandet sind.

10. Wärmetauscher nach Anspruch 1**, dadurch gekennzeichnet, dass** wenigstens ein Flachrohr genau einen Kanal (38, 40, 42, 44) aufweist.

11. Wärmetauscher nach einem der Ansprüche 1 und 10, **dadurch gekennzeichnet, dass** wenigstens ein Flachrohr mehrere Kanäle (38, 40, 42, 44) aufweist.

12. Wärmetauscher nach Anspruch 11, **dadurch gekennzeichnet, dass** die inneren Kanäle (38, 40, 42, 44) desselben Flachrohres in einer Reihe nebeneinander angeordnet sind, wobei die Längsachsen (46, 48, 50, 52) dieser Kanäle (38, 40, 42, 44) parallel verlaufen.

13. Wärmetauscher nach einem der vorangehenden Ansprüche, **dadurch gekennzeichnet, dass** die ersten (54, 56, 58, 60) sowie die zweiten Öffnungen (62, 64, 66, 68) der Verbindungsrohre (14, 16, 18, 20) jeweils stirnseitig angeordnet sind.

14. Wärmetauscher nach einem der vorangehenden Ansprüche, **dadurch gekennzeichnet, dass** der Wärmtauscher als innerer Wärmeübertrager gestaltet ist.

15. Wärmetauscher nach einem der vorangehenden Ansprüche, **dadurch gekennzeichnet, dass** zwischen benachbarten Verbindungsrohren mit parallel angeordneten Längsachsen (46, 48, 50, 52) ihrer Kanäle (38, 40, 42, 44) Zwischenräume (180, 182) gegeben sind, durch welche im Betrieb ein am Wärmaustausch beteiligtes Medium strömt.

16. Wärmetauscher nach einem der vorangehenden Ansprüche, **dadurch gekennzeichnet, dass** der Wärmetauscher (1) wenigstens einen Wärmespeicher (322) aufweist.

17. Wärmetauscher nach Anspruch 16, **dadurch gekennzeichnet, dass** der Wärmespeicher (322) wenigstens eines der Verbindungsrohre aufweist und mit einem Medium befüllt ist, wobei insbesondere vorgesehen ist, dass dieses Verbindungsrohr des Wärmetauschers (1) ein Verbindungsrohr ist, dessen erste Öffnung in Längsrichtung der Verbindungsrohre gesehen von einer ersten Öffnung eines anderen Verbindungsrohres beabstandet ist, und / oder dessen zweite Öffnung in Längsrichtung der Verbindungsrohre gesehen von einer zweiten Öffnung eines anderen Verbindungsrohres beabstandet ist.

## Claims

1. A heat exchanger for motor vehicles, comprising a first chamber device (10) and a second chamber device (12) arranged spaced therefrom, and a plurality of connecting tubes (14, 16, 18, 20), which with the respective first end (22, 24, 26, 28) thereof extend into the first chamber device (10) and with the other second end (30, 32, 34, 36) thereof extend in the second chamber device (12), wherein each of these connecting tubes (14, 16, 18, 20) comprises at least one channel (38, 40, 42, 44) having a linearly extending longitudinal axis (46, 48, 50, 52), the channel connecting a first opening (54, 56, 58, 60) of the respective connecting tube (14, 16, 18, 20) that is arranged in the region of the first end (22, 24, 26, 28) to a second opening (62, 64, 66, 68) of this respective connecting tube (14, 16, 18, 20) that is arranged in the region of the second end (30, 32, 34, 36), in particular by way of a fluid connection, wherein the two chamber devices (10, 12) are connected to each other via each channel (38, 40, 42, 44) of these connecting tubes (14, 16, 18, 20), in particular by way of a fluid connection, and wherein the respective longitudinal axes (46, 48, 50, 52) of the channels (38, 40, 42, 44) run substantially parallel to each other, wherein at least one of these connecting tubes (14, 16, 18, 20) comprises at least one first opening (54, 56, 58, 60), which is arranged spaced from at least one first opening (54, 56, 58, 60) of at least one other of these connecting tubes (14, 16, 18, 20) as seen looking in the direction of the longitudinal axis of the channels, several of these channels (38, 40, 42, 42) are arranged in series in a direction (92 or 94) that extends perpendicular to these longitudinal axes (46, 48, 50, 52) of the channels (38, 40, 42, 44), wherein in at least one such row respective consecutive channels (38, 40, 42, 44) are provided, which during operation of the heat exchanger experience flows in respective opposite flow directions, and wherein the number of changes of the flow direction (120, 122 or 126, 128) of the respective consecutive channels (38, 40, 42, 44) that are provided in this row during operation of the heat exchanger is greater than or equal to the number of chambers (130, 132, 134, 230, 232, 286, 402) that are provided in the first chamber device (10), and greater than or equal to the number of chambers (136, 138, 140, 210, 212, 288, 404) that are provided in the second chamber device (12), wherein the connecting tubes (14, 16) are arranged one tube next to another and in respective alternate contact with each other and two separate media m1 and m2 flow through them, and the connecting tubes are designed as flat tubes, which in the regions of the first ends thereof and of the second ends thereof have different lengths, **characterized in that** the first (10) and/or the second chamber device (12) are formed by several plates that are seated against each other, wherein a first of these plates is a connecting plate (350, 356) having openings (366, 368, 362, 364), which connect an inflow (110) and an outflow (112), a second of these plates (352, 358) is located adjacent to the first plate (350, 356) and has openings (378, 380, 382, 384), and a third of these plates (354, 360) has a frame-like design and comprises protrusions (368) and is located adjacent to the second plates, and the first ends of the connecting tubes extend through the plate (354) and the second ends (32) of the connecting tubes (16) extend through the plate (360), wherein the plates (352, 358) comprise webs between the through-openings (378, 380, 382, 388, 390, 392, 394), wherein the distance that is created between two neighboring through-openings by the webs essentially corresponds to the thickness of the flat tubes.

2. The heat exchanger according to claim 1, **characterized in that** the first chamber device (10) comprises a plurality of chambers (130, 132, 134, 230, 232, 286, 402) that are separated by at least one partition (142, 144, 234, 237, 284), respectively.

3. The heat exchanger according to claim 1 or 2, **characterized in that** at least one channel (38, 40, 42, 44) that is associated with a connecting tube (14, 16, 18, 20) is open toward the interior of a first chamber (130) of the first chamber device (10) via a first opening (54, 56, 58, 60) of this connecting tube (14, 16, 18, 20), and at least one channel (38, 40, 42, 44) that is associated with another connecting tube (14, 16, 18, 20) is open toward the interior of a second chamber (132) of the first chamber device (10) via a first opening (54, 56, 58, 60) of this other connecting tube (14, 16, 18, 20), wherein this first opening (54, 56, 58, 60) of this one connecting tube (14, 16, 18, 20) is arranged spaced from the first opening (54, 56, 58, 60) of this other connecting tube (14, 16, 18, 20) as seen looking in the longitudinal direction (46, 48, 50, 52) of the connecting tubes (14, 16, 18, 20).

4. The heat exchanger according to claim 3, **characterized in that** this first (130) and this second chamber (132) of the first chamber device (10) are arranged spaced and/or adjacent as seen looking in the longitudinal direction (46, 48, 50, 52) of the connecting tubes (14, 16, 18, 20).

5. A heat exchanger according to any one of claims 1 to 4, **characterized in that** the second chamber device (12) comprises a plurality of chambers (136, 138, 140, 210, 212, 288, 404) that are separated by at least one partition (146, 148, 148', 208), respectively.

6. A heat exchanger according to any one of the preceding claims, **characterized in that** at least one second opening (62, 64, 66, 68) of one of these connecting tubes (14, 16, 18, 20) is arranged spaced, as seen looking in the longitudinal direction (46, 48, 50, 52) of the connecting tubes (14, 16, 18, 20) or channels (38, 40, 42, 44), from at least one second opening (62, 64, 66, 68) of another of these connecting tubes (14, 16, 18, 20).

7. The heat exchanger according to claim 6, **characterized in that** at least one channel (38, 40, 42, 44) of one of the connecting tubes (14, 16, 18, 20) is open toward the interior of a first chamber of the second chamber device (12) via a second opening (62, 64, 66, 68) of this connecting tube, and at least one channel (38, 40, 42, 44) of another connecting tube (14, 16, 18, 20) is open toward the interior of a second chamber of the second chamber device (12) via a second opening (62, 64, 66, 68) of this other connecting tube, wherein this second opening (62, 64, 66, 68) of this one connecting tube (14, 16, 18, 20) is arranged spaced from the second opening (62, 64, 66, 68) of this other connecting tube (14, 16, 18, 20) as seen looking in the longitudinal direction (46, 48, 50, 52) of the connecting tubes (14, 16, 18, 20).

8. The heat exchanger according to claim 7, **characterized in that** this first and this second chamber of the second chamber device (12) are arranged spaced and/or adjacent as seen looking in the longitudinal direction (46, 48, 50, 52) of the channels (38, 40, 42, 44) or connecting tubes (14, 16, 18, 20).

9. A heat exchanger according to any one of the preceding claims, **characterized in that** a width direction (92) of the heat exchanger (1) exists perpendicular relative to the longitudinal axis (46, 48, 50, 52) of the connecting tubes (14, 16, 18, 20) or channels (38, 40, 42, 44), and a depth direction (94) of the heat exchanger (1) exists perpendicular relative to this width direction (92) and relative to this longitudinal axis (46, 48, 50, 52), wherein, as seen in the width direction (92) and in the depth direction (94), in each case at least two connecting tubes are provided, the first (54, 56, 58, 60) and/or second openings (62, 64, 66, 68) of which are arranged spaced from each other, as seen looking in the longitudinal direction (46, 48, 50,5 2) of the connecting tubes or channels (38, 40, 42, 44).

10. The heat exchanger according to claim 1, **characterized in that** at least one flat tube comprises exactly one channel (38, 40, 42, 44).

11. A heat exchanger according to any one of claims 1 and 10, **characterized in that** at least one flat tube comprises a plurality of channels (38, 40, 42, 44).

12. The heat exchanger according to claim 1, **characterized in that** the inner channels (38, 40, 42, 44) of the same flat tube are arranged in a row next to one another, wherein the longitudinal axes (46, 48, 50, 52) of these channels (38, 40, 42, 44) run parallel.

13. A heat exchanger according to any one of the preceding claims, **characterized in that** the first (54, 56, 58, 60) and the second openings (62, 64, 66, 68) of the connecting tubes (14, 16, 18, 20) are each arranged at the end face.

14. A heat exchanger according to any one of the preceding claims, **characterized in that** the heat exchanger is designed as an inner heat exchanger.

15. A heat exchanger according to any one of the preceding claims, **characterized in that** intermediate spaces (180, 182) are provided between adjacent connecting tubes having parallel longitudinal axes (46, 48, 50, 52) of their channels (38, 40, 42,44), a medium that is involved in the heat exchange flowing through these intermediate spaces during operation.

16. A heat exchanger according to any one of the preceding claims, **characterized in that** the heat exchanger (1) comprises at least one heat accumulator (322).

17. The heat exchanger according to claim 6, **characterized in that** the heat accumulator (322) comprises at least one of the connecting tubes and is filled with a medium, wherein it is provided in particular that this connecting tube of the heat exchanger (1) is a connecting tube, the first opening of which is arranged spaced from a first opening of another connecting tube, as seen looking in the longitudinal direction of the connecting tubes, and/or the second opening thereof is arranged spaced from a second opening of another connecting tube, as seen looking in the longitudinal direction of the connecting tubes.

## Revendications

1. Echangeur de chaleur pour des véhicules à moteur, lequel échangeur de chaleur présente un premier dispositif à chambres (10) et un deuxième dispositif à chambres (12) espacé par rapport à ce premier dispositif, ainsi que plusieurs tubes d'assemblage (14, 16, 18, 20) qui s'étendent, respectivement, dans le premier dispositif à chambres (10) par leur première extrémité (22, 24, 26, 28), et dans le deuxième dispositif à chambres (12) par leur deuxième autre extrémité (30, 32, 34, 36), où chacun de ces tubes d'assemblage (14, 16, 18, 20) présente au moins un conduit (38, 40, 42, 44) ayant un axe longitudinal (46, 48, 50, 52) s'étendant de façon rectiligne, conduit qui relie, en particulier fluidiquement, une première ouverture (54, 56, 58, 60) du tube d'assemblage respectif (14, 16, 18, 20), disposée dans la zone de la première extrémité (22, 24, 26, 28), à une deuxième ouverture (52, 64, 56, 68) de ce tube d'assemblage respectif (14, 16, 18, 20), disposée dans la zone de la deuxième extrémité (30, 32, 34, 36), où les deux dispositifs à chambres (10, 12) sont reliés l'un à l'autre, en particulier fluidiquement, par chaque conduit (38, 40, 42, 44) de ces tubes d'assemblage (14, 16, 18, 20), et où les axes longitudinaux (46, 48, 50, 52) des conduits (38, 40, 42, 44) s'étendent à chaque fois pratiquement de façon parallèle les uns aux autres, où au moins l'un de ces tubes d'assemblage (14, 16, 18, 20) présente au moins une première ouverture (54, 56, 58, 60) qui, vue suivant la direction de l'axe longitudinal des conduits, est espacée au moins par rapport à une première ouverture (54, 56, 58, 60) d'au moins un autre de ces tubes d'assemblage (14, 16, 18, 20), plusieurs de ces conduits (38, 40, 42, 44) étant disposés en rangée suivant une direction (92 ou 94) s'étendant perpendiculairement à ces axes longitudinaux (46, 48, 50, 52) des conduits (38, 40, 42, 44) où, dans au moins une telle rangée, il y a des conduits (38, 40, 42, 44) qui à chaque fois se suivent, conduits qui, au cours du fonctionnement de l'échangeur de chaleur, sont traversés dans des directions d'écoulement à chaque fois opposées, et où le nombre de changements de direction d'écoulement (120, 122 ou 126, 128) se produisant dans cette rangée au cours du fonctionnement de l'échangeur de chaleur et concernant les conduits (38, 40, 42, 44) qui à chaque fois se suivent est supérieur ou égal au nombre de chambres (130, 132, 134, 230, 232, 286, 402) qu'il y a dans le premier dispositif à chambres (10) et supérieur ou égal au nombre de chambres (136, 138, 140, 210, 212, 288, 404) qu'il y a dans le deuxième dispositif à chambres (12), où les tubes d'assemblage (14, 16) sont disposés tube contre tube et, à chaque fois, alternativement en contact les uns avec les autres, et sont traversés par deux milieux en circulation m1 et m2, séparés, et les tubes d'assemblage sont configurés comme des tubes plats qui présentent, dans la zone de leurs premières extrémités et de leurs deuxièmes extrémités, un niveau de longueur différent, **caractérisé en ce que** le premier (10) et/ou le deuxième dispositif à chambres (12) est formé par plusieurs plaques placées les unes contre les autres, où une première de ces plaques est une plaque d'assemblage (350, 356) comportant des ouvertures (366, 368, 362, 364) qui font communiquer une entrée (110) et une sortie (112), une deuxième de ces plaques (352, 358) est voisine de la première plaque (350, 356) et présente des ouvertures (378, 380, 382, 384), et une troisième de ces plaques (354, 360) est configurée comme un cadre et présente des parties saillantes (368) et est voisine des deuxièmes plaques, et **en ce que** les tubes d'assemblage s'étendent, au niveau de leurs premières extrémités, à travers la plaque (354), et les tubes d'assemblage (16) s'étendent, au niveau de leurs deuxièmes extrémités (32), à travers la plaque (360), où les plaques (352, 358) présentent des parties pleines entre les ouvertures de passage (378, 380, 382, 388, 390, 392, 394), où l'intervalle, qui est formé par les parties pleines entre deux ouvertures de passage voisines, correspond pratiquement à l'épaisseur des tubes plats.

2. Echangeur de chaleur selon la revendication 1, **caractérisé en ce que** le premier dispositif à chambres (10) présente plusieurs chambres (130, 132, 134, 230, 236, 286, 402) séparées respectivement par au moins une paroi intermédiaire (142, 144, 234, 237, 284).

3. Echangeur de chaleur selon la revendication 1 ou 2, **caractérisé en ce qu'**au moins un conduit (38, 40, 42, 44) associé à un tube d'assemblage (14, 16, 18, 20) est ouvert par une première ouverture (54, 56, 58, 60) de ce tube d'assemblage (14, 16, 18, 20), en donnant sur l'intérieur d'une première chambre (130) du premier dispositif à chambres (10), et au moins un conduit (38, 40, 42, 44) associé à un autre tube d'assemblage (14, 16, 18, 20) est ouvert par une première ouverture (54, 56, 58, 60) de cet autre tube d'assemblage (14, 16, 18, 20), en donnant sur l'intérieur d'une deuxième chambre (132) du premier dispositif à chambres (10), où cette première ouverture (54, 56, 58, 60) de l'un de ces tubes d'assemblage (14, 16, 18, 20), vue dans le sens de la longueur (46, 48, 50, 52) des tubes d'assemblage (14, 16, 18, 20), est espacée par rapport à la première ouverture (54, 56, 58, 60) d'un autre de ces tubes d'assemblage (14, 16, 18, 20).

4. Echangeur de chaleur selon la revendication 3, **caractérisé en ce que** cette première (130) et cette deuxième chambres (132) du premier dispositif à chambres (10), vues dans le sens de la longueur (46, 48, 50, 52) des tubes d'assemblage (14, 16, 18, 20), sont espacées et/ou voisines.

5. Echangeur de chaleur selon l'une quelconque des revendications 1 à 4, **caractérisé en ce que** le deuxième dispositif à chambres (12) présente plusieurs chambres (136, 138, 140, 210, 212, 288, 404) respectivement séparées par au moins une paroi intermédiaire (146, 148, 148', 208).

6. Echangeur de chaleur selon l'une quelconque des revendications précédentes, **caractérisé en ce qu'**au moins une deuxième ouverture (62, 64, 66, 68) de l'un de ces tubes d'assemblage (14, 16, 18, 20), vue dans le sens de la longueur (46, 48, 50, 52) des tubes d'assemblage (14, 16, 18, 20) ou des conduits (38, 40, 42, 44), est espacée par rapport au moins à une deuxième ouverture (62, 64, 66, 68) d'un autre de ces tubes d'assemblage (14, 16, 18, 20).

7. Echangeur de chaleur selon la revendication 6, **caractérisé en ce qu'**au moins un conduit (38, 40, 42, 44) de l'un des tubes d'assemblage (14, 16, 18, 20) est ouvert par une deuxième ouverture (62, 64, 66, 68) de ce tube d'assemblage, en donnant sur l'intérieur d'une première chambre du deuxième dispositif à chambres (12), et au moins un conduit (38, 40, 42, 44) d'un autre de ces tubes d'assemblage (14, 16, 18, 20) est ouvert par une deuxième ouverture (62, 64, 66, 68) de cet autre tube d'assemblage, en donnant sur l'intérieur d'une deuxième chambre du deuxième dispositif à chambres (12), où cette deuxième ouverture (62, 64, 66, 68) de l'un de ces tubes d'assemblage (14, 16, 18, 20), vue dans le sens de la longueur (46, 48, 50, 52) des tubes d'assemblage (14, 16, 18, 20), est espacée par rapport à la deuxième ouverture (62, 64, 66, 68) de cet autre tube d'assemblage (14, 16, 18, 20).

8. Echangeur de chaleur selon la revendication 7, **caractérisé en ce que** cette première et cette deuxième chambres du deuxième dispositif à chambres (12), vues dans le sens de la longueur (46, 48, 50, 52) des conduits (38, 40, 42, 44) ou des tubes d'assemblage (14, 16, 18, 20), sont espacées et/ou voisines.

9. Echangeur de chaleur selon l'une quelconque des revendications précédentes, **caractérisé en ce qu'**une direction de largeur (92) de l'échangeur de chaleur (1) est présente perpendiculairement à l'axe longitudinal (46, 48, 50, 52) des tubes d'assemblage (14, 16, 18, 20) ou des conduits (38, 40, 42, 44), et une direction de profondeur (94) de l'échangeur de chaleur (1) est présente perpendiculairement à cette direction de largeur (92) ainsi qu'à cet axe longitudinal (46, 48, 50, 52), où il y a, vus dans la direction de largeur (92) et dans la direction de profondeur (94), respectivement au moins deux tubes d'assemblage dont les premières (54, 56, 58, 60) et/ou deuxièmes ouvertures (62, 64, 66, 68), vues dans le sens de la longueur (46, 48, 50, 52) des tubes d'assemblage ou des conduits (38, 40, 42, 44), sont espacées les unes des autres.

10. Echangeur de chaleur selon la revendication 1, **caractérisé en ce qu'**au moins un tube plat présente précisément un conduit (38, 40, 42, 44).

11. Echangeur de chaleur selon l'une des revendications 1 et 10, **caractérisé en ce qu'**au moins un tube plat présente plusieurs conduits (38, 40, 42, 44).

12. Echangeur de chaleur selon la revendication 11, **caractérisé en ce que** les conduits intérieurs (38, 40, 42, 44) de ce même tube plat sont disposés les uns à côté des autres en formant une rangée, où les axes longitudinaux (46, 48, 50, 52) de ces conduits (38, 40, 42, 44) s'étendent de façon parallèle.

13. Echangeur de chaleur selon l'une quelconque des revendications précédentes, **caractérisé en ce que** les premières (54, 56, 58, 60) ainsi que les deuxièmes ouvertures (62, 64, 66, 68) des tubes d'assemblage (14, 16, 18, 20) sont disposées à chaque fois de façon frontale.

14. Echangeur de chaleur selon l'une quelconque des revendications précédentes, **caractérisé en ce que** l'échangeur de chaleur est conçu comme un échangeur de chaleur intérieur.

15. Echangeur de chaleur selon l'une quelconque des revendications précédentes, **caractérisé en ce qu'**il y a des espaces intermédiaires (180, 182) entre des tubes d'assemblage voisins dont les axes longitudinaux (46, 48, 50, 52) de leurs conduits (38, 40, 42, 44) sont disposés parallèlement, espaces intermédiaires à travers lesquels s'écoule, au cours du fonctionnement, un milieu en circulation participant à l'échange de chaleur.

16. Echangeur de chaleur selon l'une quelconque des revendications précédentes, **caractérisé en ce que** l'échangeur de chaleur (1) présente au moins un accumulateur de chaleur (322).

17. Echangeur de chaleur selon la revendication 6, **caractérisé en ce que** l'accumulateur de chaleur (322) présente au moins l'un des tubes d'assemblage et est rempli d'un milieu en circulation, où il est prévu, en particulier, que ce tube d'assemblage de l'échangeur de chaleur (1) soit un tube d'assemblage dont la première ouverture, vue dans le sens de la longueur des tubes d'assemblage, est espacée par rapport à une première ouverture d'un autre tube d'assemblage et/ou dont la deuxième ouverture, vue dans le sens de la longueur du tube d'assemblage, est espacée par rapport à une deuxième ouverture d'un autre tube d'assemblage.
